# EUROPÄISCHE PATENTSCHRIFT

(11) **EP 2 051 916 B1**
(45) Veröffentlichungstag und Bekanntmachung des Hinweises auf die Patenterteilung: **21.12.2011**
(21) Anmeldenummer: 07784601.2
(22) Anmeldetag: 01.08.2007
(51) Int. Cl.: B65G 35/06, B65G 47/53, B65G 47/64, B23Q 7/14

(54) **ÜBERGABEVORRICHTUNG, TRANSPORTANLAGE UND VERFAHREN ZUM HANDHABEN VON TEILETRÄGERN**
TRANSFER APPARATUS, TRANSPORT SYSTEM AND METHOD FOR HANDLING PARTS CARRIERS
DISPOSITIF DE TRANSFERT, EQUIPEMENT DE TRANSPORT ET PROCEDE DE MANUTENTION DES PORTE-PIECES

(30) Priorität: 14.08.2006 AT 13592006
(43) Veröffentlichungstag der Anmeldung: 29.04.2009
(73) Patentinhaber: STIWA Holding GmbH, 4800 Attnang-Puchheim (AT)
(72) Erfinder: MERSNIK, Christian, 4800 Attnang-Puchheim (AT)
(74) Vertreter: Burger, Hannes
(86) Internationale Anmeldenummer: PCT/AT2007/000372
(87) Internationale Veröffentlichungsnummer: WO 2008/019410

(56) Entgegenhaltungen:
- EP-A- 0 109 459
- US-A1- 2002 162 727

## Beschreibung

Die Erfindung bezieht sich auf eine Drehscheibe mit einem Übertragungsmittel zur Führung und Antriebsübertragung auf einen zwischen einem ersten Förderabschnitt und zweiten Förderabschnitt entlang von Führungsbahnen verfahrbaren Teileträger, wobei das Übertragungsmittel um eine senkrecht auf eine Transportebene ausgerichtete Drehachse schwenkbar ist.

Weiters bezieht sich die Erfindung auf eine Übergabevorrichtung mit einer Vorschubvorrichtung umfassend zumindest eine Drehscheibe zur Führung und Antriebsübertragung auf einen zwischen einem ersten Förderabschnitt und zweiten Förderabschnitt entlang von Führungsbahnen verfahrbaren Teileträger, wobei die Drehscheibe um eine senkrecht auf eine Transportebene ausgerichtete Drehachse schwenkbar ist.

Weiters bezieht sich die Erfindung auch auf eine Transportanlage mit einem ersten Förderabschnitt und zweiten Förderabschnitt und einer zwischen diesen angeordneten Übergabevorrichtung.

Weiters bezieht sich die Erfindung auf ein Verfahren zum Handhaben von Teileträgern mit einer Übergabevorrichtung mit einer Vorschubvorrichtung umfassend zumindest eine Drehscheibe zur Führung und Antriebsübertragung auf einen zwischen einem ersten Förderabschnitt und zweiten Förderabschnitt entlang von Führungsbahnen verfahrbaren Teileträger, wobei die Drehscheibe um eine senkrecht auf eine Transportebene ausgerichtete Drehachse schwenkbar ist, auf ein Verfahren zum Steuern einer Übergabevorrichtung, insbesondere einer Übergabevorrichtung nach einem der Ansprüche 11 bis 36, für einen Teileträger sowie auf einen Datenträger.

Bei automatischen Transport- oder Förderanlagen für Herstellungs-, Bearbeitungs- oder Messprozesse werden mit Werkstücken beladene Teileträger entlang von Förderbahnen geleitet. Um die Teileträger mit den Werkstücken Bearbeitungsmaschinen, Handarbeitsplätzen oder Messstationen zuführen zu können oder um die Förderbahn den örtlichen Gegebenheiten anzupassen bzw. auch um einen geschlossenen Kreislauf der Fördereinrichtung zu bilden, werden Übergabevorrichtungen verwendet, welche den Teileträger umlenken und/oder abzweigen können.

Aus der WO 92/04259 ist eine Vorrichtung zum Umlenken eines Werkstückträgers von einer Förderbahn auf eine in der gleichen Ebene dazu winkelig angeordneten weiteren Förderbahn bekannt. Zwischen den beiden Förderbahnen ist eine sich in Förderrichtung drehende Drehscheibe vorgesehen, wobei der Transport des Werkstückträgers durch die Drehscheibe mittels der zwischen beiden wirkenden Reibungskraft erfolgt. Die Drehscheibe ist im inneren Bahnbereich der beiden Förderbahnen vorgesehen. Im Bereich der äußeren Kurvenbahn ist für den Werkstückträger eine seitliche Führung vorgesehen.

Eine weitere Umlenkstation ist aus der DE 26 44 137 bekannt, welche aus einer rotierenden Kreisscheibe mit Ausnehmungen besteht. Die Ausnehmungen gelangen mit Mitnehmerstiften von Werkstückträgern in Eingriff und bringen diese unter teilweiser Führung durch die Förderbahnseitenwände in eine neue Position.

Eine weitere Umlenkstation ist aus der EP 0 109 459 A1 bekannt.

Der vorliegenden Erfindung liegt die Aufgabe zugrunde, entlang von Förderabschnitten transportierte Objekte schnell, präzise und kostengünstig zu transportieren bzw. umzulenken.

Diese Aufgabe der Erfindung wird dadurch gelöst, dass der Teileträger mit Führungsorganen, durch die der Teileträger entlang der Führungsbahnen geführt ist, versehen ist und das Übertragungsmittel mindestens eine Führungsbahn aufweist, entlang welcher der Teileträger durch zumindest eines der Führungsorgane formschlüssig geführt ist, dadurch, dass die Drehscheibe nach einem der Ansprüche 1 bis 10 ausgebildet ist, dadurch, dass die Übergabevorrichtung nach einem der Ansprüche 11 bis 36 gebildet ist, sowie durch ein Verfahren, bei dem ein Bewegen einer ersten Führungsbahn in eine Aufnahmestellung, ein Aufnehmen eines ersten Führungsorganes des Teileträgers, ein Weiterbefördern des Teileträgers mittels einer Vorschubvorrichtung, insbesondere mittels eines Zugmitteltriebes, ein Drehen der ersten Führungsbahn und/oder einer weiteren Führungsbahn in eine Aufnahmestellung zum Aufnehmen eines zweiten Führungsorganes des Teileträgers, ein Drehen der ersten Führungsbahn oder der zweiten Führungsbahn bis zu einer Übergabestellung, ein Weiterbefördern des Teileträgers mittels der Vorschubvorrichtung bis die Übergabevorrichtung, insbesondere die Übergabevorrichtung nach einem der Ansprüche 11 bis 36, verlassen wird, erfolgt, ein Verfahren, bei dem ein Senden einer Steuerinformation zum Drehen einer Drehscheibe in eine Aufnahmestellung, in der ein Führungsorgan von einer feststehenden Führungsbahn auf zumindest eine Führungsbahn der Drehscheibe übergeführt wird, erfolgt und dadurch, dass auf dem Datenträger ein Programm zur Ausführung eines Verfahrens nach einem der Ansprüche 40 bis 48 und/oder eines Verfahrens nach einem der Ansprüche 49 bis 53 gespeichert ist.

Dadurch, dass der Teileträger mit Führungsorganen, durch die der Teileträger entlang der Führungsbahnen geführt ist, versehen ist und das Übertragungsmittel mindestens eine Führungsbahn aufweist, entlang welcher der Teileträger durch zumindest eines der Führungsorgane formschlüssig geführt ist, kann der Effekt erreicht werden, dass der Teileträger präzise und vorhersehbar geführt wird. Weiters können dadurch Kosten eingespart werden, da der Teileträger keine zusätzlichen Bauteile benötigt, um eine formschlüssige Führung und Antriebsübertragung auf den Teileträger zu ermöglichen.

Eine Weiterbildung der Drehscheibe sieht vor, dass die Führungsbahn des Übertragungsmittels geradlinig verläuft. Dadurch können standardisierte Führungsbahnelemente herangezogen werden, sowie Kosten bei der Herstellung eingespart werden.

Vorteilhaft bei einer weiteren Ausbildung, bei der das Übertragungsmittel eine zur ersten in einem Winkel angeordnete zweite Führungsbahn aufweist, ist, dass verschiedene Führungsorgane eines Teileträgers jeweils spezifisch geführt werden können und eine bessere Anpassung der Drehscheibe an den Bewegungsablauf des Teileträgers erfolgen kann.

Vorteilhaft ist auch eine Weiterbildung, bei der das Übertragungsmittel eine dritte Führungsbahn aufweist, die mit einem Abstand von mindestens einem Durchmesser eines der Führungsorgane parallel zur ersten Führungsbahn oder zweiten Führungsbahn angeordnet ist. Dadurch kann ein Führungsorgan an zwei gegenüberliegenden Seiten vom Übertragungsmittel annähernd spielfrei geführt werden. Weiters kann eine präzisiere Führung erreicht werden und ein Verkanten des Teileträgers verhindert werden.

Bei einer Ausgestaltung, bei der ein Abstand von einem Ende der ersten Führungsbahn des Übertragungsmittels zu einem Ende der zweiten und/oder dritten Führungsbahn oder zu einem zweiten Ende der ersten Führungsbahn, insbesondere um mindestens den Durchmesser eines der Führungsorgane, kleiner als ein Abstand von zwei Führungsorganen des Teileträgers ist, kann erreicht werden, dass die Drehscheibe geschwenkt werden kann, wenn sich der Teileträger in einer Position befindet, bei der sich die Drehscheibe zwischen zwei Führungsorganen des Teileträgers befindet. Beispielsweise kann bei einem Führungsvorgang ein erstes Führungsorgan durch eine erste Führungsbahn der Drehscheibe geführt werden, nachdem das erste Führungsbahn die Drehscheibe wieder verlassen hat, kann die Drehscheibe geschwenkt werden, sodass eine weitere Führungsbahn der Drehscheibe ein weiteres Führungsorgan des Teileträgers führen oder zur Antriebsübertragung nutzen kann. Somit kann für jedes Führungsorgan eine spezifisch angepasste, optionale Führungsbahn verwendet werden.

Nach einer anderen Ausführungsvariante, bei der die Führungsbahn gekrümmt verläuft bzw. bei der ein Verlauf der Führungsbahn eine Krümmung aufweist, welche mit zunehmendem Abstand der Führungsbahn von der Drehachse monoton steigend oder monoton fallend ist, kann vorteilhaft sein, dass bei konstanter Schwenkbewegung der Drehscheibe ein gleichmäßiger, insbesondere konstanter, Geschwindigkeitsverlauf des Teileträgers möglich ist.

Eine weitere Ausbildungsvariante sieht vor, dass eine der Führungsbahnen des Übertragungsmittels relativ zu einer weiteren Führungsbahn des Übertragungsmittels verstellbar gelagert ist. Dadurch kann eine bessere Anpassung in einem Übergangsbereich, in dem ein Führungsorgan von der verstellbar gelagerten Führungsbahn aufgenommen oder abgegeben wird, sowie eine verbesserte Führung und Manipulationsmöglichkeit erzielt werden.

Nach anderen Ausführungsvarianten, bei der an der Drehscheibe zumindest eine in etwa V-oder U-förmige Führungsbahnanordnung, insbesondere in etwa V- oder U-förmig angeordnete Führungsbahnen, beweglich angeordnet ist bzw. bei der die in etwa V- oder U-förmige Führungsbahnanordnung, insbesondere die in etwa V- oder U-förmig angeordneten Führungsbahnen, zumindest in einer Richtung federelastisch und/oder dämpfend gelagert ist, ist vorteilhaft, dass ein Führungsorgan des Teileträgers und somit der Teileträger selbst präziser geführt werden kann und gegebenenfalls ein Führungsspiel zwischen Führungsbahn und Führungsorgan minimiert werden kann.

Vorteilhaft bei einer Übergabevorrichtung, bei der die Drehscheibe nach einem der Ansprüche 1 bis 10 ausgebildet ist, kann sein, dass dadurch die Kosten einer Übergabevorrichtung bzw. der für eine derartige Übergabevorrichtung ausgebildete Teileträger wesentlich reduziert werden können, indem die für die Führung vorkommenden Führungsorgane zum Umlenken des Teileträgers verwendet wird.

Eine mögliche Ausbildung einer Übergabevorrichtung ist dadurch gegeben, dass die Führungsbahnen zum Führen der Führungsorgane des Teileträgers entlang von Führungslinien und/oder zum Führen eines zentralen Punktes des Teileträgers entlang einer Bewegungsbahn angeordnet sind bzw. dass parallel zur Transportebene relativ zur Drehscheibe feststehende Führungsbahnen zum Führen des Teileträgers angeordnet sind. Dadurch wird eine vordefinierte und gleichmäßige Bewegung des Teileträgers ermöglicht.

Gemäß einer weiteren Ausbildung, bei der auf der Drehscheibe zumindest eine Führungsbahn angeordnet ist, welche zum Führen eines Führungsorganes des Teileträgers entlang einer gedachten Führungslinie während einem Stillstand der Drehscheibe ausgebildet ist, kann ein Überführen des Führungsorganes ermöglicht werden, ohne die Drehscheibe drehen zu müssen. Dadurch kann eine schnellere und komplikationsfreiere Führung bzw. Antriebsübertragung auf den Teileträger erfolgen. Weiters kann dadurch ein Ausweichen des Teileträgers verhindert werden und der Teileträger entlang einer definierten Bewegungsbahn geführt werden.

Bei einer Ausgestaltung, bei der auf der Drehscheibe zumindest eine Führungsbahn angeordnet ist, welche während eines Zusammenwirkens mit einem Führungsorgan des Teileträgers mit einer momentanen Bewegungsrichtung des Führungsorgans einen Winkel bildet bzw. bei der mit der Drehscheibe eine Antriebsvorrichtung verbunden ist, kann eine Antriebsübertragung von der Drehscheibe auf ein Führungsorgan des Teileträgers und somit auf den Teileträger ermöglicht werden.

Eine vorteilhafte Weiterbildung sieht vor, dass die Antriebsvorrichtung durch einen elektrisch betriebenen Motor, insbesondere einen Servomotor, gebildet ist. Dadurch kann eine einfache Steuerung der Drehscheibe ermöglicht werden sowie eine standardmäßige Antriebsvorrichtung bereitgestellt werden.

Gemäß einer weiteren Ausbildung, bei der die Antriebsvorrichtung zum Winkelpositionieren der Drehscheibe ausgebildet ist, kann erreicht werden, dass der Teileträger in eine genaue, vordefinierte Position geführt werden kann bzw. in einer vordefinierten Position positioniert bzw. fixiert werden kann.

Durch eine weitere Ausgestaltung, bei der die Vorschubvorrichtung einen Zugmitteltrieb, insbesondere einen Zahnriementrieb, umfasst, kann eine Beförderung des Teileträgers zur Drehscheibe ermöglicht werden.

Eine Ausgestaltung, bei der die Drehscheibe mechanisch mit dem Zugmitteltrieb verbunden ist, kann zu einer Einsparung einer Antriebsvorrichtung führen und es können dadurch Kosten gesenkt werden.

Durch eine Weiterbildung, bei der mit dem Zugmitteltrieb eine von der Antriebsvorrichtung der Drehscheibe getrennt angeordnete Antriebsvorrichtung für den Zugmitteltrieb verbunden ist, werden multifunktionelle und individuellere Steuerungsmöglichkeiten ermöglicht.

Möglich ist auch eine Ausbildung, bei der der Teileträger mittels der Drehscheibe von einer Aufnahmestellung in eine Übergabestellung bewegbar ist bzw. ein Verfahrensschritt, bei welchem der Teileträger in der Aufnahmestellung bzw. in der Übergabestellung zwischen den zur Übergabevorrichtung bewegungsfest angeordneten Führungsbahnen und den der Drehscheibe zugeordneten, beweglich angeordneten Führungsbahnen verfährt bzw. ein weiterer möglicher Verfahrensschritt, bei welchem während der Bewegung des Teileträgers zwischen der Aufnahmestellung und der Übergabestellung der Teileträger durch zumindest eine der der Drehscheibe zugeordneten Führungsbahnen bewegt wird. Dadurch kann eine Positionierung bzw. Überführung des Teileträgers zwischen einer Aufnahmestellung, bei der ein Führungsorgan des Teileträgers von einer feststehenden Führungsbahn auf die Führungsbahnen der Drehscheibe übergeführt wird, in eine Übergabestellung, von der ein Führungsorgan des Teileträgers von den Führungsbahnen der Drehscheibe auf eine feststehende Führungsbahn der Übergabevorrichtung übergeführt wird, ermöglicht werden.

Eine weitere Ausbildung sieht vor, dass durch die Anordnung der Drehscheibe und/oder der Führungsbahnen die Position des Teileträgers in der Transportebene zwischen der Aufnahmestellung und der Übergabestellung durch die Stellung der Drehscheibe positioniert verstellbar ist. Dadurch kann der Teileträger auf eine gewünschte Position gebracht werden und in dieser Position gehalten werden. Dies ermöglicht beispielsweise eine Bearbeitung von Werkstücken, welche sich auf dem Teileträger befinden, durch Bearbeitungsmaschinen.

Vorteilhaft ist auch eine Weiterbildung, bei der die Drehachse der Drehscheibe auf einer Winkelsymmetrale von zwei geraden Abschnitten von Führungslinien bzw. der Bewegungsbahn liegt und in etwa normal auf diese steht. Dadurch ist eine einfache Anordnung der Drehscheibe auf der Übergabevorrichtung gegeben und es kann dadurch ein einfacherer Ablauf der Übergabe des Teileträgers ermöglicht werden.

Eine weitere Ausbildung sieht vor, dass die Drehachse der Drehscheibe, insbesondere einer Drehscheibe mit einer gekrümmt verlaufenden Führungsbahn, zwischen zwei parallel liegenden, feststehenden Führungsbahnen angeordnet ist. Durch die Anordnung der Drehscheibe innerhalb der Führungsbahnen kann eine kompaktere Bauweise erzielt werden.

Eine weitere Möglichkeit sieht vor, dass die Drehachse der Drehscheibe, insbesondere einer Drehscheibe mit einer geradlinig verlaufenden Führungsbahn, außerhalb zwei parallel liegender Führungsbahnen angeordnet ist. Dadurch kann der Bereich zwischen den Führungsbahnen für weitere Vorschubvorrichtungen bzw. Bearbeitungseinrichtungen oder Sensoreinrichtungen freigehalten werden.

Durch weitere mögliche Ausbildungen, bei welchen zwischen den parallel liegenden Führungsbahnen eine zumindest annähernd ebene Oberfläche ausgebildet ist bzw. bei welcher die Führungsbahnen oberhalb der Oberfläche eine Höhe von maximal 5 mm aufweisen, kann eine Verletzungsgefahr für einen Benutzer, insbesondere eine Verletzungsgefahr mit Quetschungen an den Händen eines Benutzers, gering gehalten werden.

Weitere Ausführungsvarianten sehen vor, dass in einem Bereich, in dem eines der Führungsorgane von einer feststehenden Führungsbahn an eine Führungsbahn der Drehscheibe übergeführt wird oder in dem eines der Führungsorgane von einer Führungsbahn der Drehscheibe auf die feststehende Führungsbahn übergeführt wird, zwei parallele Führungsbahnen, insbesondere für eines der Führungsorgane angeordnet sind bzw. dass in einem Bereich eines Führungslinienbogens zwei parallele Führungsbahnen, insbesondere ein innerer Führungsbahnbogen und/oder ein äußerer Führungsbahnbogen, für eines der Führungsorgane angeordnet sind bzw. eine Variante eines Verfahrens sieht vor, dass zumindest eines der Führungsorgane des Teileträgers zumindest in einem Bereich, in dem eines der Führungsorgane von einer feststehenden Führungsbahn an eine Führungsbahn der Drehscheibe übergeführt wird oder in dem eines der Führungsorgane von einer Führungsbahn der Drehscheibe auf die feststehende Führungsbahn übergeführt wird, nach zwei Seiten in einer Richtungen normal auf die Führungsbahn und parallel zur Transportebene geführt wird. Dadurch kann eine präzisere Führung der Führungsorgane des Teileträgers ermöglicht werden und es kann eine Fehlleitung des Teileträgers bzw. eine Verkantung des Teileträgers verhindert werden.

Nach einer weiteren Ausbildung, bei der eine Führungsbahn eines Führungsbahnbogen durch einen Bogen gebildet ist, dessen Radius am Bogenbeginn und/oder Bogenende größer ist als in einem zwischen Bogenbeginn und Bogenende liegenden Abschnitt, kann ermöglicht werden, dass die durch die Umlenkung auf den Teileträger wirkenden Beschleunigungskräfte kontinuierlich ansteigen bzw. abfallen. Dieser Effekt ist besonders dann von Vorteil, wenn der Teileträger Behältnisse mit Flüssigkeiten transportiert, welche durch einen plötzlichen Anstieg der Fliehkräfte infolge eines Wellenstoßes ausgeschüttet werden könnten.

Eine weitere Ausbildungsform sieht vor, dass ein Radius der Führungslinie größer ist als der halbe Durchmesser des Führungsorganes. Dadurch wird eine kontinuierliche Führung des Teileträges ermöglicht und ein plötzlicher Wechsel der Bewegungsrichtung verhindert.

Weitere Möglichkeiten von Ausbildungsformen sehen vor, dass die Vorschubvorrichtung eine weitere Drehscheibe nach einem der Ansprüche 1 bis 10 umfasst bzw. dass die Vorschubvorrichtung mindestens zwei weitere Drehscheiben nach einem der Ansprüche 1 bis 10 umfasst. Dadurch werden weitere Manipulationsmöglichkeiten des Teileträgers ermöglicht. Beispielsweise kann dadurch ein Teileträger auf einen weiteren Förderabschnitt abgezweigt werden und/oder die Orientierung eines Teileträgers geändert werden.

Nach einer anderen Ausführungsvariante, bei der ein von zumindest einer der Führungsbahnen der Drehscheibe überstreichbarer Bereich einen Bewegungsbereich bildet und zumindest eine Verzweigung der Führungslinie zum Orientierungswechseln und/oder zum Bewegungsrichtungsänderung innerhalb des Bewegungsbereiches der Führungsbahnen der Drehscheibe liegen, kann eine exakte und eindeutige Führung des Teileträgers durch die Drehscheibe bzw. den darauf liegenden Führungsbahnen ermöglicht werden.

Bei einer Ausgestaltung, bei der durch eine Anordnung der Drehscheibe und/oder der Führungsbahnen eine Verzweigung der Bewegungsbahn zum Orientierungswechseln in Bewegungsrichtung des Teileträgers gesehen vor einer Verzweigung zum Bewegungsrichtungsändem liegt, kann eine einfache Anordnung der Vorschubvorrichtung erzielt werden.

Durch Ausbildungen, bei welchen die Übergabevorrichtung nach einem der Ansprüche 11 bis 36 gebildet ist bzw. bei der an der Übergabevorrichtung ein weiterer Förderabschnitt angeordnet ist bzw. bei der an der Übergabevorrichtung eine weitere Übergabevorrichtung angeordnet ist, ist vorteilhaft, dass dadurch eine kostengünstige und einfach zu adaptierende Transportanlage bereitgestellt werden kann.

Weiters ist ein Verfahren vorteilhaft, bei welchem die Arbeitsschritte durch ein Bewegen einer ersten Führungsbahn in eine Aufnahmestellung, ein Aufnehmen eines ersten Führungsorganes des Teileträgers, ein Weiterbefördern des Teileträgers mittels einer Vorschubvorrichtung, insbesondere mittels eines Zugmitteltriebes, ein Drehen der ersten Führungsbahn und/ oder einer weiteren Führungsbahn in eine Aufnahmestellung zum Aufnehmen eines zweiten Führungsorganes des Teileträgers, Drehen der ersten Führungsbahn oder der zweiten Führungsbahn bis zu einer Übergabestellung, ein Weiterbefördern des Teileträgers mittels der Vorschubvorrichtung bis die Übergabevorrichung, insbesondere die Übergabevorrichtung nach einem der Ansprüche 11 bis 36, verlassen wird, gegeben sind. Dadurch kann ein effizientes Übergeben eines Teileträgers eines ersten Förderabschnitts an einen weiteren Förderabschnitt ermöglicht werden.

Weiters ist ein Vorgehen vorteilhaft, bei welchem die Drehscheibe mit einer konstanten Schwenkgeschwindigkeit um die Drehachse der Drehscheibe geschwenkt wird. Dadurch kann eine einfache Steuerung der Antriebsvorrichtung der Drehscheibe erfolgen und kostengünstigere Antriebsvorrichtungen verwendet werden.

Eine weitere Möglichkeit eines Verfahrens sieht vor, dass die Drehscheibe mit einem Geschwindigkeitsverlauf, bei welchem der Teileträger mit einer gleichmäßigen, insbesondere konstanten, Geschwindigkeit bewegt wird. Durch eine derartige Anpassung der Geschwindigkeit der Drehscheibe kann erreicht werden, dass der Teileträger gleichmäßig verfährt und Beschleunigungen auf den Teileträger möglichst gering gehalten werden können.

Vorteilhaft ist auch eine Verfahrensvariante, bei der die Bewegungsrichtung des Teileträgers durch die Übergabevorrichtung, insbesondere um 90°, geändert wird. Dadurch kann der Teileträger von einem geraden Führungsabschnitt umgelenkt bzw. abgezweigt werden. Eine weitere Verfahrensvariante sieht vor, dass die Orientierung bzw. Lage des Teileträgers durch die Übergabevorrichtung, insbesondere um 90° oder 180°, geändert wird bzw. dass vor und/oder nach einem Ändern der Bewegungsrichtung die Orientierung bzw. Lage des Teileträgers durch die Übergabevorrichtung, insbesondere um 90° oder 180°, geändert wird. Dadurch kann die Orientierung bzw. Lage angepasst werden, um die Lage der sich auf den Teileträger befindlichen Werkstücke weiteren Bearbeitungsschritten anzupassen.

Bei einem Verfahren zum Steuern einer Übergabevorrichtung, bei dem ein Senden einer Steuerinformation zum Drehen einer Drehscheibe in eine Aufnahmestellung, in der ein Führungsorgan von einer feststehenden Führungsbahn auf zumindest eine Führungsbahn der Drehscheibe übergeführt wird, erfolgt, kann eine gesteuerte Aufnahme eines Führungsorganes durch die Führungsbahnen der Drehscheibe ermöglicht werden.

Vorteilhaft ist auch ein möglicher weiterer Verfahrensschritt, bei dem eine Steuerinformation zum Drehen der Drehscheibe in eine Übergabestellung gesendet wird. Dadurch kann ein gesteuertes und gezieltes Bewegen des Teileträgers erfolgen.

Eine weitere Vorgehensweise sieht vor, dass bei der Steuerinformationen zum Steuern von mehreren auf einer Übergabevorrichtung angeordneten Drehscheiben mittels einer Synchronisierungstabelle synchronisiert werden. Dadurch können aufwendige Berechnungen eingespart werden und eine kostengünstigere Recheneinheit verwendet werden.

Eine weitere mögliche Vorgehensweise sieht vor, dass vor und/oder während und/oder nach dem Befördern des Teileträgers mittels der Drehscheibe ein Signal eines Sensors eingelesen wird bzw. dass die Steuerinformation in Abhängigkeit einer gemessenen Stellung zumindest einer Drehscheibe und/oder einer Stellung und/oder Position des Teileträgers gebildet wird. Dadurch kann die Position des Teileträgers genau geregelt werden und im Falle einer Störung eine entsprechende Alarmierung oder Störungsbehebung erfolgen.

Vorteilhaft ist bei einem Datenträger, auf welchem ein Programm zur Ausführung eines Verfahrens nach einem der Ansprüche 40 bis 48 und/oder eines Verfahrens nach einem der Ansprüche 49 bis 53 gespeichert ist, dass dadurch das Verfahren durch eine Steuervorrichtung auf einfache Art und Weise realisiert werden kann und gegebenenfalls auf weitere Transportanlagen übertragen werden kann.

Die Erfindung wird im nachfolgenden anhand der in den Zeichnungen dargestellten Ausführungsbeispiele näher erläutert.

Es zeigen:
- Fig. 1a: Eine perspektivische Ansicht eines Teilabschnittes einer Transportanlage;
- Fig. 1b: Eine Transportanlage mit entlang der Transportanlage angeordnete Arbeitsstationen;
- Fig. 2a: Eine schematische Darstellung einer Übergabevorrichtung mit einer Drehscheibe und Führungsorganen eines Teileträgers in einer Überführstellung;
- Fig. 2b: Eine schematische Darstellung einer Übergabevorrichtung mit einer Drehscheibe und Führungsorganen eines Teileträgers in einer Aufnahmestellung;
- Fig. 2c: Eine schematische Darstellung einer Übergabevorrichtung mit einer Drehscheibe und Führungsorganen eines Teileträgers;
- Fig. 2d: Eine schematische Darstellung einer Übergabevorrichtung mit einer Drehscheibe und Führungsorganen eines Teileträgers in einer Übergabestellung;
- Fig. 2e: Eine schematische Darstellung einer Übergabevorrichtung mit einer Drehscheibe und Führungsorganen eines Teileträgers in einer Überführstellung;
- Fig. 3: Eine Draufsicht auf eine Übergabevorrichtung;
- Fig. 4: Eine Seitenansicht einer Übergabevorrichtung;
- Fig. 5a: Eine schematische Darstellung einer Übergabevorrichtung mit zwei Drehscheiben zum Abzweigen eines Teileträgers;
- Fig. 5b: Eine schematische Darstellung einer Übergabevorrichtung mit zwei Drehscheiben zum Abzweigen eines Teileträgers;
- Fig. 5c: Eine schematische Darstellung einer Übergabevorrichtung mit zwei Drehscheiben zum Abzweigen eines Teileträgers;
- Fig. 5d: Eine schematische Darstellung einer Übergabevorrichtung mit zwei Drehscheiben zum Abzweigen eines Teileträgers;
- Fig. 6a: Eine schematische Darstellung einer Übergabevorrichtung mit zwei Drehscheiben zum Weiterleiten eines Teileträgers;
- Fig. 6b: Eine schematische Darstellung einer Übergabevorrichtung mit zwei Drehscheiben zum Weiterleiten eines Teileträgers;
- Fig. 7: Eine Draufsicht auf eine Übergabevorrichtung zum Abzweigen oder Weiterleiten eines Teileträgers;
- Fig. 8: Eine perspektivische Ansicht einer Übergabevorrichtung zum Abzweigen oder Weiterleiten eines Teileträgers;
- Fig. 9a: Eine Unteransicht eines Teileträgers;
- Fig. 9b: eine Seitenansicht eines Teileträgers;
- Fig. 10: eine Detailansicht einer Drehscheibe auf einer Übergabevorrichtung;
- Fig. 11: eine Drehscheibe mit gekrümmt verlaufender Führungsbahn;
- Fig. 12: eine Übergabevorrichtung mit einer Drehscheibe mit einer gegenüber der Drehscheibe beweglichen Führungsbahn;
- Fig. 13: eine weitere Ausführungsform einer Drehscheibe in Draufsicht und schematischer Darstellung;
- Fig. 14: eine Drehscheibe in einer anderen Ausführung.

Einführen sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Hinsichtlich der Festlegung der Transportanlage wird die diesbezügliche, detaillierte Offenbarung aus der AT 1025/2006 zum Gegenstand dieser Offenbarung gemacht.

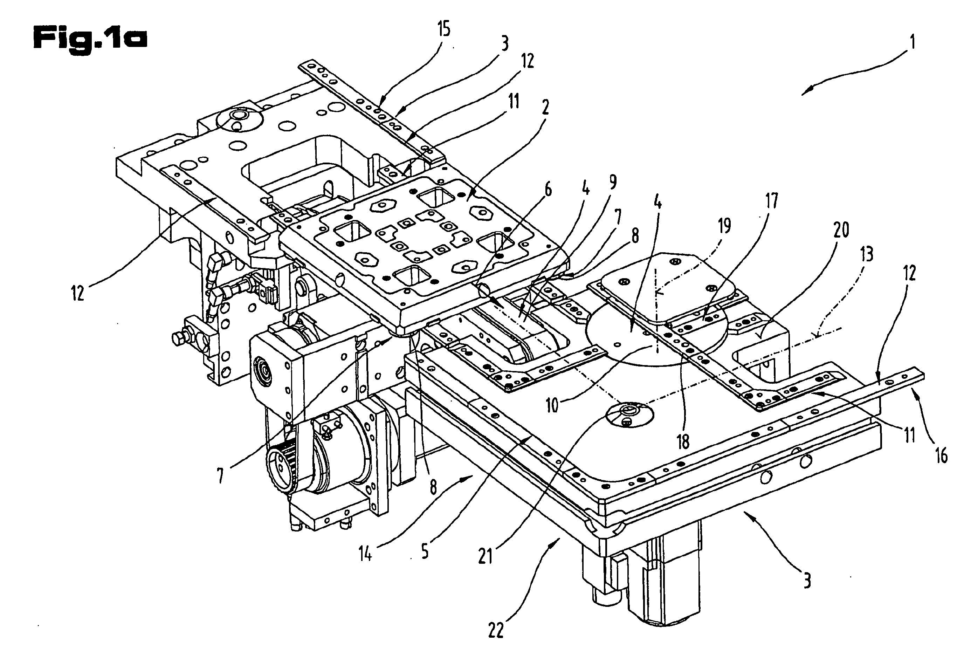

In Fig. 1a wird ein Abschnitt einer Transportanlage 1 zum Transportierten von Teileträgern 2 dargestellt. Um einen einfachen und flexiblen Aufbau der Transportanlage 1 erzielen zu können, ist die Transportanlage 1 bevorzugt durch mehrere Transportmodule 3 aufgebaut. Die Transportanlage 1 bzw. die Transportmodule 3 umfassen gegebenenfalls Vorschubvorrichtungen 4, mittels welchen der Teileträger 2 bewegbar bzw. verfahrbar ist. Weiters umfasst die Transportanlage 1 zumindest abschnittsweise Führungsmittel bzw. Führungsbahnen, mittels welchen der Teileträger 2 in Bewegungsrichtung 6 geführt ist.

Der Teileträger 2 dient zum Transportieren und gegebenenfalls zum Haltern einer Ware oder eines Produkts bzw. mehrerer Waren oder Produkte. Wesentlich ist, dass der Werkstückträger zu jedem Zeitpunkt eine genau definierte Position einnimmt und, insbesondere durch in die Führungsbahnen 5 eingreifende Führungsorgane 7, zwangsgeführt wird.

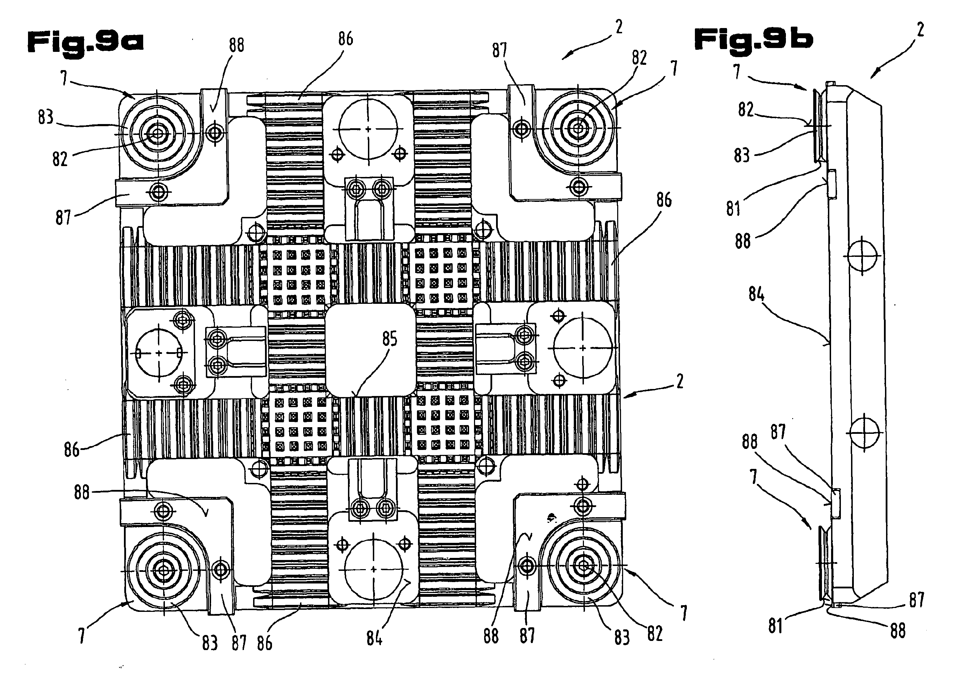

Zur Führung des Teileträgers 2 entlang der Führungsbahnen, weist dieser die Führungsorgane 7 auf, welche mit den Führungsbahnen 5 in Eingriff bringbar sind. Der Teileträger 2 weist insbesondere vier Führungsorgane 7 auf. Die Führungsorgane 7 sind bevorzugt zylinderförmig und durch, insbesondere drehbewegliche, Führungsrollen 8, 83 - Fig. 9a, 9b - gebildet. Weiters ist auch möglich, dass der Teileträger 2 als Transportverpackung ausgebildet ist. Eine detaillierte Beschreibung einer Ausführungsform des Teileträgers 2 findet sich weiter unten bei der Figurenbeschreibung der Fig. 9a und Fig. 9b.

Ein Transportmodul 3 für die Teileträger 2 umfasst ein Führungsmittel bzw. bevorzugt mindestens zwei parallel verlaufende Führungsbahnen 5 und gegebenenfalls die Vorschubvorrichtung 4, welche zum Bewegen bzw. Positionieren des Teileträgers 2 ausgebildet ist. Die einzelnen Transportmodule 3 sind zum linearen Befördern des Teileträgers 2, zum Umlenken des Teileträgers 2 ohne Orientierungsänderung des Teileträgers 2, nachfolgend Überschieben genannt, zum Drehen des Teileträgers, d.h. zum Ändern der Orientierung des Teileträgers 2 und/oder zum Verteilen bzw. Abzweigen von Teileträgern 2 auf eines von mehreren möglichen, nachfolgenden Transportmodulen 3 ausgebildet. Das Transportmodul 3 ist insbesondere zum Positionieren und/oder Haltern des Teileträgers 2 ausgebildet.

Die Vorschubvorrichtung 4 des Transportmoduls 3 dient zum Befördern des Teileträgers 2 auf dem Transportmodul 3. Die Vorschubvorrichtung 4 ist dabei formschlüssig oder reibschlüssig und/oder zumindest teilweise oder abschnittsweise bewegungsgekoppelt mit dem Teileträger 2 im Eingriff bzw. in Eingriff bringbar. Die Vorschubvorrichtung 4 ist durch einen Zugmitteltrieb 9 und/oder durch eine Drehscheibe 10 gebildet.

Die Führungsbahnen 5 der Transportanlage 1 bzw. der Transportmodule 3 zum Führen der Teileträger 2 sind in Bewegungsrichtung 6 des Teileträgers 2 quer gegenüberliegend angeordnet. Die Führungsbahnen 5 können als innen liegende Führungsbahnen 11 oder - auf den Teileträger 2 bezogen - außen liegende Führungsbahnen 12 gebildet sein. Abschnittsweise sind entlang einer Bewegungsbahn 13 innen liegende Führungsbahnen 11 und außen liegende Führungsbahnen 12 angeordnet.

Zumindest ein Transportmodul 3 der Transportanlage 1 ist durch eine Übergabevorrichtung 14 gebildet, welche zum Überführen bzw. Übergeben des Teileträgers 2 von einem ersten Förderabschnitt 15 an zumindest einen zweiten Förderabschnitt 16 ausgebildet ist. Die Vorschubvorrichtung 4 der Übergabevorrichtung 14 ist durch zumindest eine Drehscheibe 10 gebildet.

Die Drehscheibe 10 umfasst ein Übertragungsmittel 17, mit welchem eine Bewegung der Drehscheibe 10 auf den Teileträger 2 übertragbar ist. Das Übertragungsmittel 17 ist vorzugsweise durch zumindest eine relativ zu den Führungsbahnen 5, 11, 12 eines ersten Förderabschnitts 15 oder eines zweiten Förderabschnitts 16 bewegliche Führungsbahn 18 gebildet. Durch die Anordnung der beweglichen Führungsbahn 18 auf der Drehscheibe 10 sind diese um die Drehachse 19 der Drehscheibe 10 beweglich bzw. bewegbar.

Die Drehachse 19 der Drehscheibe 10 ist bevorzugt senkrecht bzw. normal stehend auf eine Transportebene 20, welche durch die Führungsbahnen 5 aufgespannt wird und welche parallel zur Bewegungsrichtung des Teileträgers 2 bzw. parallel zur Bewegungsbahn 13 des Teileträgers 2 ist.

Zum Regeln oder Orten des Teileträgers 2 bzw. dessen Bewegung weisen die Transportmodule 3, insbesondere die Übergabevorrichtung 14, Sensoren 21 auf. Diese Sensoren 21 sind bevorzugt durch induktive Sensoren und/oder durch optische Sensoren, insbesondere Lichtschranken, gebildet.

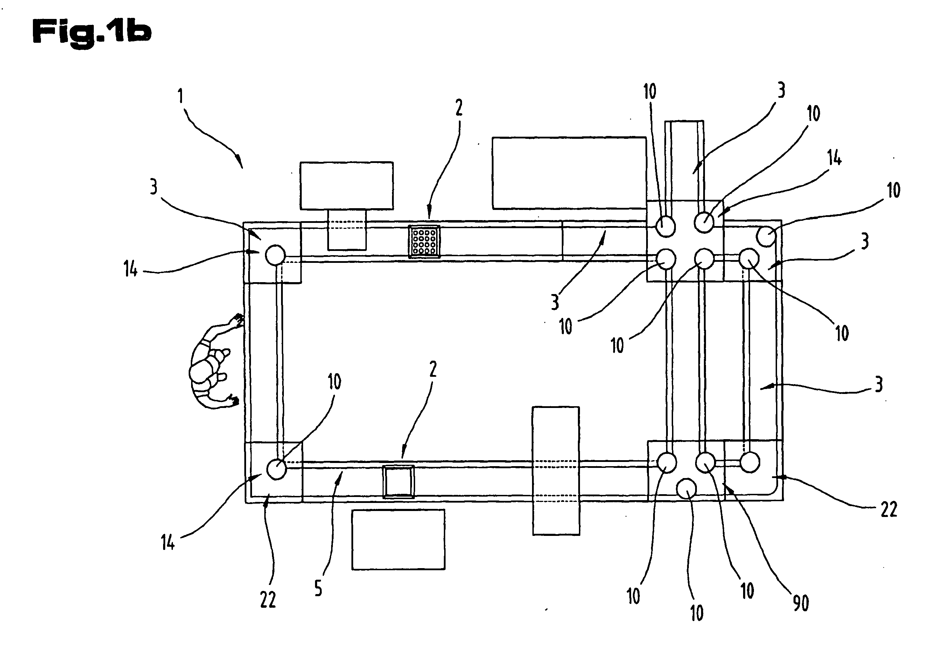

In der Fig. 1b ist eine Transportanlage 1 zum Transportieren und gegebenenfalls Bearbeiten von Teileträgern 2 bzw. sich auf den Teileträgern 2 befindlichen Waren, Werkstücken oder sonstigen Gegenständen. Derartige Waren können beispielsweise Maschinenelemente und/ oder Baugruppen von Maschinenelementen, beispielsweise Montageteile für die Automobilindustrie, sein oder sonstige gasförmige, flüssige, feste Waren oder Waren in einem mehrphasigen Stoffzustand, insbesondere für medizinische Zwecke bzw. Untersuchungen, beispielsweise Blutproben, Medikamente oder deren Herstellungsmaterialien oder dgl.

Entlang der Transportanlage 1 sind Arbeitsstationen angeordnet, welche den transportierten Gegenstand direkt am Teileträger 2 bearbeiten und/oder welche den Gegenstand zum Bearbeiten vom Teileträger 2 abnehmen, klemmen und/oder auf dem Teileträger 2 positionieren bzw. fixieren. Die Arbeitsstationen können beispielsweise durch Handarbeitsplätze, Bearbeitungsvorrichtungen, Befüll und/oder Entleervorrichtungen, Zuführvorrichtungen zum Zuführen von Montageteilen, Messgeräte und dgl. gebildet sein. Die Bearbeitungsvorrichtungen können durch Fräsmaschinen, Bohrvorrichtungen, Biegemaschinen, Schweißvorrichtungen, Montagevorrichtungen, Lackier- bzw. Beschichtungsvorrichtungen, Schüttel- oder Rührvorrichtungen etc. gebildet sein.

Die Transportanlage 1 weist vorzugsweise einen ring- oder kreisförmigen Verlauf auf, sodass sich die Teileträger 2 in einem Kreislaufsystem befinden. Weiters kann die vorzugsweise aus mehreren Transportmodulen 3 aufgebaute Transportanlage 1 auch Abzweigungen und Kreuzungen umfassen, welche die Teileträger 2 abzweigen, anhalten und/oder ausrichten können. Die Abzweigungen bzw. Kreuzungen sind bevorzugt durch Übergabevorrichtungen 14 gebildet.

Um den Teileträger 2 auf der Transportanlage 1 bzw. den Übergabevorrichtungen 14 gesteuert bewegen zu können, sind Antriebsvorrichtungen und Sensoren der Transportanlage 1 bzw. der Übergabevorrichtungen 14 mit einer Steuereinrichtung verbunden. Die Steuereinrichtung umfasst zumindest einen Datenträger, auf welchem ein Programm zur Durchführung eines Verfahrens zum Handhaben eines oder mehrerer Teileträger 2 und/oder ein Programm zum Steuern einer Übergabevorrichtung 14 gespeichert ist. Die auf dem Datenträger gespeicherten Programme bzw. Programmteile dienen zum Steuern bzw. Regeln der Orientierung und/oder Position eines Teileträgers 2 mittels Vorschubvorrichtungen 4 bzw. Drehscheiben 10. Die Lage der Teileträger 2 wird durch die Lage bzw. den Zustand der Vorschubvorrichtungen 4, insbesondere der Drehscheiben 10, eindeutig bestimmt.

Weiters können auf dem Datenträger der Steuereinrichtung Programme für den Produktionsablauf, Tabellen, insbesondere Tabellen zum synchronisieren von Vorschubvorrichtungen 4, Daten über den Zustand der auf den Teileträger 2 transportierten Objekte und Daten über die Bearbeitungsstationen gespeichert sein. Vorzugsweise ist der Datenträger in einer Recheneinheit, insbesondere in einem PC, bzw. Steuereinheit integriert, beispielsweise als Festplatte, Diskette, CD und/oder als RAM- oder ROM-Baustein. Die den Datenträger enthaltende Recheneinheit bzw. Steuereinheit ist beispielsweise mit einem Netzwerk verbunden, an das Recheneinheiten und/oder Steuereinheiten für weitere Transportanlagen 1 oder weitere Vorschubvorrichtungen 4 angeschlossen sind. Die Recheneinheit bzw. Steuereinheit ist beispielsweise durch einen Industrie-PC und/oder eine speicherprogrammierbare Steuerung gebildet.

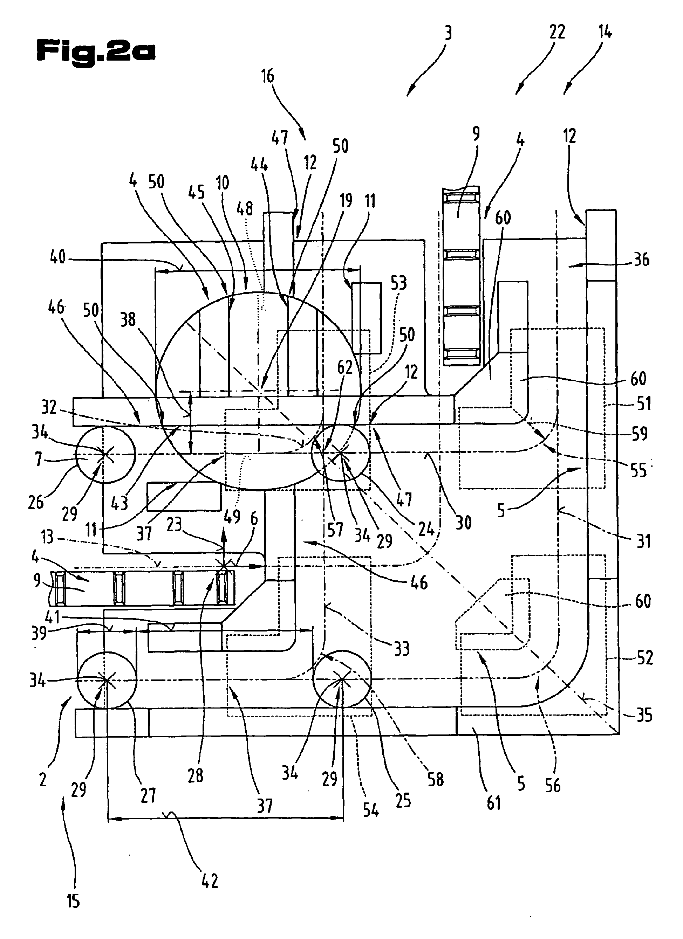

In den Fig. 2a bis 2e ist eine weitere und gegebenenfalls für sich eigenständige Ausführungsform der Übergabevorrichtung 14 gezeigt, wobei wiederum für gleiche Teile gleiche Bezugszeichen bzw. Bauteilbezeichnungen wie in der vorgegangenen Fig. 1, verwendet werden. Um unnötige Wiederholungen zu vermeiden, wird auf die detaillierte Beschreibung in der vorangegangenen Fig. 1 hingewiesen bzw. Bezug genommen.

Anhand der Fig. 2a bis Fig. 2e wird das Überschieben, also das Umlenken des Teileträgers 2 - Fig. 1 - ohne Änderung seiner Orientierung 23, des Teileträgers mit der Übergabevorrichtung 14 beschrieben. Die Übergabevorrichtung 14 ist dabei durch eine Übergabevorrichtung 22 gebildet, welche ein Umlenken des Teileträgers 2 um 90 ° bei gleich bleibender Orientierung 23 des Teileträgers ermöglicht.

Der Teileträger 2 ist dabei durch vier Führungsorgane 7, insbesondere durch das erste Führungsorgan 24, das zweite Führungsorgan 25, das dritte Führungsorgan 26 und das vierte Führungsorgan 27 und einem zentralen Punkt 28 des Teileträgers 2 dargestellt.

Unter dem zentralen Punkt 28 des Teileträgers, wird ein im Zentrum der vier Führungsorgane 24, 25, 26, 27 liegender Punkt oder der Schwerpunkt des Teileträgers mit oder ohne Beladung verstanden. Der zentrale Punkt 28 des Teileträgers 2 bewegt sich in der Bewegungsrichtung 6 entlang der Bewegungsbahn 13.

Die Mittelpunkte 29 der Führungsbahnen 24, 25, 26, 27 bewegen sich auf einer ersten Führungslinie 30, einer zweiten Führungslinie 31, einer dritten Führungslinie 32 und einer vierten Führungslinie 33. Als Mittelpunkt 29 der Führungsorgane 24, 25, 26, 27 kann auch ein Schnittpunkt zwischen einer Drehachse 34 der Führungsorgane 24, 25, 26, 27 mit der Transportebene 20 - Fig. 1 - betrachtet werden. Das erste Führungsorgan 24 bewegt sich auf der ersten Führungslinie 30, das zweite Führungsorgan 25 bewegt sich entlang der zweiten Führungslinie 31, das dritte Führungsorgan 26 bewegt sich entlang der dritten Führungslinie 32 und das vierte Führungsorgan 27 bewegt sich entlang der vierten Führungslinie 34.

Als Vorschubvorrichtung 4 dient bei der Übergabevorrichtung 22 die Drehscheibe 10, welche bevorzugt entlang einer Winkelsymmetralen 35 von zwei geraden Abschnitten 36, 37 der Führungslinien 30, 31, 32, 33 angeordnet ist. Die Drehachse 19 der Drehscheibe 10 liegt auf der Winkelsymmetralen 35 und steht in etwa normal zu dieser. Die in den Fig. 2a bis Fig. 2e beschriebene Ausführungsform sieht vor, dass die Drehachse 34 der Drehscheibe 10 in einem Bereich, welcher nicht zwischen zwei Führungslinien 30, 31, 32, 33 liegt, angeordnet ist. Weiters liegt die Drehachse 19 bevorzugt nicht auf einer Führungslinie 30, 31, 32, 33. Die Drehachse 19 der Drehscheibe 10 weist bevorzugt einen Abstand 38 zu zumindest einer der Führungslinien 30, 31, 32, 33 auf, der in der Größenordnung eines Durchmessers 39 eines Führungsorganes 24, 25, 26, 27 liegt.

Ein Durchmesser 40 der Drehscheibe 10 und der Abstand 38 zwischen der Drehachse 19 der Drehscheibe 10 und einer oder mehrere der Führungslinien 30, 31, 32, 33 sind so gewählt, dass die Drehscheibe 10 bewegbar, insbesondere drehbar, ist, wenn sich der Teileträger 2 in einer Position befindet, bei der sich die Drehscheibe 10 in einem Zwischenraum 41 zwischen zwei Führungsorganen 24, 25, 26, 27, insbesondere zwischen dem ersten Führungsorgan 24 und dem dritten Führungsorgan 26, befindet. Beispielsweise ist der Durchmesser 40 und die Drehachse 19 der Drehscheibe 10 so gewählt, dass ein Abstand zwischen zwei Schnittpunkten eines Kreises dessen Mittelpunkt auf der Drehachse 19 der Drehscheibe 10 liegt und der einen Durchmesser aufweist, der um den Durchmesser 39 eines Führungsorganes 24, 26 größer ist als der Durchmesser 40 der Drehscheibe 10, mit einer der Führungslinien 30, 32 kleiner ist, als ein Abstand 42 zwischen zwei Führungsorganen 24, 26.

Um den Teileträger 2 zu führen, lenken und/oder anzutreiben, weist die Drehscheibe 10 der Übergabevorrichtung 22 eine erste Führungsbahn 43, eine zweite Führungsbahn 44 und eine dritte Führungsbahn 45 auf. Zumindest eine der Führungsbahnen 43, 44, 45, vorzugsweise die erste Führungsbahn 43, ist so an der Drehscheibe 10 angeordnet, dass diese im Stillstand der Drehscheibe 10 einen ersten Führungsbahnabschnitt 46 mit einem zweiten Führungsbahnabschnitt 47 verbindet bzw. durch diese ein Führungsorgan 24 entlang eines geraden Abschnittes 37 einer Führungslinie 30 geführt wird.

Die zweite Führungsbahn 44 der Drehscheibe 10 und die dritte Führungsbahn 45 der Drehscheibe 10 sind zur Antriebsübertragung auf den Teileträger 2, insbesondere über eines der Führungsorgane 24, 25, 26, 27, ausgebildet. Bei der 90 Übergabevorrichtung 22 erfolgt die Antriebsübertragung auf den Teileträger 2 mittels der zweiten Führungsbahn 44 und der dritten Führungsbahn 45 bevorzugt über das dritte Führungsorgan 26 des Teileträgers 2.

Entlang der Führungsbahnen 43, 44, 45 der Drehscheibe 10 verläuft eine erste drehscheibenfeste Führungslinie 48 und eine zweite drehscheibenfeste Führungslinie 49. Die erste und zweite drehscheibenfeste Führungslinie 48, 49 wird durch ortsfest mit der Drehscheibe 10 verbundene Positionspunkte der Mittelpunkte 29 der Führungsorgane 24, 25, 26, 27, insbesondere durch das erste Führungsorgan 24 und das dritte Führungsorgan 26, gebildet.

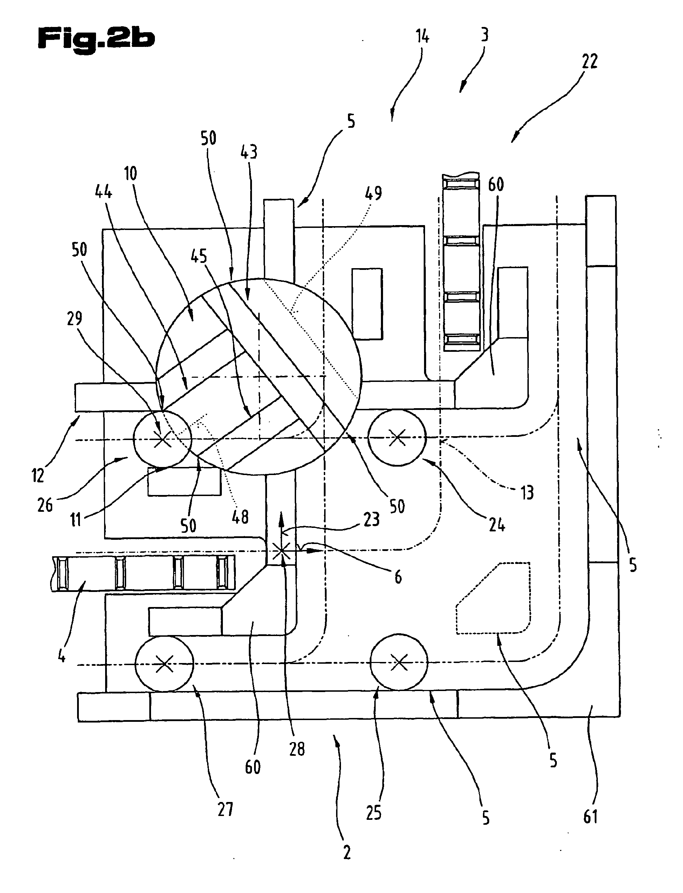

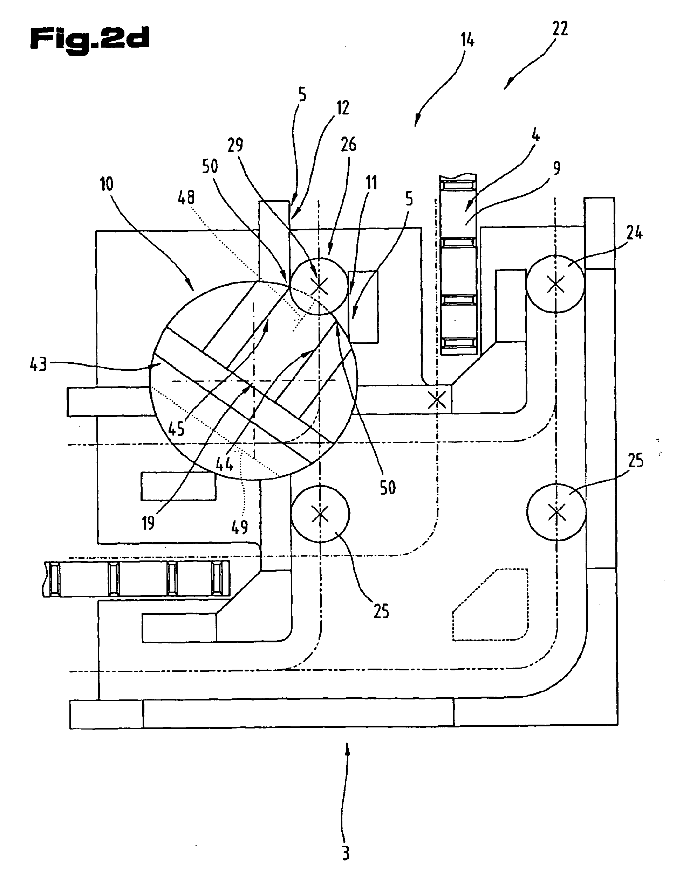

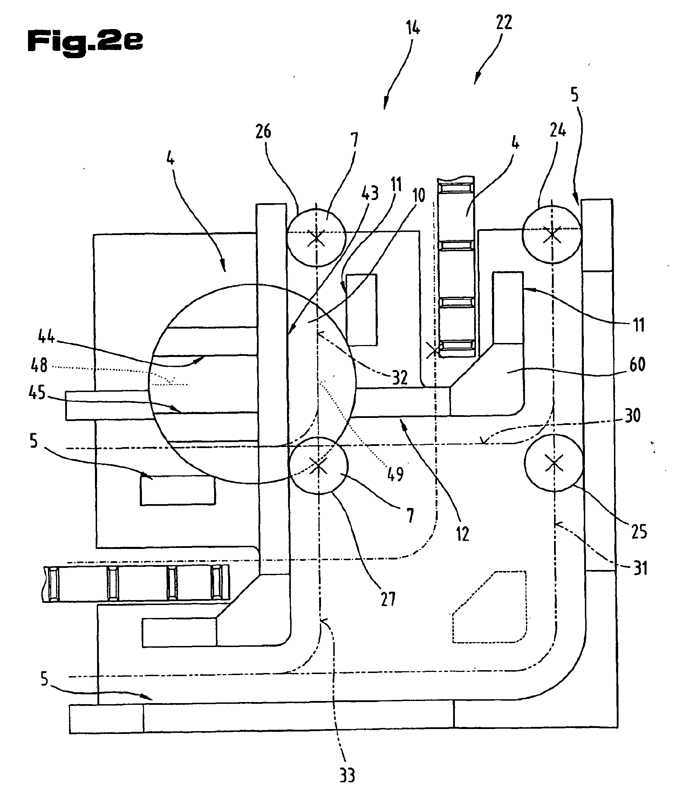

Die an der Drehscheibe 10 angeordneten Führungsbahnen 43, 44, 45 sind so an der Drehscheibe 10 angeordnet, das Enden 50 der Führungsbahnen 43, 44, 45 der Drehscheibe 10 durch Drehen der Drehscheibe 10 in eine Stellung gebracht werden können, an welche die Enden 50 der Führungsbahnen 43, 44, 45 der Drehscheibe 10 an fest mit der Übergabevorrichtung 14, 22 verbundene Führungsbahnen 5, insbesondere an eine der innen liegende Führungsbahnen 11 und/oder an eine der außen liegende Führungsbahnen 12 anlegbar sind. Derartige Stellungen sind beispielsweise in Fig. 2a und Fig. 2e gezeigt, bei der die Enden 50 der ersten Führungsbahn 43 der Drehscheibe 10 an die außen liegenden Führungsbahnen 12 angelegt sind. Weiters sind derartige Stellungen in den Fig. 2b und 2d gezeigt bei welchen die Enden 50 der dritten Führungsbahn 45 bzw. der zweiten Führungsbahn 44 der Drehscheibe 10 an außenliegende Führungsbahnen 12 angelegt sind und dadurch ein Führungsorgan 7, 26 von den feststehenden Führungsbahnen 5 übernehmen können.

In den Bereichen 51, 52, 53, 54 eines Führungslinienbogens 55, 56, 57, 58 weisen die Führungslinien 30, 31, 32, 33 einen Radius 59 auf, welcher größer als der halbe Durchmesser 39 eines Führungsorganes 24, 25, 26, 27 ist. Der Radius 59 der Führungslinien 31, 32, 33 bzw. der Führungslinienbögen 55, 56, 57, 58 liegt bevorzugt bei einem Wert, der zwischen 1,1 mal bis 2 mal dem halben Durchmesser 39 eines der Führungsorgane 24, 25, 26, 27 entspricht. Insbesondere ist der Radius 59 der Führungslinien 30, 31, 32, 33 bzw. Führungsliniebögen 55, 56,57, 58 in etwa 1,5 mal so groß wie der halbe Durchmesser 39 eines der Führungsorgane 24, 25, 26, 27.

In den Bereichen 51, 52, 54 der Führungslinienbögen 55, 56, 58, in welchen sich Drehscheibe 10 gegebenenfalls auch nicht teilweise, befindet, ist bevorzugt ein inneres Führungsbahnelement 60 und gegebenenfalls ein äußeres Führungsbahnelement 61 an der Übergabevorrichtung 14, 22 angeordnet.

In der Umgebung, welche beispielsweise bis zu einem Abstand in der Größenordnung von 25 % bis 200 % eines Abstandes 37 von zwei Führungsorganen 24, 25, 26, 27 liegt, eines oder mehrere der Bereiche 51, 52, 53, 54 eines Führungslinienbogens 55, 56, 57, 58 und/oder in einem Bereich kurz vor bzw. kurz nach, bezogen auf die Bewegungsrichtung 6 des Teileträgers 2, einer über die Drehscheibe 10 verlaufenden Führungslinie 30, 32, 33 sind zumindest abschnittsweise innen liegende Führungsbahnen 11 und außen liegende Führurigsbahnen 12 an der Übergabevorrichtung 14, 22 angeordnet.

Eine Kreuzung 62 von zwei Führungslinien 30, 33 und/oder gegebenenfalls zumindest ein Führungslinienbogen 57, liegen im Bereich der Drehscheibe 10, insbesondere liegen diese oberhalb der Drehscheibe 10.

Im Folgenden wird anhand der Fig. 2a bis Fig. 2e der Ablauf des Überschiebens des Teileträgers 2 mittels der Übergabevorrichtung 22 beschrieben.

Zu Beginn wird der Teileträger 2 entlang eines ersten Förderabschnittes 15 mittels der Vorschubvorrichtung 4, insbesondere des Zugmitteltriebes 9, zur Übergabevorrichtung 14, 22 entlang von innen liegenden Führungsbahnen 11 und/oder außen liegenden Führungsbahnen 12 in Bewegungsrichtung 6 zugeführt. Während des Zuführens kann die Stellung der um die Drehachse 19 drehbaren Drehscheibe 10 noch undefiniert sein.

Durch Sensoren 21 - Fig. 1. - kann die Position des Teileträgers 2 bestimmt werden. Sobald der Teileträger 2 in die Nähe der Übergabevorrichtung 14, 22 bzw. der Drehscheibe 10 kommt, wird die Drehscheibe 10 vorzugsweise in eine Überführstellung, wie in Fig. 2a gezeigt, gedreht. In der Überführstellung bildet vorzugsweise die zweite Führungsbahn 44 der Drehscheibe 10 eine Verbindung zwischen dem ersten Führungsbahnabschnitt 46 und dem zweiten Führungsbahnabschnitt 47, sodass das erste Führungsorgan 24 des Teileträgers 2 ohne Drehung der Drehscheibe 10 die Drehscheibe 10 überfährt. Bis vor dem Erreichen des dritten Führungsorganes 26 des Teileträgers 2 der Drehscheibe 10, wird der Teileträger 2 durch die Vorschubvorrichtung 4 eines vorstehenden Transportmoduls 3 - Fig. 1 -, beispielsweise durch einen Zugmittetrieb 9, angetrieben bzw. befördert.

Nach dem Überfahren der Drehscheibe 10 durch das erste Führungsorgan 24 des Teileträgers 2, wird die Drehscheibe 10 bzw. die zweite Führungsbahn 44 und gegebenenfalls damit auch die dritte Führungsbahn 45 der Drehscheibe 10 in eine Aufnahmestellung bzw. Übernahmeposition - wie in Fig. 2b gezeigt - für das dritte Führungsorgan 26 gedreht. Die Aufnahmestellung oder Übernahmeposition kann dadurch gegeben sein, dass die zweite Führungsbahn 44 der Drehscheibe 10 und/oder die dritte Führungsbahn 45 der Drehscheibe 10 bzw. jeweils ein Ende 50 dieser Führungsbahnen 44, 45 an einer das dritte Führungsorgan 26 führenden, innen liegenden Führungsbahn 11 und/oder außen liegenden Führungsbahn 12 und/oder am dritten Führungsorgan 26 selbst anliegt. Insbesondere wird die Drehscheibe 10 so bewegt, dass die drehscheibenfeste Führungslinie 48 immer in Richtung zum Mittelpunkt 29 des dritten Führungsorganes 26 liegt. Vorzugsweise weist die Drehscheibe 10 bzw. zumindest die zweite Führungsbahn 44 und/oder die dritte Führungsbahn 45, in der Aufnahmestellung bzw. Übennahmeposition, eine bestimmte, dem Führungsorgan 26 bzw. dem Teileträger 2 angepasste Geschwindigkeit und gegebenenfalls eine angepasste Beschleunigung auf. Die Anfangsgeschwindigkeit bzw. Beschleunigung ist dabei so gewählt, dass auf den Teileträger 2 in der Aufnahmestellung bzw. Übernahmeposition keine bzw. nur geringe plötzlichen Kräfte wirken und der Teileträger möglichst ruckfrei von der Drehscheibe 10 bzw. deren Führungsbahnen 43, 44, 45 aufgenommen wird.

Die Drehscheibe 10 nimmt in der Aufnahmestellung oder Übernahmeposition das dritte Führungsorgan 26, welche durch die Vorschubvorrichtung 4 eines vorhergehenden Transportmoduls 3 - Fig. 1 - weiter befördert wird, auf. Durch ein weiteres Drehen der Drehscheibe 10 wird der Teileträger 2 über das dritte Führungsorgan 26 und die zweite Führungsbahn 44 und/ oder die dritte Führungsbahn 45 angetrieben bzw. positioniert.

Durch die fest an der Übergabevorrichtung 14, 22 angeordneten Führungsbahnen 5 wird der Teileträger 2 bzw. ein zentraler Punkt 28 des Teileträgers 2 in Bewegungsrichtung 6 mit gleich bleibender Orientierung 23 entlang der Bewegungsbahn 13 geführt.

Nach der Aufnahme des dritten Führungsorganes 26 durch die Drehscheibe 10 bzw. die zweite Führungsbahn 44 und/oder die dritte Führungsbahn 45 erfolgt eine Drehung der Drehscheibe 10 und dadurch erfolgt die Weiterbeförderung des Teileträgers 2. Die Bewegung des Teileträgers 2 erfolgt im ersten Förderabschnitt 15 so lange geradlinig, bis die Führungsorgane 24, 25, 26, 27 die Führungslinienbögen 55, 56, 57, 58 erreichen. Durch innen liegende Führungsbahnbögen 63 und/oder außen liegenden Führungsbahnbögen 64 werden die Führungsorgane 24, 25, 26, 27 umgelenkt, sodass sich die Bewegungsrichtung 6 ändert. Beim Überschieben bleibt bei einer Änderung der Bewegungsrichtung 6 die Orientierung 23 des Teileträgers 2 gleich. Ein Radius 65 eines inneren Führungsbahnbogens 63 entspricht den um den halben Durchmesser 39 eines Führungsorganes 24, 25, 26, 27 als reduzierten Radius. Ein Radius 66 eines äußeren Führungsbahnbogens 64 ist in etwa um den Durchmesser 39 eines Führungsorganes 24, 25, 26, 27 größer als der Radius 65 eines innen liegenden Führungsbahnbogens 63. Ein innen liegender Führungsbahnbogen 63 ist bevorzugt auf einem inneren Bogenelement 60 ausgebildet. Ein äußerer Führungsbahnbogen 64 ist bevorzugt an einem äußeren Bogenelement 61 ausgebildet.

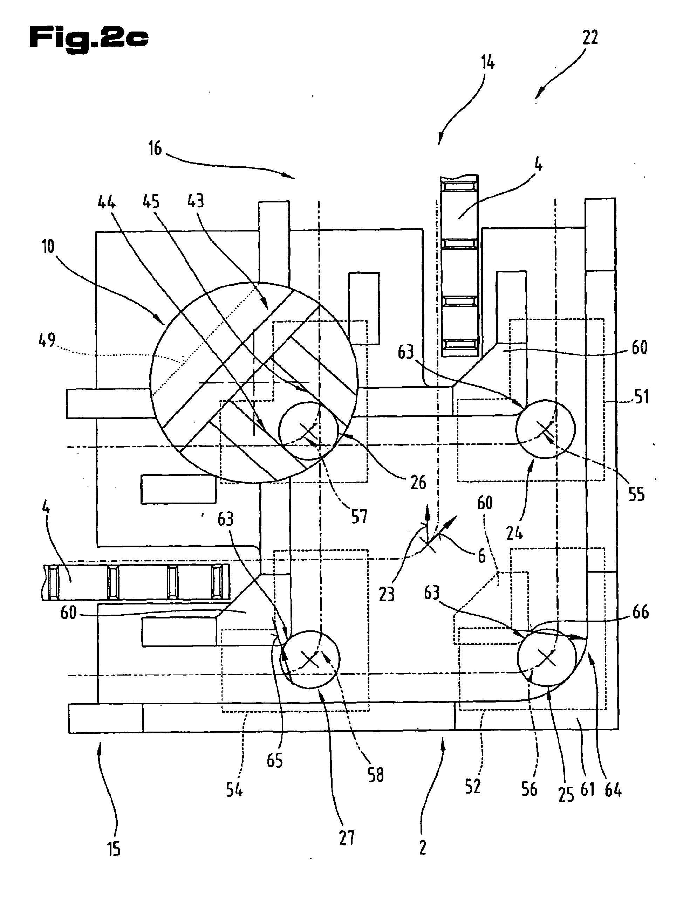

Die Umlenkung des Teileträgers 2 erfolgt durch die inneren Führungsbahnbögen 63 und/oder die äußeren Führungsbahnbogen 64 bzw. durch die Bogenelemente 60, 61, wie in Fig. 2c gezeigt. Zur Umlenkung befinden sich das erste Führungsorgan 24 und das vierte Führungsorgan 27 mit dem im jeweiligen Bereich 51, 54 befindlichen Führungsbahnbogen 63, 64, insbesondere einem inneren Führungsbahnbogen 63, im Eingriff. Das zweite Führungsorgan 25 befindet sich im Eingriff mit einem im Bereich 52, welcher sich um den Führungslinienbogen 56 der zweiten Führungslinie 31 des zweiten Führungsorganes 25 befindet, liegenden inneren Führungsbahnbogen 63 und/oder äußeren Führungsbahnbogen 64 und wird durch diese umgelenkt. Vorzugsweise wird im Bereich 52 das zweite Führungsorgan 25 und das vierte Führungsorgan 27 nur durch den äußeren Führungsbahnbogen 64 umgelenkt, sodass ein Bogenelement 60 mit einem inneren Führungsbahnbogen 63 entfallen kann.

Die Vorschubbewegung für den Teileträger 2 erfolgt mittels dem mit der Drehscheibe 10 bzw. den darauf befindlichen Führungsbahnen 43, 44, 45 im Eingriff befindlichen dritten Führungsorgan 26. Durch die Drehung der Drehscheibe 10 wird der Teileträgers 2 bis zu einer wie in Fig. 2 d gezeigten Übergabestellung bzw. Übergabeposition bewegt, an der das dritte Führungsorgan von der Drehscheibe 10 bzw. der zweiten Führungsbahn 44 und/oder der dritten Führungsbahn 45 an Führungsbahnen 5, insbesondere innen liegende Führungsbahn 11 und/oder außen liegende Führungsbahn 12 zur weiteren Führung übergeben wird. Ab der Übergabestellung bzw. Übergabeposition der Drehscheibe 10, bei der das dritte Führungsorgan 26 die Drehscheibe 10 verlässt, wird der Teileträger 2 durch die Vorschubvorrichtung 4, insbesondere dem Zugmitteltrieb 9, eines nachfolgenden Transportmoduls 3 weiterbefördert bzw. positioniert.

Als Übergabestellung oder Übergabeposition wird die Winkelstellung der Drehscheibe 10 bezeichnet, bei der das Ende 50 bzw. ein Endpunkt der zweiten Führungsbahn 44 der Drehscheibe 10 und/oder das Ende 50 bzw. ein Endpunkt der dritten Führungsbahn 45 der Drehscheibe 10 an die nachfolgende, innen liegende Führungsbahn 11 und/oder außen liegende Führungsbahn 12 eines nachfolgenden zweiten Förderabschnittes 16 anliegen. Als Übergabestellung kann auch jene Stellung der Drehscheibe 10 bezeichnet werden, bei der sich das Ende 50 der zweiten Führungsbahn 44 der Drehscheibe 10 oder das Ende 50 der dritten Führungsbahn 45 der Drehscheibe 10 auf einer kürzesten Verbindungslinie zwischen dem Mittelpunkt 29 des dritten Führungsorganes 26 und der Drehachse 19 der Drehscheibe 10 befindet. Vorzugsweise stoppt die Drehscheibe 10 nicht abrupt in der Übergabestellung, sondern weist wiederum eine dem Teileträger 2 angepasste Drehgeschwindigkeit bzw. Drehbeschleunigung auf.

Noch bevor das vierte Führungsorgan 27 die Drehscheibe 10 erreicht, wird die Drehscheibe 10 in eine Stellung gebracht, in welcher das vierte Führungsorgan 27 des Teileträgers 2 die Drehscheibe mit oder ohne Drehbewegung der Drehscheibe 10 überfahren kann bzw. in welcher das vierte Führungsorgan 27 durch eine Führungsbahn 43, 44, 45, insbesondere der ersten Führungsbahn 43, im Eingriff ist und geführt wird. Eine derartige Überführstellung der Drehscheibe 10, bei der das Überfahren der Drehscheibe 10 durch das vierte Führungsorgan 27 erfolgt, ist in Fig. 2e dargestellt.

In der Überführstellung ist der Teileträger 2 bzw. das entsprechende Führungsorgan 7 in einer quer zur Bewegungsrichtung 6 liegenden Richtung durch eine der Führungsbahnen 43, 44, 45 der Drehscheibe 10, insbesondere der ersten Führungsbahn 43 der Drehscheibe 10, gesichert bzw. gehaltert.

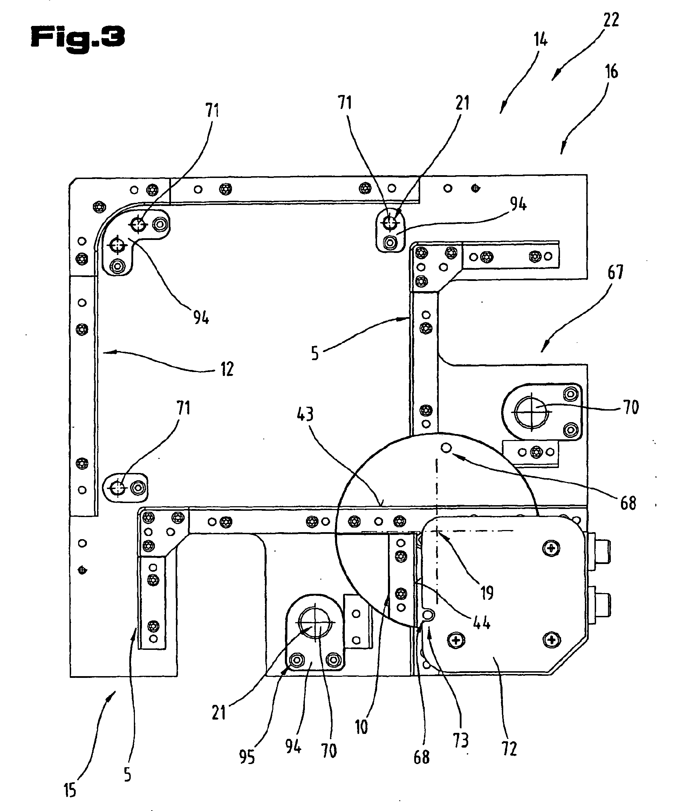

In der Fig. 3 ist eine weitere und gegebenenfalls für sich eigenständige Ausführungsform der Übergabevorrichtung 22 gezeigt, wobei wiederum für gleiche Teile gleiche Bezugszeichen bzw. Bauteilbezeichnungen, wie in den vorangegangenen Fig. 1 bis Fig. 2e verwendet werden. Um unnötige Wiederholungen zu vermeiden, wird auf die detaillierte Beschreibung in den vorangegangen Fig. 1 bis Fig. 2e hingewiesen bzw. Bezug genommen.

Die in Fig. 3 gezeigte Übergabevorrichtung 14, 22 umfasst die Drehscheibe 10, die Führungsbahnen 5, die Sensoren 21 und gegebenenfalls Ausnehmungen 67, um Fördervorrichtungen bzw. Vorschubvorrichtungen 4 - Fig. 1 - von vorstehenden bzw. nachstehenden Transportmodulen 3 - Fig. 1 - insbesondere den Zugmitteltrieb 9 - Fig. 1 - aufzunehmen.

Die Drehscheibe 10 weist vorzugsweise zumindest ein Mittel 68 zur Bestimmung einer Referenzstellung der Drehscheibe 10 auf. Das Mittel 68 ist beispielsweise durch ein oder mehrere Bohrungen 69 gebildet, welche durch einen Sensor, insbesondere einen Lichtschrankensensor und/oder einen induktiven Sensor, geortet werden können. Beispielsweise ist ein relativ zur Übergabevorrichtung 22 feststehender Lichtschrankensensor angeordnet, bei dem der Abstand des Lichtstrahls zur Drehachse 19 der Drehscheibe 10 in etwa dem Abstand des Mittels 68 bzw. der Bohrung 69 zur Drehachse 19 der Drehscheibe 10 entspricht. Durch gesteuertes Drehen der Drehscheibe 10 kann festgestellt werden, ab welcher Stellung der Lichtstrahl des Lichtschrankensensors unterbrochen bzw. nicht mehr unterbrochen ist. Dadurch kann auf die Position der Drehscheibe 10 zurückgeschlossen werden.

Zur Bestimmung der Position des Teileträgers 2 - Fig. 1- bzw. der Führungsorgane 24, 25, 26, 27 - Fig. 2a - des Teileträgers 2 - Fig. 1 - sind in einem Bereich entlang der Führungsbahnen 5, beispielsweise zwischen innenliegenden Führungsbahnen 11 und außenliegenden Führungsbahnen 12, bzw. in einem ersten Förderabschnitt 15 und/oder in einem zweiten Förderabschnitt 16 die Sensoren 21 an der Übergabevorrichtung 14, 22 angeordnet. Zur Bestimmung, ob bzw. wann der Teileträger 2 - Fig. 1 - die Übergabevorrichtung 14, 22 erreicht bzw. verlässt, sind in einem Bereich, welcher an weitere Transportmodule 3 angrenzt, Sensoren 70 angeordnet. Die Sensoren 70 sind zur Lage- und Präsenzerkennung des Teileträgers 2 - Fig. 1 - ausgebildet und weisen bevorzugt einen Messbereich auf, welcher bis zu einer Entfcmung, die in etwa dem Abstand 37 von zwei Führungsorganen 24, 25, 26 - Fig. 2a - entspricht, reicht. Durch diese Sensoren 70 wird einer Steuerung, insbesondere einem Prozessleitsystem, mitgeteilt, wann ein Vorgang zum Überschieben gestartet bzw. eingeleitet werden soll. Weiters sind entlang der Führungsbahnen 5, insbesondere in Bereichen 51, 52, 54 - Fig. 2a - von Führungslinienbögen 55, 56, 58, - Fig. 2a - Sensoren 71 angeordnet, welche zum Detektieren der Führungsorgane 24, 25, 26, 27 - Fig. 2a- ausgebildet sind. Die Sensoren zum Detektieren der Führungsorgane 24, 25, 26, 27 sind zur Lageerkennung der Führungsorgane ausgebildet und dienen der Regelung des Überschiebens, insbesondere während einer Änderung der Bewegungsrichtung 6 - Fig. 2a. Insbesondere kann durch die Sensoren 71 zur Erfassung der Führungsorgane 7 eine Geschwindigkeit des Teileträgers 2 - Fig. 1 - festgestellt und/oder geregelt werden.

Weiters ist oberhalb der Drehscheibe 10 ein Überdeckungselement 72 angeordnet. Durch das Überdeckungselement 72 kann beispielsweise die Sicherheit der Übergabevorrichtung 22 erhöht werden, da ein ungewolltes Eingreifen durch einen Benutzer erschwert wird. Eine Variante kann vorsehen, dass am Überdeckungselement 72 zumindest abschnittsweise Führungsbahnen 5 angeordnet sind, welche zur Führung von einem oder mehrere Führungsorganen 24, 25, 26, 27, insbesondere zum Führen des ersten Führungsorganes 24, des dritten Führungsorganes 26 und des vierten Führungselementes 27 ausgebildet sind. Weiters weist das Überdeckungselement 72 vorzugsweise eine Ausnehmung 73 für das Mittel 68 zur Lagefeststellung der Drehscheibe 10 auf.

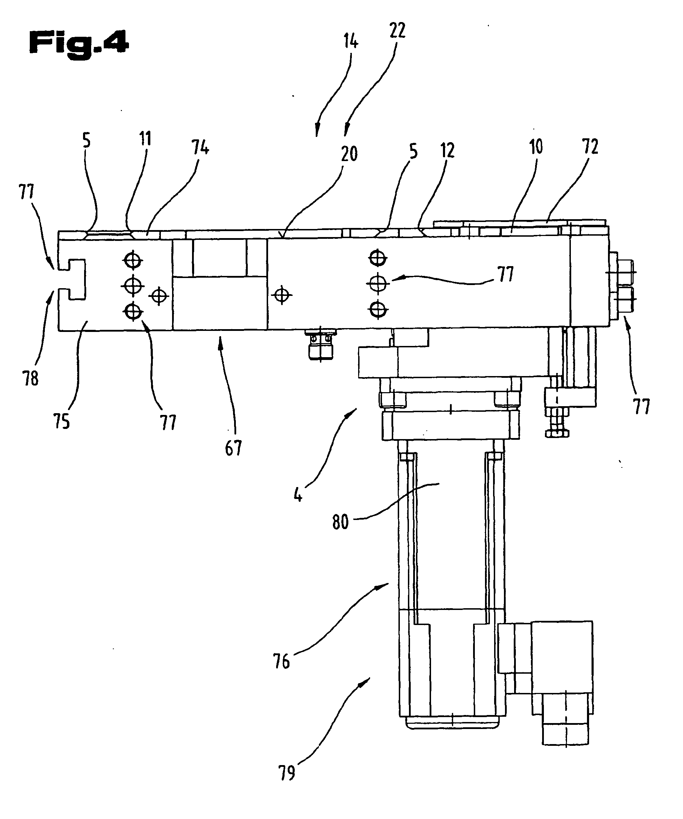

In Fig. 4 ist eine Seitenansicht der in Fig. 3 gezeigten Übergabevorrichtung 22 gezeigt, wobei wiederum für gleiche Teile gleiche Bezugszeichen bzw. Bauteilbezeichnungen, wie in den vorangegangenen Fig. Verwendet werden. Um unnötige Wiederholungen zu vermeiden, wird auf die detaillierte Beschreibung in den vorangegangenen Fig. 1 bis Fig. 3 hingewiesen bzw. Bezug genommen.

Die Führungsbahnen 5, insbesondere die innen liegenden Führungsbahnen 11 und die außen liegenden Führungsbahnen 12 sind bevorzugt auf Führungsbahnelementen 74 und Bogenelementen 60, 61 - Fig. 3 - ausgebildet, welche auf einem Montageelement 75 angeordnet sind. Weiters ist am Montageelement 75 die Drehscheibe 10, gegebenenfalls das Überdeckungselement 72, sowie eine Antriebsvorrichtung 76 für die Vorschubvorrichtung 4 angeordnet. Das Montageelement 75 ist beispielsweise aus Aluminiumguss hergestellt, um bessere Schwingungseigenschaften und eine Gewichtsersparnis zu erzielen. Das Montageelement 75 ist bevorzugt annähernd plattenförmig. Weiters weist das Montageelement 75 Verbindungsvorrichtungen 77 auf, welche zum Verbinden der Übergabevorrichtung 22 mit weiteren Transportmodulen 3 und/oder einem Traggerüst bzw. Trageinheiten (nicht eingezeichnet), an welches verschiedene Transportmodule 3 und/oder Geräte zur Behandlung der auf den Teileträger 2 transportierten Ware bzw. Produkte angeordnet werden können.

Die Verbindungsvorrichtung 77 des Montageelements 75 ist beispielsweise durch eine, insbesondere T-förmige, Nut 78 gebildet. Die Nut 78 verläuft bevorzugt seitlich des Überschiebemoduls 22, insbesondere an einer Seite, welche im rechten Winkel auf die Transportebene - Fig. 1 - steht. Der Verlauf der Nut 78 ist parallel zur Transportebene 20 - Fig. 1. Es ist auch möglich, dass die Nut 78 senkrecht auf die Transportebene 20 - Fig. 1 - stehend verläuft. Die Verbindungsvorrichtung 77 bzw. die insbesondere T-nutförmige Nut 78 ist dabei so ausgebildet, dass das Überschiebemodul 22 variabel, insbesondere höhen- und/oder seiteneinstellbar, montierbar ist. Weiters kann die Verbindungsvorrichtung 77 auch durch Schraubverbindungen und/oder durch Steckverbindungen gebildet sein. Dabei ist es möglich, dass am Montageelement 75 Zentrierstifte und/oder Bohrungen angeordnet sind, um ein exaktes Zusammenpassen der Transportmodule 3, insbesondere der Führungsbahnen 5, zu erreichen.

Die Antriebsvorrichtung 76 ist beispielsweise durch einen Elektromotor 79, insbesondere einen Servomotor 80, gebildet. Die Antriebsvorrichtung 76, insbesondere der Servomotor 80, ist dabei entweder direkt oder indirekt über ein Getriebe, mit der Drehscheibe 10 verbunden. Die Antriebsvorrichtung 76 ist dazu ausgebildet, die Drehscheibe 10 bzw. die darauf befindlichen Führungsbahnen 5, insbesondere die erste, zweite und/oder dritte Führungsbahn 43, 44, 45, der Drehscheibe 10 in Bewegung, insbesondere in Drehbewegung, zu versetzen.

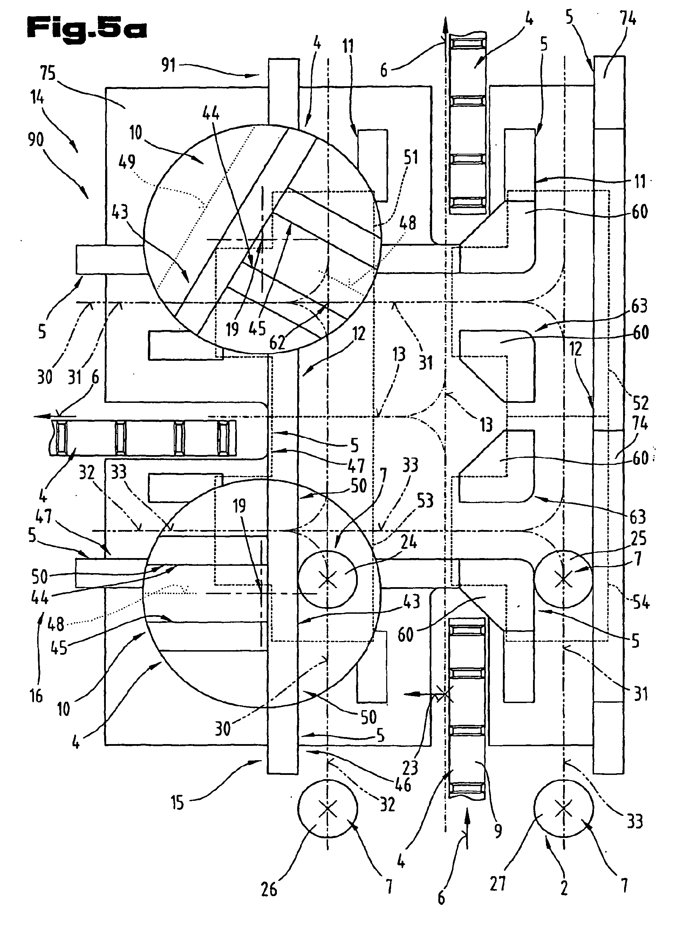

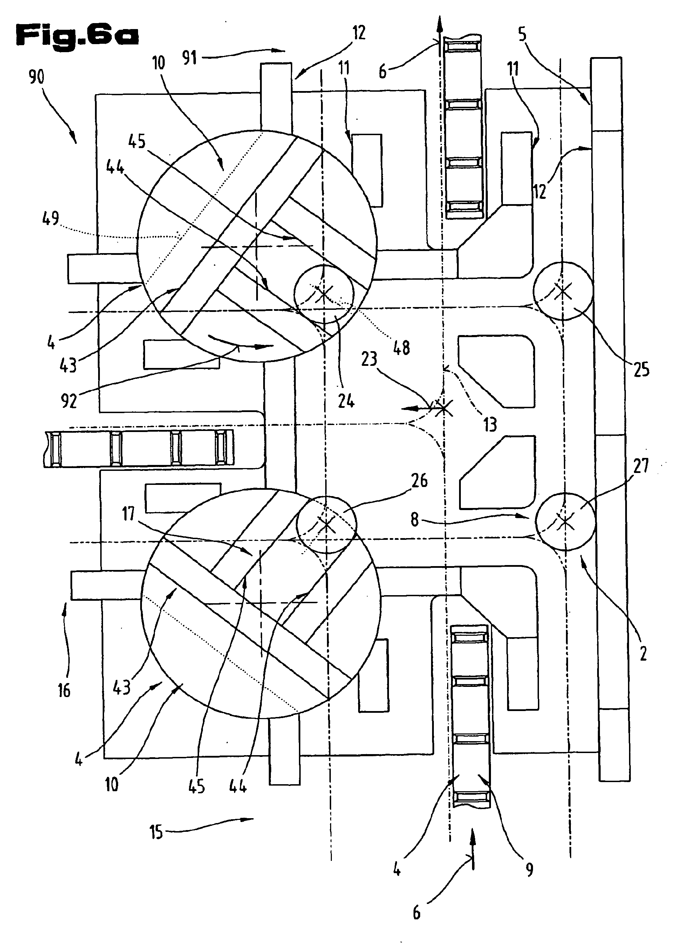

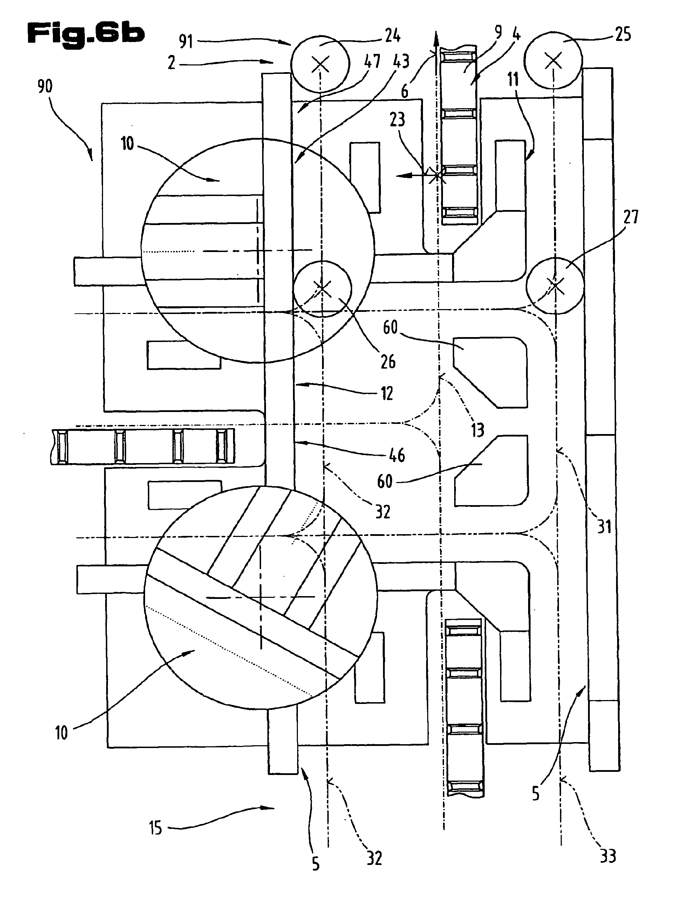

In den Fig. 5a bis 5d bzw. Fig. 6a und 6b ist eine weitere und gegebenenfalls für sich eigenständige Ausführungsform der Übergabevorrichtung 14 gezeigt, wobei wiederum für gleiche Teile gleiche Bezugszeichen bzw. Bauteilbezeichnungen in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Die in den Fig. 5a bis 5d bzw. 6a und 6b gezeigte Übergabevorrichtung 14 ist durch eine Übergabevorrichtung 90 gebildet, welche einen Teileträger 2 von einem ersten Förderabschnitt 15 auf einen zweiten Förderabschnitt 16 leiten bzw. abzweigen kann oder den Teileträger 2 vom ersten Förderabschnitt 15 auf einen dritten Förderabschnitt 91 leiten kann. Die Übergabevorrichtung 90 kann somit als Weiche für den Teileträger 2 gesehen werden. Vorzugsweise ist dabei die Bewegungsrichtung 6 des Teileträgers 2 im ersten Förderabschnitt 15 parallel bzw. fluchtend mit einer möglichen Bewegungsrichtung 6 im dritten Förderabschnitt 91. Die mögliche Bewegungsrichtung 6 des Teileträgers 2 im zweiten Förderabschnitt 16 ist bevorzugt winkelig zu einer Bewegungsrichtung 6 des ersten Förderabschnittes 15 und/oder des dritten Förderabschnittes 91. Beispielsweise beträgt ein Winkel zwischen der Bewegungsrichtung 6 des ersten Förderabschnitts 15 und der Bewegungsrichtung 6 des zweiten Förderabschnitts 16 zwischen 30° und 150°, insbesondere in etwa 90°. Dadurch ergibt sich eine in etwa Y- oder T-förmige Kreuzung.

Um den Teileträger 2 entlang den Förderabschnitten 15, 16, 91 zu bewegen, weisen diese vorzugsweise jeweils eine Vorschubvorrichtung 4 auf, insbesondere einen Zugmitteltrieb 9, durch welche der Teileträger form- oder reibschlüssig angetrieben wird und somit der Übergabevorrichtung 90 zugeführt bzw. von der Übergabevorrichtung 90 weggeführt wird. Der Antrieb des Teileträgers 2 erfolgt dabei vorzugsweise so, wie bereits in den vorangegangenen Figuren beschrieben.

Um den Teileträger 2 durch die Übergabevorrichtung 90 abzuzweigen bzw. weiter zu leiten, weist die Übergabevorrichtung 90 zumindest zwei Drehscheiben 10 auf, welche zur Führung bzw. Antriebsübertragung des Teileträgers 2 dienen bzw. ausgebildet sind. Die Drehscheiben 10 können dabei so wie in den bereits vorangegangenen Figuren beschrieben, ausgebildet bzw. angeordnet sein.

Zur Führung des Teileträgers 2 umfasst die Übergabevorrichtung 19 die an dieser feststehend angeordneten Führungsbahnen 5. Die Führungsbahnen 5 der Übergabevorrichtung 90 verbinden den ersten, zweiten und dritten Förderabschnitt 15, 16, 91 direkt oder indirekt über die Drehscheiben 10. Eine direkte Verbindung ist beispielsweise durch die außenliegende Führungsbahn 12, die den ersten Förderabschnitt 15 mit dem dritten Förderabschnitt 91 verbindet und die der Drehscheiben 10 gegenüberliegend angeordnet ist, gegeben. Eine indirekte Verbindung über die Drehscheiben 10 erfolgt durch auf den Drehscheiben 10 angeordnete Führungsbahnen 43, 44, 45, durch welche der Teileträger 2 bzw. ein oder mehrere Führungsorgane 7 zumindest abschnittsweise geführt sind. Die Führungsbahnen 5, insbesondere die innenliegenden Führungsbahnen 11 und/oder die außenliegenden Führungsbahnen 12, führen gemeinsam mit den zwei Drehscheiben 10 der Übergabevorrichtung 19 den Teileträger 2 entlang den Führungslinien 30, 31, 32, 33. Gegebenenfalls kann eine Führung des Teileträgers 2 auch durch eine Vorschubvorrichtung 4 des ersten, zweiten und/oder dritten Führungsabschnittes 15, 16, 91, insbesondere durch den Zugmitteltrieb 9, erfolgen.

In den Bereichen 51, 52, 53, 54 einer Abzweigung und/oder eines Bogens der Führungslinien 30, 31, 32, 33 sind vorzugsweise Bogenelemente 60 angeordnet, um den Teileträger 2 bzw. die Führungsorgane 7 des Teileträgers 2 in einem Kurvenbereich mit den Führungslinien 30, 31, 32,33 zu führen. Die Bogenelemente 60 weisen dabei vorzugsweise einen Führungsbahnbogen 63 auf, welcher beispielsweise einen Radius 65 - Fig. 2c - zwischen 2 mm und 10 mm aufweisen.

Eine weitere Variante der Bogenelemente 60 sieht vor, dass diese einen Führungsbahnbogen 63 aufweisen, welcher keinen konstanten Radius 65 aufweisen, sondern bei welchem sich der Radius des Führungsbahnbogens 63 bzw. des Bogenelementes 60 entlang des Führungsbahnbogens 63 kontinuierlich ändert. Vorzugsweise weist der Führungsbahnbogen 63 zu Beginn, d.h. in einem Bereich in dem eine gerade verlaufende Führungsbahn 5 in den Bogen übergeht, eine geringe Krümmung, insbesondere eine Krümmung, die gegen null geht, auf, welche sich anschließend erhöht und sich gegen Ende des Führungsbahnbogens 63, d.h. in einem Bereich in dem der Führungsbahnbogen 63 weder in eine gerade Führungsbahn 5 übergeht, verringert bzw. gegen null geht. Der jeweilige momentane Radius des Führungsbahnbogens 63 verhält sich zur Krümmung des Führungsbahnbogens 63 reziprok. Durch eine derartige Ausgestaltung des Führungsbahnbogens 63 kann ein schlagartiges Auftreten einer durch eine Umlenkung entstehenden Fliehkraft, welche vom Radius des Führungsbahnbogens 63 abhängig ist, verhindert werden. Ein derartig ausgestalteter Führungsbahnbogen 63 weist besonders beim Transportieren von Flüssigkeiten in einem offenen Gefäß, beispielsweise von Blut in Blutprobenröhrchen, Vorteil auf, da dadurch ein Herausspritzen der Flüssigkeit verhindert werden kann.

An dieser Stelle sei angemerkt, dass die Lagen der Drehscheiben 10 bzw. deren Drehachsen 19 bzw. die Größe und Form der Drehscheiben 10 bzw. der auf der Drehscheibe 10 angeordneten Führungsbahnen 43, 44, 45 sowie die Anordnung bzw. Position der Führungsbahnen 43, 44, 45 der Drehscheibe 10 zueinander und/oder zu den auf der Übergabevorrichtung 14, 22, 90 angeordneten, feststehenden Führungsbahnen 5, insbesondere der inneren Führungsbahnen 11 und/oder der äußeren Führungsbahnen 12, derart gewählt sind, dass die Position bzw. der dynamische Zustand des Teileträgers 2 auf der Übergabevorrichtung 14, 22, 90 zumindest entlang großer Bewegungsabschnitte eindeutig durch die Stellung der Drehscheiben 10 bestimmt ist.

Im Folgenden wird anhand der Fig. 5a bis Fig. 5d der Ablauf des Überschiebens mit einer Bewegungsrichtungsänderung von 90° des Teileträgers 2 mittels der Übergabevorrichtung 91 beschrieben.

In einem ersten Schritt wird der Teileträger 2 entlang des ersten Förderabschnittes 15 mittels der Vorschubrichtung 4, insbesondere des Zugmittelträger 9, zur Übergabevorrichtung 90 entlang von innenliegenden Führungsbahnen 11 und/oder außenliegenden Führungsbahnen 12 in Bewegungsrichtung 6 zugeführt. Die Stellung einer ersten Drehscheibe 10, welche den ersten Förderabschnitt 15 näher liegt, befindet sich in einer Überführstellung, in welcher das erste Führungsorgan 24 des Teileträgers 2 parallel zur Bewegungsrichtung 6 des ersten Förderabschnittes 15 über die Drehscheibe 10 geführt wird. Die Drehscheibe 10 weist hierfür die erste Führungsbahn 43 auf, welche zwei feststehende Führungsbahnen 5 der Übergabevorrichtung 90 geradlinig miteinander verbindet. Die erste Führungsbahn 43 der Drehscheibe 10 bildet mit den Führungsbahnen 5 des ersten Förderabschnittes 15 parallele, in Bewegungsrichtung 6 des ersten Förderabschnittes 15 quer gegenüberliegende Führungsbahnen aus, wodurch der Teileträger 2 gegen Bewegungen, die quer zur Bewegungsrichtung 6 des ersten Förderabschnittes 15 liegen, gesichert ist. Zum Überfahren des ersten Führungsorgans 24 des Teileträgers 2 wird die Drehscheibe 10 bevorzugt nicht gedreht.

In einem weiteren Schritt wird die erste Drehscheibe 10 unmittelbar nach dem Verlassen des ersten Führungsorgans 24 des Teileträgers 2 und noch bevor das dritte Führungsorgan des Teileträgers 2 in den Wirkungsbereich der ersten Drehscheibe 10 gelangt, in eine Aufnahmestellung für das dritte Führungsorgan 26 des Teileträgers 2 durch die zweite Führungsbahn 44 und gegebenenfalls die dritte Führungsbahn 45 gedreht. Die Aufnahmestellung der ersten Drehscheibe 10 für das dritte Führungsorgan 26 weist dabei eine bestimmte bzw. definierte Position, eine bestimmte Geschwindigkeit, eine bestimmte Beschleunigung und gegebenenfalls eine vorbestimmte zeitliche Änderung der Beschleunigung auf. Als Stellung oder Position, Geschwindigkeit, Beschleunigung und Änderung der Beschleunigung in Bezug auf die Drehscheibe 10 sind hier Winkelstellungen oder Winkelpositionen, die Winkelgeschwindigkeit, die Winkelbeschleunigung und die Änderung der Winkelbeschleunigung zu verstehen.

Die Stellung, Geschwindigkeit, Beschleunigung und gegebenenfalls die zeitliche Änderung der Beschleunigung der Drehscheibe 10 in einer Aufnahmestellung sind vorzugsweise dem aufzunehmenden Führungsorgan 7 angepasst, sodass eine ruckfreie Übernahme erfolgen kann.

Nach dem Aufnehmen des dritten Führungsorganes 26 durch die erste Drehscheibe 10 wird der Teileträger 2 mittels der ersten Drehscheibe 10 und dem dritten Führungsorgan 26 entlang der Führungslinien 30, 31, 32, 33 angetrieben bzw. geführt. In einem weiteren Schritt wird eine zweite Drehscheibe 10 in einen Zustand gebracht, in der die zweite Drehscheibe 10 das erste Führungsorgan 24 des Teileträgers 2 mittels der auf der Drehscheibe befindlichen und mit dieser verbundenen Führungsbahnen 44, 45 aufgenommen werden kann. Dies bedeutet unter anderem, dass die zweite Drehscheibe 10 noch vor einem Erreichen des ersten Führungsorganes 24 der zweiten Drehscheibe 10, die zweite Drehscheibe 10 in Bewegung gesetzt wird, sodass die Führungsbahnen 44, 45 der zweiten Drehscheibe 10 bis zum ersten Kontakt der zweiten Drehscheibe 10 bzw. der Führungsbahnen 44, 45 der zweiten Drehscheibe 10 mit dem ersten Führungsorgan 24 des Teileträgers 2 eine an die Position, die Geschwindigkeit, die Beschleunigung und gegebenenfalls an die zeitliche Änderung der Beschleunigung des ersten Führungsorgans 24 bzw. des Teileträgers 2 angepasst sind. Dies ermöglicht ein ruck- bzw. stoßfreies Aufnehmen des ersten Führungsorgans 24 des Teileträgers 2 durch die Übertragungsmittel 17 der zweiten Drehscheibe 10.

Zur Koordination der Bewegung der Drehscheiben 10 und gegebenenfalls zur Koordination der ersten Drehscheibe 10 und der zweiten Drehscheibe 10 mit den Vorschubvorrichtungen 4, insbesondere den Zugmitteltrieben 9, der an die Übergabevorrichtung 90 anschließenden Förderabschnitte 15, 16, 91 weiterer Transportmodule 3 - Fig. 1 - werden diese mit Hilfe einer Synchronisationstabelle synchronisiert. Zur Auswertung bzw. Anwendung der Synchronisationstabelle werden gegebenenfalls noch weitere Sensordaten, wie beispielsweise von Sensoren auf der Übergabevorrichtung 90, von Sensoren auf weiteren Transportmodulen 3 und/oder von Sensoren am Teileträger 2, herangezogen. Mit Hilfe der bevorzugt in einem Datenträger einer Steuervorrichtung für die Transportanlage 1 - Fig. 1 - gespeicherten Synchronisationstabelle, werden dann die Antriebsvorrichtungen 74 - Fig. 4 -über die Steuervorrichtung angesteuert und gegebenenfalls geregelt.

Um die zweite Drehscheibe 10 in einen Zustand zum Aufnehmen des ersten Führungsorganes 24 des Teileträgers 2 zu bringen, wird diese bereits vor dem Erreichen des ersten Führungsorganes 24 der zweiten Drehscheibe 10 in einer Drehrichtung 92 bewegt.

Nach dem Aufnehmen des ersten Führungsorganes 24 durch die zweite Drehscheibe 10 bzw. den Führungsbahnen 44, 45 der zweiten Drehscheibe 10, wird diese im Uhrzeigersinn weiter gedreht, während die erste Drehscheibe 10, welche das dritte Führungsorgan 26 durch die Führungsbahnen 44, 45 der ersten Drehscheibe 10 führt bzw. antreibt, im Gegenuhrzeigersinn gedreht. Dadurch wird die Bewegungsrichtung 6 des Teileträgers 2, ausgehend vom ersten Förderabschnitt 15 auf eine in etwa 90 ° zu dieser stehenden Bewegungsrichtung 6 des zweiten Förderabschnittes 16 überschoben. Als Überschieben wird hier ein Ändern der Bewegungsrichtung 6 des Teileträges 2 ohne Ändern der Orientierung 23 des Teileträgers 2 verstanden. Die Orientierung 23 des Teileträgers 2 im zweiten Förderabschnitt 16 ist daher parallel zur Orientierung 23 des Teileträgers 2 im ersten Förderabschnitt 15.

Der Teileträger 2 wird durch die erste und die zweite Drehscheibe 10 so lange angetrieben, bis der Teileträger 2 von einer Vorschubvorrichtung 4, insbesondere einem Zugmitteltrieb 9, des Transportmoduls 3 - Fig. 1 - des zweiten Förderabschnittes 16 übernommen und angegeben werden kann. Optional kann der Teileträger 2 vor dem Erreichen der Vorschubvorrichtung 4 des Transportmoduls 3 des zweiten Förderabschnittes 16 durch die Drehscheiben 10 schneller oder langsamer bewegt werden, insbesondere auch eine bestimmte, voreinstellbare Haltezieit zurückgehalten werden, sodass das Intervall zwischen einem ersten Teileträger 2 und einem nachfolgenden Teileträger 2 weiteren Bearbeitungsschritten angepasst werden kann, insbesondere das Intervall vergrößert oder verkleinert werden kann.

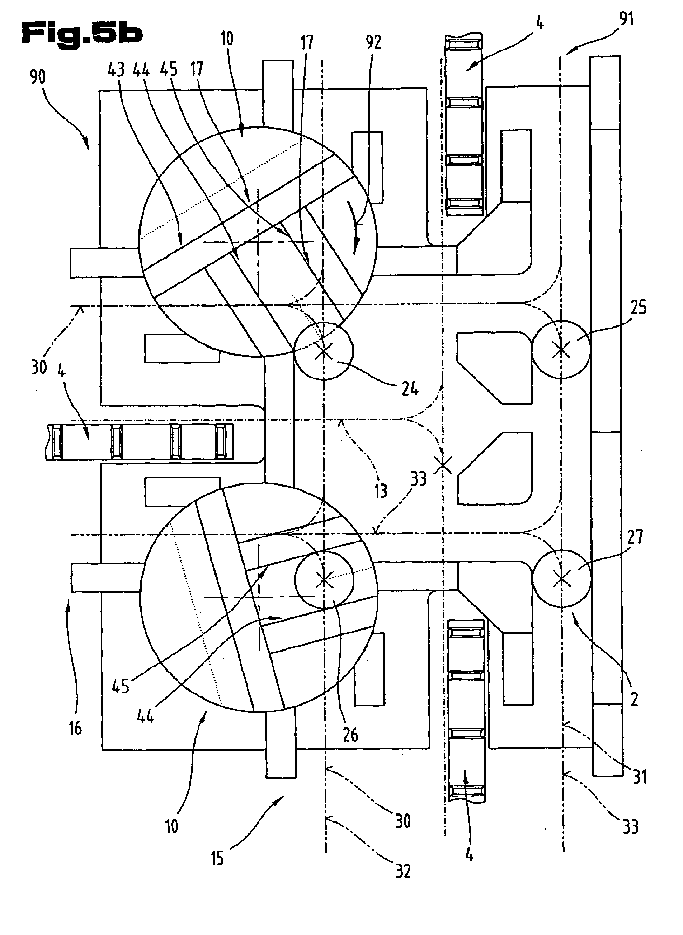

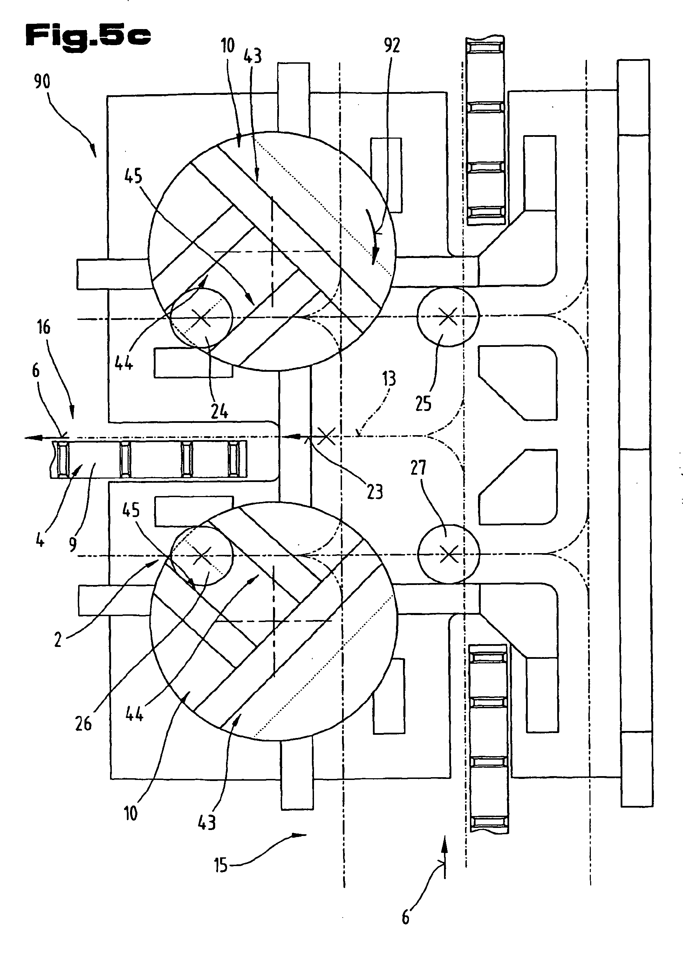

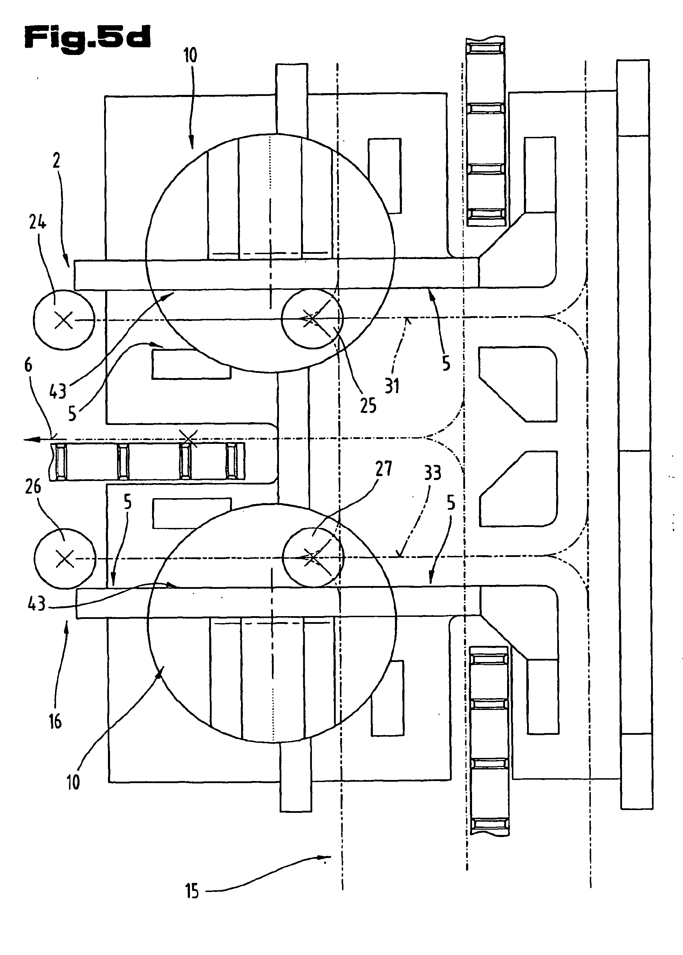

Sobald das erste Führungsorgan 24, die zweite Drehscheibe 10 und das dritte Führungsorgan 26 die erste Drehscheibe 10 bzw. jeweils deren Führungsbahnen 44, 45 verlassen haben bzw. aus deren Wirkungsbereich geführt wurden, werden die erste und die zweite Drehscheibe 10 bzw. deren erste Führungsbahnen 43 in eine, wie in Fig. 5 d gezeigte Überführstellung, gedreht. In dieser Überführstellung werden das zweite Führungsorgan 25 und das vierte Führungsorgan 27 des Teileträgers 2 gegen Bewegungen, die quer zur Bewegungsrichtung 6 des zweiten Führungsabschnittes 16 liegen, gesichert und entlang der Führungslinien 31, 33 geführt. Die erste und zweite Drehscheibe 10 der Übergabevorrichtung 90 stehen vorzugsweise während des Überführens des zweiten Führungsorganes 25 und des vierten Führungsorganes 27 des Teileträgers 2 still und bilden durch jeweils die erste Führungsbahn 43 gemeinsam mit den auf der Übergabevorrichtung 90 fest stehend angeordneten Führungsbahnen 5 parallele, in Bewegungsrichtung 6 des zweiten Förderabschnittes 16 quer gegenüberliegende Führungen.

In den Fig. 6a und 6b werden Verfahrensschritte beschrieben, durch welche der Teileträger 2 zumindest annähernd geradlinig über die Übergabevorrichtung 90 geführt wird. Die Stellung der Drehscheiben bei Ankunft des Teileträgers 2 auf der Übergabevorrichtung 90 entsprechen dabei dem wie zur Fig. 5a beschriebenen Schritte. D.h. der Teileträger 2 wird mittels der Vorschubvorrichtung 4, insbesondere ein Zugmitteltrieb 9, des vorgehenden Transportmodules 3 - Fig. 1- zur Übergabevorrichtung 90 zugeführt. Die erste Drehscheibe 10 befindet sich in einer Überführstellung, in welcher das erste Führungsorgan 24 des Teileträgers 2 mittels der ersten Führungsbahn 43 der ersten Drehscheibe 10 in einer zum ersten bzw. dritten Förderabschnittes 15, 91 parallelen Richtung geführt wird. Nachdem das erste Führungsorgan 24 des Teileträgers 2 den Wirkungsbereich der ersten Drehscheibe 10 bzw. der ersten Führungsbahn 43 der ersten Drescheibe 10 verlassen hat und bevor das dritte Führungsorgan 26 die erste Drehscheibe 10 bzw. den Wirkungsbereich der ersten Drehscheibe 10 erreicht hat, wird die erste Drehscheibe 10 in einen Zustand zum Aufnehmen des dritten Führungsorganes 26 gebracht. Dabei wird wiederum die Winkelstellung, die Drehgeschwindigkeit, die Drehbeschleunigung und gegebenenfalls die Innerung der Drehbeschleunigung der ersten Drehscheibe 10 der Position, Geschwindigkeit, Beschleunigung und gegebenenfalls Änderung der Beschleunigung des dritten Führungsorgans 26 des Teileträgers 2 angepasst, um ein ruckfreies Aufnehmen des dritten Führungsorganes 26 durch die zweite Führungsbahn 44 und gegebenenfalls die dritte Führungsbahn 45 der ersten Drehscheibe 10 zu ermöglichen.

Bevor das erste Führungsorgan 24 des Teileträgers 2 die zweite Drehscheibe 10 der Übergabevorrichtung 90 erreicht, wird die zweite Drehscheibe 10 bzw. die zweite und gegebenenfalls die dritte Führungsbahn 44, 45 der zweiten Drehscheibe 10 in einen Zustand gebracht, in welchen das erste Führungsorgan 24 von der zweiten Drehscheibe 10 aufgenommen werden kann. Dieser Zustand zum geradlinigen Weiterleiten des Teileträgers 2 über die Übergabevorrichtung 90 unterscheidet sich zumindest dadurch vom Zustand zum Umlenken des Teileträgers 2, insbesondere zum 90 ° Umlenken des Teileträgers 2, dass die Drehrichtung 92 der zweiten Drehscheibe 10 gleich ist, wie die Drehrichtung der ersten Drehscheibe 10. Der Zustand der zweiten Drehscheibe 10 zum geradlinigen Weiterleiten des Teileträgers ist wiederum der gewünschten Position des ersten Führungsorgans 24 bzw. der gewünschten Bewegungsbahn 13 des Teileträgers 2, der Geschwindigkeit, der Beschleunigung und gegebenenfalls der zeitlichen Änderung der Beschleunigung des ersten Führungsorgans 24 angepasst.

Nach dem Aufnehmen des zweiten Führungsorgans 26 durch die erste Drehscheibe 10 und dem Aufnehmen des ersten Führungsorgans 24 des Teileträgers 2 durch die zweite Drehscheibe 10, befindet sich die Übergabevorrichtung 90 bzw. der Teileträger 2 in einem wie in Fig. 6 a gezeigten Zustand. Dabei werden das erste Führungsorgan 24 und das dritte Führungsorgan 26 des Teileträgers 2 durch die erste bzw. zweite Drehscheibe 10 geführt bzw. angetrieben, während das zweite Führungsorgan 25 und das vierte Führungsorgan 27 des Teileträgers 2 entlang der geradlinig zwischen dem ersten Förderabschnitt 15 und dem dritten Förderabschnitt 91 verlaufenden Führungsbahn 5 und gegebenenfalls durch die an der Übergabevorrichtung 90 angeordneten inneren Führungsbahnen 11 und äußeren Führungsbahnen 12 geführt werden.

Nach dem Verlassen des dritten Führungsorganes 26 des Teileträgers 2 wird der Teileträger 2 durch die zweite Drehscheibe 10 bzw. das erste Führungsorgan 24, welches sich im Eingriff mit den Führungsbahnen 44, 45 der Drehscheibe 10 befindet, angetrieben. Das erste Führungsorgan 24 des Teileträgers 2 wird dabei von der zweiten Drehscheibe 10 so lange angetrieben, bis der Teileträger 2 von der Vorschubvorrichtung 4, insbesondere dem Zugmitteltrieb 9, des nachfolgenden Transportmoduls 3 übernommen wird. Nach dem Verlassen des ersten Führungsorgans 24 der zweiten Drehscheibe 10 bzw. des Wirkungsbereiches der zweiten Drehscheibe 10 und vor Erreichen des dritten Führungsorganes 26 der zweiten Drehscheibe 10 bzw. des Wirkungsbereiches der zweiten Drehscheibe 10 wird die zweite Drehscheibe 10 in eine Überführstellung gebracht. In dieser Überführstellung wird das dritte Führungsorgan 26 entlang der ersten Führungsbahn 43 der zweiten Drehscheibe 10, welche sich vorzugsweise parallel zu einer geradlinig den ersten Förderabschnitt 15 und dem dritten Förderabschnitt 91 verbindenden Führungsbahn 5 liegt und einen ersten Führungsbahnabschnitt 46 mit einem zweiten Führungsbahnabschnitt 47 geradlinig verbindet.

Um eine schnelle Taktzeit bzw. kurze Intervalle zwischen zwei Teileträgern 3 zu ermöglichen, kann die erste Drehscheibe 10, während die zweite Drehscheibe 10 sich in der Überführstellung befindet, wieder in eine Überführstellung oder eine Aufnahmestellung für ein weiteres Führungsorgan eines nachfolgenden Teileträgers gebracht werden. Zum Variieren der Taktzeit zwischen den Teileträgern 2 bzw. der Intervalle zwischen zwei Teileträgern 2 kann die Fördergeschwindigkeit des Teilträgers 2 während einer Stellung, wie sie beispielsweise in Fig. 6a gezeigt ist, verringert oder erhöht werden, insbesondere kann der Teileträger 2 in dieser Stellung eine bestimmte Zeit lang angehalten werden. Weiters kann dadurch eine Entkopplung zwischen zwei an die Übergabevorrichtung 14, 22, 90 anschließende Zugmitteltriebe bzw. Förderanlagen erfolgen.

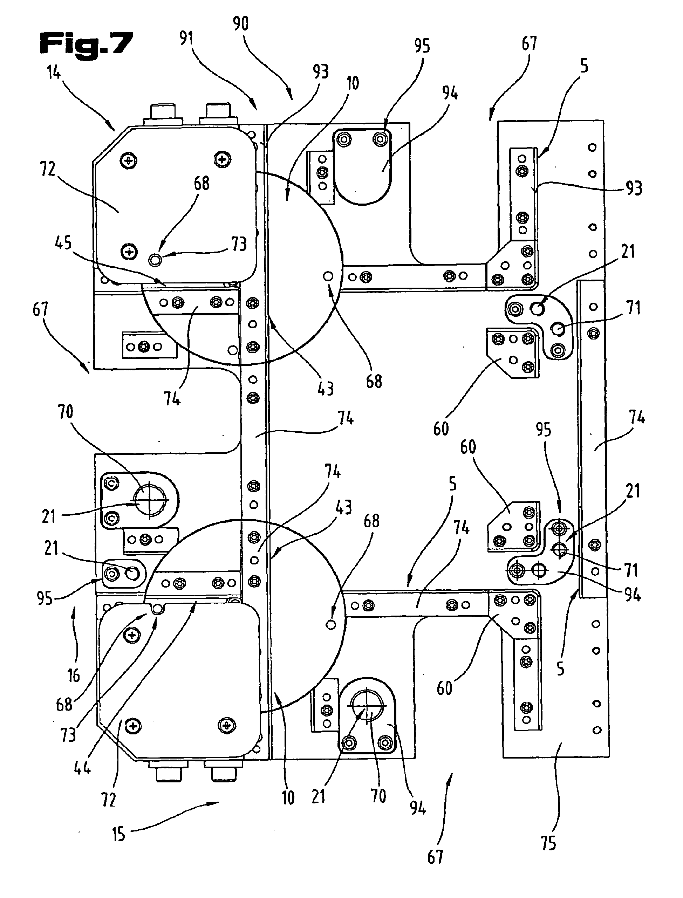

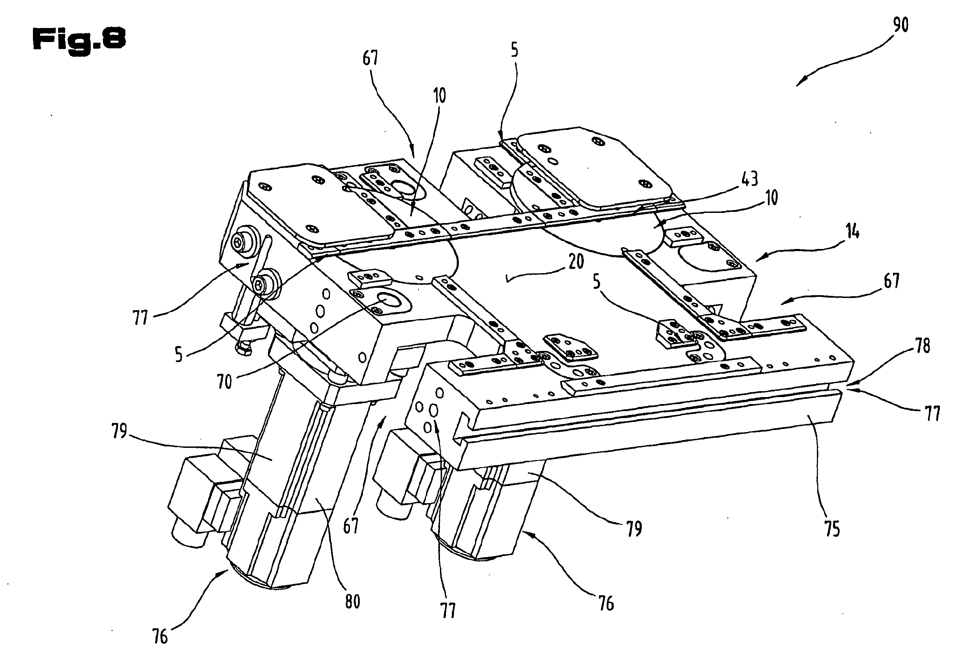

In den Fig. 7 und 8 ist eine weitere und gegebenenfalls für sich eigenständige Ausführungsform der Übergabevorrichtung 90 gezeigt, wobei wiederum für gleiche Teile gleiche Bezugszeichen bzw. Bauteilbezeichnungen, wie in den vorangegangenen Fig. 1 bis Fig. 6b verwendet werden. Um unnötige Wiederholungen zu vermeiden, wird auf die detaillierte Beschreibung in den vorangegangen Fig. 1 bis Fig. 6b hingewiesen bzw. Bezug genommen.

Die in den Fig. 7 und 8 gezeigte Übergabevorrichtung 14, 90 umfasst zumindest die zwei Drehscheiben 10, die feststehenden Führungsbahnen 5, die Sensoren 21 und gegebenenfalls Ausnehmungen 67, um Fördervorrichtungen bzw. Vorschubvorrichtungen 4 - Fig. 1 - von vorstehenden bzw. nachstehenden Transportmodulen 3 - Fig. 1 -, insbesondere den Zugmitteltrieb 9 - Fig. 1 - aufzunehmen.

Die in den Fig. 7 und 8 beschriebene Übergabevorrichtung 90 weist in ihrem Aufbau ähnliche und/oder gleiche Bauteile auf, wie die in den Fig. 3 und 4 beschriebene Übergabevorrichtung 22.

Die Übergabevorrichtung 90 ist dazu ausgebildet, einen Teileträger 2 - Fig. 1 - von einem ersten Förderabschnitt 15 zu einem zweiten Förderabschnitt 16 oder einem dritten Förderabschnitt 91, insbesondere in einer ähnlichen, wie in den Fig. 5a bis 5b bzw. der Fig. 6a und 6b beschriebenen Art und Weise, zu transportieren. Zur Führung und/oder Antriebsübertragung für einen Teileträger 2 - Fig. 1 - weist die Übergabevorrichtung 19, insbesondere die auf der Übergabevorrichtung 90 angeordneten Drehscheiben 10, feststehende bzw. beweglich angeordnete Führungsbahnen 5 auf. Die Führungsbahnen 5 weisen zu den Führungsorganen 7 - Fig. 9a, b -, insbesondere zu den Führungsrollen - Fig. 9a, b - komplementäre Führungsflächen auf. Der Querschnitt der Führungsflächen ist beispielsweise annähernd V-förmig oder auch ellipsen- oder halbkugelförmig ausgeführt. Um den Teileträger 2 - Fig. 9a, b - in einer auf die Transportebene 20 - Fig. 8 - spielfrei oder zumindest annähernd spielfrei, beispielsweise mit einem Spiel zwischen Führungsrolle 8 und Führungsbahn 5 bzw. Führungsfläche 93 in der Größenordnung von in etwa 0,05 mm bis 1 mm, insbesondere ca. 0,1 mm.

Die Führungsbahnen 5, insbesondere die auf der Übergabevorrichtung 90 feststehend angeordneten Führungsbahnen 5, sind beispielsweise auf geraden Führungsbahnelementen 74 und Bogenelementen 60, 61 angeordnet. In Bereichen, in welchen weitere Transportmodule 3 an die Übergabevorrichtung 90 anschließen, beispielsweise im Bereich eines ersten Förderabschnittes 15, zweiten Förderabschnittes 16 und/oder eines dritten Förderabschnittes 91, sind Führungsbahnelemente 74 angeordnet, welche beide Transportmodule 3 - Fig. 1 - insbesondere die Übergabevorrichtung 90 und ein daran anschließendes Transportmodul 3 überlappen. Durch diese Überschneidung dieser Führungsbahnelemente 74 können zwei Transportmodule 3 miteinander verbunden werden bzw. kann dadurch eine Verbesserung der Führungsübergänge zwischen den Transportmodulen erzielt werden.

Die Drehscheiben 10 der Übergabevorrichtung 90 umfassen vorzugsweise eine erste Führungsbahn 43, eine zweite Führungsbahn 44 und/oder eine dritte Führungsbahn 45, welche zur Führung und/oder Antriebsübertragung auf ein Führungsorgan 7 ausgebildet sind. Die Anordnung der Führungsbahnen 5 bzw. der Führungsbahnen 43, 44, 45 auf der Drehscheibe 10 ist dabei ähnlich ausgestaltet wie die Anordnung der Führungsbahnen 5 bzw. der Führungsbahnen 43, 44, 45 auf der Drehscheibe 10 der zur Fig. 3 beschriebenen Ausführungsvariante.

Vorzugsweise knapp oberhalb der Drehscheibe 10 der Übergabevorrichtung 90 sind, wie insbesondere in Fig. 3 schon beschrieben, Überdeckungselemente 72 angeordnet, welche mit der Übergabevorrichtung 91, insbesondere durch eine Schraubverbindung, verbunden sind. Das Überdeckungselement 72 kann dabei die Ausnehmung 73, insbesondere eine Nut oder Bohrung aufweisen, welche ein Fenster für einen Lichtschrankensensor zum Detektieren des Mittels 68 zur Bestimmung einer Referenzstellung der Drehscheibe 10 bilden. Es ist auch möglich, andere und/oder weitere Vorrichtung zur Bestimmung einer Referenzstellung der Drehscheibe 10 auf dem Überdeckungselement 72 und/oder auf der Übergabevorrichtung 90 anzuordnen. Beispielsweise kann diese Vorrichtung zur Bestimmung einer Referenzstellung der Drehscheibe 10 durch einen induktiven Sensor gebildet werden, welcher einen in der Drehscheibe eingebauten Magneten, ein eingebautes ferromagnetisches Element, eine Erhebung oder eine Vertiefung, insbesondere eine Ausnehmung in der Drehscheibe erfassen kann.

Zur Bestimmung der Position bzw. eines Bewegungszustandes des Teileträgers 2 - Fig. 9a, b - bzw. der Führungsorgane 24, 25, 26, 27 - Fig. 5a - des Teileträgers 2 sind entlang der Führungsbahnen 5 bzw. im ersten Förderabschnitt 15, im zweiten Förderabschnitt 16 und/oder im dritten Förderabschnitt 91 die Sensoren 21, 70, 71 am Montageelement 75 angeordnet. Die Sensoren 70 können dabei erkennen, ob bzw. wann der Teileträger 2 die Übergabevorrichtung 90 erreicht bzw. verlässt. Die Sensoren 70 sind vorzugsweise in einem Bereich, welche an weitere Transportmodule 3 - Fig. 1 - angrenzt, angeordnet. Die Sensoren 70 sind zur Lage- und/oder Präsenzerkennung des Teileträgers 2 und/oder zur Erkennung eines Bewegungszustandes des Teileträgers 2, beispielsweise der Position, der Geschwindigkeit, der Beschleunigung und/oder der zeitlichen Änderung der Beschleunigung, ausgebildet. Die Erfassungsdistanz der Sensoren 70 liegt beispielsweise zwischen 2 mm und 30 mm. Die Sensoren 70 sind an ein Prozessleitsystem angeschlossen bzw. mit diesem verbunden und können einer Ablaufsteuerung mitteilen, wann ein Vorgang zum Überschieben gestattet bzw. eingeleitet werden soll.

Zur genaueren Lageänderung des Teileträgers 2 - Fig. 1 - sind entlang der Führungsbahnen 5 die Sensoren 71 angeordnet, welche zur Erfassung der Führungsorgane 7 des Teileträgers 2 ausgebildet sind. Die, insbesondere induktiv messenden, Sensoren 71 können zur präzisieren Lagebestimmung des Teileträgers 2 herangezogen werden. Aufgrund des geringeren Abstandes zwischen den Sensoren 71 und den durch die Sensoren 71 detektierbaren Führungsorgane 7 - Fig. 9a, b - des Teileträgers 2 weisen die Sensoren 71 einen Messbereich zwischen 0,1 mm bis ca. 5 mm auf. Zur besseren Steuerung werden die Signale der Sensoren 70, 71 der Steuerung bzw. insbesondere einer Programmlogik der Steuerung mitgeteilt bzw. in dieser eingebunden.

Um die Sensoren 21 besser montieren zu können bzw. diese leichter warten zu können, sind die Sensoren 21 vorzugsweise auf einem Halterelement 94 durch eine Verbindungsvorrichtung, insbesondere durch eine Schraubverbindung, am Halteelement 74 befestigt. Die Sensoren 21 können am Halteelement 74 auch durch eine Klebeverbindung befestigt sein. Das Halteelement 94 weist wiederum eine Verbindungsvorrichtung 95 auf, durch welche das Halteelement 94 mit dem Montageelement 75 verbunden ist. Die Verbindungsvorrichtung 95 ist beispielsweise durch ein oder zwei Schrauben gebildet. Die Verbindungsvorrichtung 95 kann auch eine Schnappverbindung umfassen. Das Halteelement 94 für einen Sensor 21 bildet vorzugsweise mit dem Montageelement 75 und/oder dem Sensor 21 eine zumindest annähernd ebene Fläche aus. Es ist auch möglich, dass an der Übergabevorrichtung 90 bzw. am Montageelement 75 Halteelemente 94 angeordnet sind, welche eine Ausnehmung für einen Sensor 21 abdecken. An Stellen, an denen Montageelemente 75 eine Ausnehmung für einen Sensoren 21 ausgebildet ist, der Sensor 21 für die Steuerung jedoch nicht zwingend notwendig ist, kann dadurch diese Ausnehmung abgedeckt werden.

In Fig. 8 ist eine perspektivische Ansicht der in Fig. 7 gezeigten Ausführungsform der Übergabevorrichtung 90 dargestellt. Dabei ist die Verbindungsvorrichtung 77, insbesondere die Nut 78, zu sehen, durch welche die Übergabevorrichtung 90 mit weiteren Übergabevorrichtungen 14 und/oder Transportmodulen 3 und/oder einem Traggerüst für Transportmodule 3 verbunden werden kann. Die Nut 78 ist vorzugsweise durch eine parallel zur Transportebene 20 verlaufende T-förmige Nut gebildet. Die Verbindungsvorrichtung 77 kann dabei weiters in einem Übergangsbereich zu einem an die Übergabevorrichtung 90 angeschlossenen Transportmodul 3 - Fig. 1- Zentzierelemente, beispielsweise Zentrierbohrungen oder Passbohrungen für Passstifte, oder weitere Befestigungsvorrichtung beispielsweise Gewinde oder weitere T-Nuten, aufweisen.

Weiters sind in Fig. 8 die Antriebsvorrichtungen 76, welche beispielsweise durch Elektromotoren 79, insbesondere Servomotoren 80, gebildet sind, gezeigt. Die Antriebsvorrichtungen 76 können beispielsweise auch durch Getriebemotoren gebildet sein.

In den Fig. 9a und Fig. 9b ist der Teileträger 2 dargestellt, welcher an seiner Unterseite, also jener Seite, welche den Führungsbahnen 5; 11, 12; 43, 44, 45 bzw. der Übergabevorrichtung 14; 22 zugewendet ist, Führungsorgane 7 mit einer am Außenumfang angeordneten nutförmigen Vertiefung 81 zur Höhen- und/oder Seitenführung aufweist. Diese Führungsorgane 7 können beispielsweise durch um senkrecht zu einer Transportebene 20 - Fig. 1 - ausgerichtete Achsen 82 und daran angeordnete rotierende Führungsrollen 82 gebildet sein. Dabei ist bevorzugt die nutförmige Vertiefung 81 der Führungsorgane 7 gegengleich zu einem V-förmig ausgebildeten Querschnitt der Führungsbahnen 5; 11, 12; 43, 44, 45 ausgebildet.

Die Führungsorgane 7 sind am Teileträger 2 an einander gegenüberliegenden Seiten jeweils in Eckbereichen angeordnet, wobei die Führungsorgane 7 zumindest im Bereich der Förderabschnitte 15, 16 mit den dort vorgesehenen Führungsbahnen 5, 11, 12 zusammenwirken. Der Teileträger 2 ist bevorzugt quadratisch ausgebildet, wobei die Führungsorgane 7 bzw. die diese bildenden Führungsrollen 83 auf einer der Transportebene 20 zugewandten Unterseite 84 am Teileträger 2 angeordnet sind.

Weiters ist es vorteilhaft, wenn der Teileträger 2 zumindest eine in senkrechter Richtung bezüglich der Transportebene 20 durchdringende Durchsetzung 34 aufweist, wobei diese Durchsetzung 85 bevorzugt im Zentrum des Teileträgers 2 angeordnet ist. Unabhängig davon wäre es aber auch möglich, die Durchsetzung 85 nicht nur im Zentrum des Teileträgers 2 sondern auch mehrere derselben im Bereich von Diagonalen des Teileträgers 2 anzuordnen. Gleichfalls wäre aber auch eine Kombination der Anordnungsmöglichkeiten denkbar.

Weiters weist der Teileträger 2 Eingriffselemente 86 auf, welche zueinander kreuzförmig sowie durch das Zentrum und desselben verlaufend angeordnet sind. Die zahnstangenähnlichen Eingriffselemente 86 können mit einer Vorschubvorrichtung 4, insbesondere einem Zugmitteltrieb 9, in Eingriff gebracht werden.

Zur Erzielung einer gesicherten Vorschubbewegung und dem damit verbundenen eindeutigen Bewegungsablauf des Teileträgers 2 stehen die Führungsbahnen 5 der Übergabevorrichtung 14, 22 zumindest im Bereich der Förderabschnitte 15, 16 mit den jeweils einander zugewendeten Seiten der Führungsorgane 7 des Teileträgers 2 im Eingriff. An der Obergabevorrichtung 5, 14 können zur Aufnahme sowie Führung des Teileträgers 2 innen liegende Führungsbahnen 11 für die Führungsorgane 7 des Teileträgers 2 mit der nutförmigen Vertiefung 8 angeordnet sein. Dabei sind die innen liegenden Führungsbahnen 11 der Übergabevorrichtung 14, 22 derart an dieser angeordnet, dass diese mit den jeweils einander zugewendeten Seiten der Führungsorgane 7 des Teileträgers 2 in Eingriff stehen. Dies bedeutet, dass die innen liegenden Führungsbahnen 11 wiederum auf den voneinander abgewendeten Seiten jeweils einen V-förmig ausgebildeten und in entgegen gesetzter Richtung zusammenlaufenden Querschnitt aufweisen. Dadurch wird eine Platz sparende Anordnung der Führungsbahnen 11 an der Übergabevorrichtung erzielt.

Zur Erzielung einer reibungslosen Übergabe- und/oder Übernahme des Teilträgers 2 von bzw. zu einem Transportmodul 3 ist es vorteilhaft, wenn die Führungsbahnen 5, 11, 12 Übergabevorrichtung das der Übergabevorrichtung 14, 22 zugewendete Ende des ersten oder zweiten Förderabschnitts 15, 16 in Richtung auf das an die Übergabevorrichtung anschließende Transportmodul 3 hin überragen. Dadurch ist ein Übergreifen der Vorschubvorrichtung 4 während dem Transport des Teileträgers 2 und damit ein Eingriff mit den daran angeordneten Eingriffselementen 10 sichergestellt.

Wenn sich der Teileträger 2 mit seinen darauf angeordneten, jedoch hier nicht näher dargestellten Bauteilen im Bereich einer Arbeitsstation befindet, erfolgt eine Abtragung des Eigengewichtes, sowie der gegebenenfalls darauf wirkender Bearbeitungskräfte, ausgehend von den Führungsorganen 7 mit den darin angeordneten V-förmigen Vertiefungen 81 auf die Führungsbahnen 5. Dies kann zu Beschädigungen der Lageranordnung, der Führungsorgane 7 sowie der Führungsbahnen 5 führen. Dazu kann der Teileträger 2 bei einer sich an der Übergabevorrichtung 14, 22 oder Transportmodul 3 befindlichen Position und bei in Eingriff stehenden Führungsorganen 7 mit den Führungsbahnen 5 der Übergabevorrichtung oder des daran angeschlossenen Transportmoduls 3 in senkrechter Richtung bezüglich der Transportebene 20 angehoben und senkrechter Richtung bezüglich der Transportebene 20 an der Übergabevorrichtung 14, 22 abgestützt werden. Dazu weist der Teileträger 2 an seiner Unterseite 84 bereichsweise angeordnete Stützteile 87 auf, welche bevorzugt den Nahbereich der Führungsorgane 7 angeordnet sind. Diese Stützteile 87 sind, wie dies am besten aus der Fig. 9a zu ersehen ist, in etwa L-förmig ausgebildet und dienen zur Abtragung von Vertikallasten. Um eine längere exakte, höhenmäßige Abstützung sowie einen geringeren Verschleiß zu erzielen, sind die Stützteile 87 aus einem verschleißfesten, harten Werkstoff, wie beispielsweise aus der Gruppe von Hartmetall, Stahl, Keramik, Kunststoff bzw. einer Kombination daraus, gebildet. So können die Stützteile 87 im Bereich von Diagonalen des Teileträgers 2 angeordnet sein, wobei sich diese zwischen den Führungsorganen 7 und dem Zentrum des Teileträgers 2 befinden.

Um einen universellen und in alle Fahrt- bzw. Vorschubrichtungen möglichen Einsatz des Teileträgers 2 in Verbindung mit den Stützteilen 87 zu erzielen, sind diese in etwa L-förmig ausgebildet und bilden so jeweils kreuzförmig bzw. parallel zueinander verlaufenden Stützflächen 87 aus. Unabhängig oder zusätzlich dazu wäre es aber auch noch möglich, dass der Teileträger 2 über Stirnflächen der Achsen 82 der Führungsrollen 83 an der Übergabevorrichtung 14, 22 abgestützt ist. In jedem Fall wird so der gesamte Teileträger 2 mit seinen Führungsorganen7 so weit relativ zur Übergabevorrichtung 14, 22 angehoben, dass die V-förmige Vertiefung 81 an den Führungsorganen 7 keine Lastübertragung auf die Führungsbahnen 5 durchführen. Dadurch ist es möglich, höhere Druckkräfte in senkrechter Richtung, wie diese beispielsweise bei Füge- oder Bearbeitungsvorgängen vorkommen können, auf den Teileträger 2 übertragen zu können, ohne dass dabei die exakt zusammenwirkenden Führungsorgane 7 mit den weiteren Führungsbahnen 5 Schaden erleiden bzw. eine Ungenauigkeit in der Positionierung auftritt.

Um während der Verstell- bzw. der Verfahrbewegungen der einzelnen Teileträger 2 entlang der Führungsbahnen 5 bzw. in den einzelnen Arbeitsstationen diese eindeutig identifizieren zu können, sind den Teileträgern 2 bevorzugt an ihrer Unterseite 84 Mittel zur Identifizierung zugeordnet. Diese können in den zwischen den Führungsrollen 7verlaufenden Randbereichen des Teileträgers 2 bzw. dessen Grundkörper angeordnet sein. Diese Mittel können beispielsweise durch Kennwertgeber, RFID-Transponder, RFID-Elemente bzw. Strichcodierungen, gebildet sein. Unter einem RFID-Element (Radio Frequency Identification Element) werden kontaktlos wirkende, chipgestützte Elemente, insbesondere so genannte Transponderelemente, verstanden. Diese Identifikationsmittel können beispielsweise in jeder Arbeitsstation ausgelesen werden und beispielsweise nach einem erfolgten Arbeits- bzw. Bearbeitungsschritt, dieser als zusätzliche Information an das Identifizierungsmittel übergeben und dort gespeichert werden. Dadurch ist es beispielsweise möglich, während der gesamten Verstellbewegungen des Teileträgers 2 in der Transportanlage 1 über jeden dieser Teileträger 2 eine eindeutige Information abrufen zu können. Damit kann die Wirtschaftlichkeit und Sicherheit der gesamten Transportanlage wesentlich erhöht und verbessert werden.

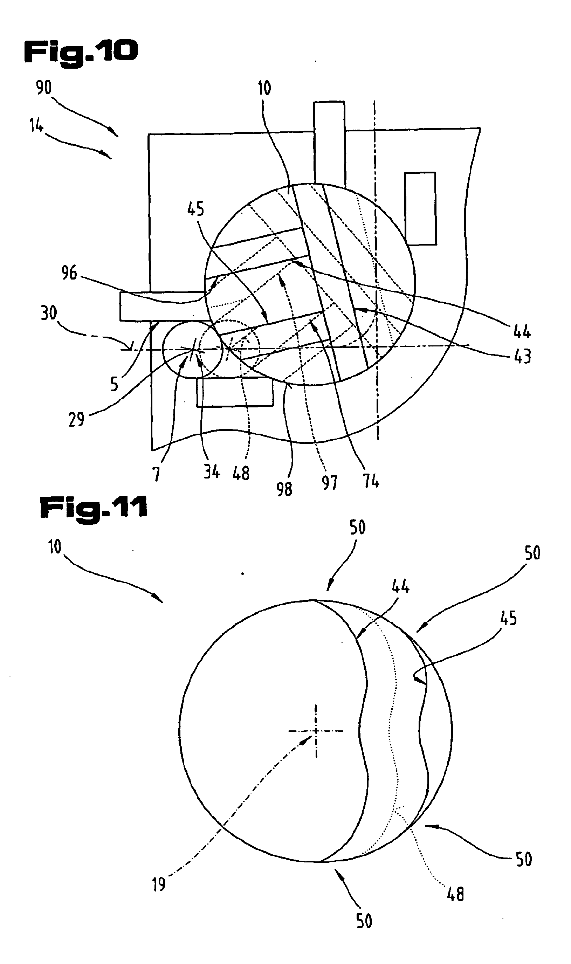

In Fig. 10 ist eine Detaildarstellung und gegebenenfalls für sich eigenständige Ausführungsform der Übergabevorrichtung 14, 90 gezeigt. Dabei ist eine erste Stellung 96 und eine zweite Stellung 97 der Drehscheibe 10 gezeigt.

In der Stellung 96 bildet die Drehscheibe 10 eine Anschlagfläche 98, welche sich insbesondere auf einem Führungsbahnelement 74 befindet. Die Anschlagfläche 98 dient zum Halten des Führungsorganes 7 in Richtung der Führungslinie 30. Dadurch kann ein Weiterbefördern des Teileträgers 2 - Fig. 1- temporär verzögert oder unterbunden werden.

Die strichliert eingezeichnete Stellung 97 der Drehscheibe 10 bzw. der sich auf der Drehscheibe 10 befindlichen Führungsbahnen 43, 44, 45 zeigt beispielsweise eine Aufnahmestellung bzw. eine Übergabestellung, in der das Führungsorgan 7 von den mit der Übergabevorrichtung 14, 90 fest verbundenen Führungsbahnen 5 an die drehscheibenfesten Führungsbahnen 43, 44, 45 aufgenommen bzw. an die mit der Übergabevorrichtung 14, 90 feststehend verbundenen Führungsbahnen 5 abgegeben wird. Dabei wird die Drehscheibe 10 bzw. die mit der Drehscheibe 10 verbundenen Führungsbahnen 44, 45 so gesteuert bzw. gedreht, dass die drehscheibenfeste Führungslinie 48 während des Aufnehmens bzw. des Übergebens des Führungsorganes 7 in Richtung des Mittelpunktes 29 des Führungsorganes 7 bzw. in Richtung der Drehachse 34 des Führungsorganes 7 zeigt. Die Drehscheibe 10 bzw. die drehscheibenfesten Führungsbahnen 44, 45, welche das Führungsorgan 7 bzw. dessen Mittelpunkt 29 aus der Sicht eines drehscheibenfesten Beobachters Entlang der drehscheibenfesten Führungslinie 48 führen, wird dabei so gesteuert bzw. angetrieben, dass die Winkelstellung der Drehscheibe 10 bzw. der drehscheibenfesten Führungsbahnen 44, 45, die Winkelgeschwindigkeit, die Winkelbeschleunigung und gegebenenfalls die Änderung der Winkelbeschleunigung mit der Position, der Geschwindigkeit, der Beschleunigung und gegebenenfalls mit der Änderung der Beschleunigung des Führungsorganes 7 zusammen passen, sodass eine ruckfreie Aufnahme bzw. Übergabe des Führungsorganes 7 durch die Drehscheibe 10 erfolgt. Zur Anpassung des Bewegungszustandes der Drehscheibe 10 an den Teileträger 2 bzw. an das Führungsorgan 7 wird der Bewegungszustand der Drehscheibe 10 mit einem Bewegungszustand einer anderen bzw. weiteren den Teileträger 2 antreibenden bzw. führenden Vorschubvorrichtung 4 - Fig. 1 - synchronisiert und/oder der Bewegungszustand des Teileträgers 2 - Fig. 1 - mittels Messsignalen von Sensoren 21 - Fig. 1 - ermittelt. Zum Abgleichen des Bewegungszustandes der Drehscheibe 10 mit dem Teileträger 2 - Fig. 1 - bzw. der Drehscheibe 10 mit einer oder mehren weiteren Vorschubvorrichtungen 4 - Fig. 1 -, insbesondere einer oder mehrerer Drehscheiben 10, kann beispielsweise in einer Speichervorrichtung einer Steuerung eine Synchronisierungstabelle hinterlegt sein, durch welche jedem Bewegungszustand des Teileträgers 2 - Fig. 1 - bzw. einer oder mehrerer weiterer Vorschubvorrichtung 4 - Fig. 1 - ein Bewegungszustand bzw. ein Steuersignal zum Ansteuern der Drehscheibe 10 zuordenbar ist.

In Fig. 11 ist eine weitere und gegebenenfalls für sich eigenständige Ausführungsform einer Drehscheibe 10 gezeigt. Dabei werden wiederum für gleiche Teile gleiche Bezugszeichen bzw. Bauteilbezeichnungen, wie in den vorangegangenen Figuren verwendet. Um unnötige Wiederholungen zu vermeiden, wird auf die detaillierte Beschreibung in den vorangegangenen Figuren hingewiesen bzw. Bezug genommen.

Die in Fig. 11 gezeigte Ausführungsform der Drehscheibe 10 weist gekrümmte Führungsbahnen 44, 45 auf. Mittels der gekrümmten Führungsbahn 44 und/oder der gekrümmten Führungsbahn 45 wird das Führungsorgan 7 - Fig. 1 - des Teileträgers 2 - Fig. 1 - entlang einer aus einer Sicht eines drehscheibenfesten Beobachters auf der Führungslinie 48 geführt. Die Führungslinie 48 verläuft ebenfalls gekrümmt. Die Krümmung der Führungsbahn 44 und/oder der Führungsbahn 45 an einem Punkt bzw. an einer Stelle der Führungsbahn 44, 45 kann dabei in Abhängigkeit des Abstandes des Punktes bzw. der Stelle der Führungsbahn 44, 45 zur Drehachse 19 der Drehscheibe 10 gewählt sein. Beispielsweise ist die Krümmung umso größer oder umso kleiner, je größer der Abstand des Punktes der Führungsbahn 44, 45 zur Drehachse 19 ist. Vorzugsweise nimmt die Krümmung von einem Ende 50 der Führungsbahn 44, 45 bis zu einem Minimalabstand der Führungsbahn 44, 45 zur Drehachse 19 der Drehscheibe monoton zu bzw. monoton ab. Die Krümmung kann dabei auch einen Nulldurchgang aufweisen bzw. an einer Stelle den Wert 0 aufweisen. Beispielsweise weist die Krümmung an einem Ende 50 einen negativen Wert auf und vergrößert sich bis zu einem Minimalabstand der Führungsbahn 44, 45 zur Drehachse 19 zu einem positiven Wert. Unter der Krümmung der Führungsbahn 44, 45 wird die Richtungsänderung pro Längeneinheit verstanden. Beispielsweise weist die Krümmung an einem Ende 50 der Führungsbahn 44, 45 einen Wert zwischen 1 und 50 pro Meter bzw. zwischen -1 und -50 pro Meter auf.

Der Verlauf der Führungsbahn 44, 45 ist dabei so gewählt, dass bei konstanter Winkelgeschwindigkeit bzw. Drehgeschwindigkeit der Drehscheibe 10 ein vordefinierter Geschwindigkeitsverlauf bzw. Verlauf des Bewegungszustandes des durch die Führungsbahn 44, 45 der Drehscheibe 10 angetriebenen bzw. weiterbewegten Teileträgers 2 hervorgerufen wird. Der Verlauf der Führungsbahn 44, 45 bzw. die Krümmung der Führungsbahn 44, 45 ist so gewählt, dass der Teileträger 2 - Fig. 1 - bzw. eines der Führungsorgane 7 - Fig. 1 - des Teileträgers 2 mittels der Drehscheibe 10 bzw. der Führungsbahnen 44, 45 angetrieben wird.

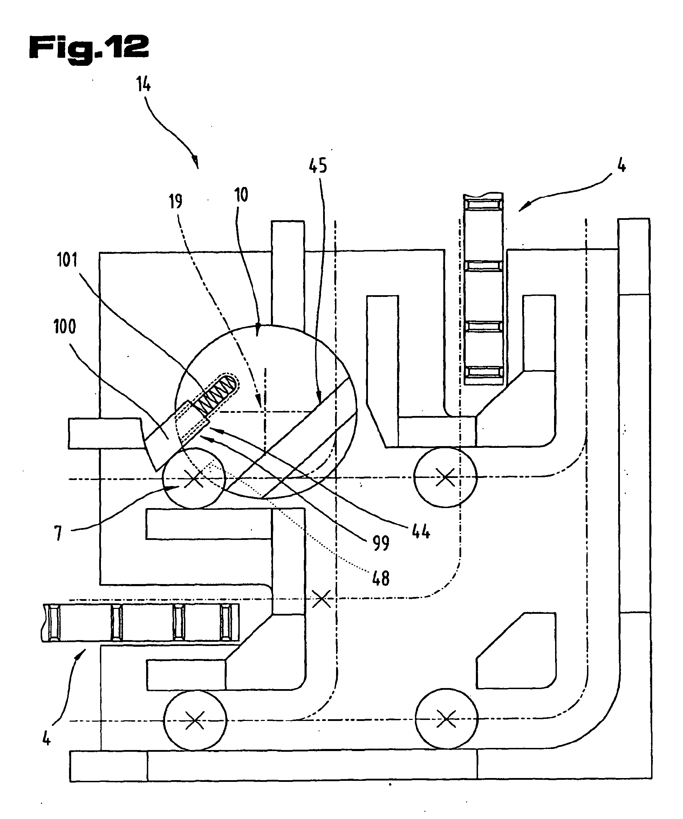

In Fig. 12 ist eine weitere und gegebenenfalls für sich eigenständige Ausführungsform einer Übergabevorrichtung 14 gezeigt, wobei wiederum für gleiche Teile gleiche Bezugszeichen bzw. Bauteilbezeichnungen, wie in den vorangegangen Figuren verwendet werden. Um unnötige Wiederholungen zu vermeiden, wird auf die detaillierte Beschreibung in den vorangegangenen Fig. 1 bis 11 hingewiesen bzw. Bezug genommen.

Die in Fig. 12 gezeigte Drehscheibe 10 weist eine bewegliche Führungsbahn 99 bzw. ein bewegliches Führungsbahnelement 100 auf. Das Führungsbahnelement 100 ist dabei vorzugsweise in einer zur drehscheibenfesten Führungslinie 48 parallelen Richtung beweglich. Die Bewegung des gegenüber der Drehscheibe beweglichen Führungsbahnelementes 100 bzw. der beweglichen Führungsbahn 99 kann durch eine Feder 101 und/oder einen Stellantrieb und/oder ein Führungsorgan 7 - Fig. 9a - bzw. den Teileträger 2 - Fig. 9a - beeinflusst werden. Die gegenüber der Drehscheibe 10 bewegliche Führungsbahn 99 auf dem beweglichen Führungsbahnelement 100 kann parallel oder in einem Winkel zur Bewegungsrichtung des beweglichen Führungsbahnelementes 100 oder der Führungslinie 48, vorzugsweise in einem Winkel zwischen 45 ° und 135 °, insbesondere in etwa 90 °, ausgeführt sein. Das bewegliche Führungsbahnelement 100 ist vorzugsweise entlang einer Linearführung, beispielsweise entlang einer V- oder T-förmigen Führungsnut, mittels einer Gleitlagerung oder einer Kugel- oder Rollenlagerung geführt. Eine weitere Ausführungsform sieht auch vor, das bewegliche Führungsbahnelement 100 um eine Schwenkachse auf der Drehscheibe 10 zu schwenken.

Weiters können auf dem Führungsbahnelement 100 auch mehrere, vorzugsweise in einem Winkel zueinander, angeordnete Führungsbahnen 99 angeordnet sein bzw. kann die Führungsbahn 99 auch gekrümmt verlaufen.

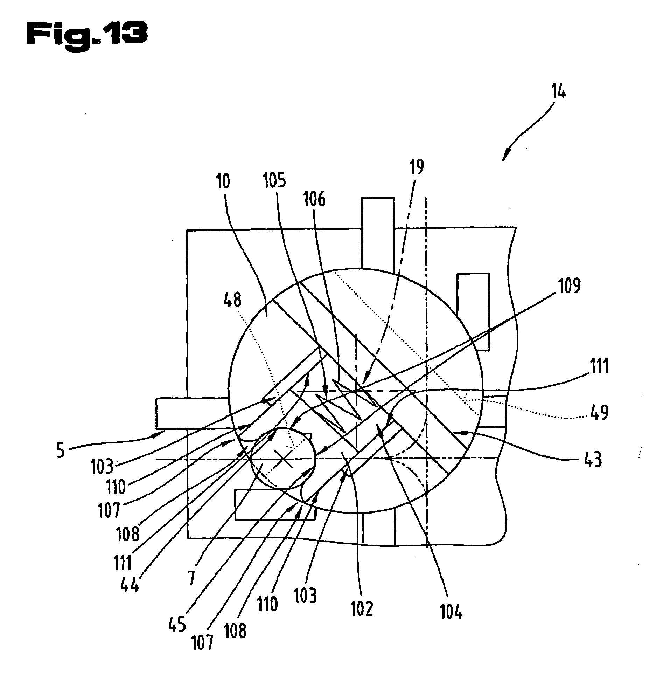

Die in Fig. 13 schematisch dargestellte Ausführungsform einer Drehscheibe 10 umfasst ein in etwa V-förmiges Führungsbahnelement 102, welches auf der Drehscheibe 10 mittels einer Führungsvorrichtung 103 linear geführt ist. Weiters wirkt mittels einer Vorrichtung 104, beispielsweise einer Federvorrichtung 105, zumindest abschnitts- und/oder zeitweise eine Kraft, beispielsweise eine Federkraft und/oder eine Dämpfungskraft, auf das Führungsbahnelement 102. Die Vorrichtung 104 zum Beaufschlagen des Führungsbahnelementes 102 mit einer Kraft umfasst ein Federelement 106 und/oder ein Dämpfungselement und/oder eine Antriebsvorrichtung, beispielsweise einen elektrischen oder pneumatischen Linearantrieb. Die Vorrichtung 104 bzw. das Federelement 106 beaufschlagt das Führungsbahnelement 102 mit einer in radialer Richtung der Drehscheibe 10 wirkenden Kraft, wodurch in Folge die Führungsorgane 7 des Teileträgers 2 - Fig. 9a,b - an eine definierte Führungsbahn 5 der Übergabevorrichtung 14 angedrückt werden und ein Führungsspiel minimiert wird. Somit wird eine zumindest annähernd spielfreie und definierte Position des Teileträgers 2 ermöglicht.

Das Führungsbahnelement 102 umfasst in etwa V-förmig angeordnete Führungsbahnen 44, 45, die das Führungsorgan 7 des Teileträgers 2 aufnehmen. Die Führungsbahnen 44, 45 des Führungsbahnelementes 102 weisen gegebenenfalls in ihren Endbereichen 107 Rundungen 108 auf, um die Aufnahme bzw. Abgabe des Führungsorganes 7 durch die Führungsbahnen 44, 45 der Drehscheibe 10 zu erleichtern bzw. zu verbessern.

Zur Vermeidung einer punktförmigen Kontaktstelle Zwischen dem Führungsorgan 7 und dem Führungsbahnelement 102 kann das Führungsbahnelement 102 Rundungen 109 aufweisen bzw. können die Führungsbahnen 44, 45 eine Rundung 109 aufweisen. Die Rundungen 109 weisen in etwa einen dem Führungsorgan 7 angepassten Radius auf. Während das Führungsorgan 7 vom Führungselement 102 aufgenommen ist bzw. während das Führungsorgan 7 an den Führungsbahnen 44, 45 anliegt, erfolgt keine Relativbewegung zwischen dem Führungsorgan 7 und dem Führungselement 102 bzw. den Führungsbahnen 44, 45, sodass ein Verschleiß am Führungsorgan und/oder am Führungsbahnelement 102 reduziert werden kann.

Um das Führungsbahnelement 102 auf der Drehscheibe 10 linear zu führen, ist dieses mit der Führungsvorrichtung 103 ausgestattet bzw. verbunden. Die Führungsvorrichtung 103 umfasst eine oder mehrere, beispielsweise zwei Führungsbahnen 110, 111, welche am Führungsbahnelement 102 und an der Drehscheibe 10 angeordnet sind. Die Führungsbahnen 110, 111 sind parallel zur Ebene der Drehscheibe 10 angeordnet, um das Führungsbahnelement 102 in einer auf die Drehachse der Drehscheibe 10 in etwa normal stehenden Richtung, insbesondere in einer radialen Richtung, zu führen. Die Führungsbahnen 111 auf der Drehscheibe 10 weisen beispielsweise V-förmige Nuten auf, in die die Führungsbahnen 110 des Führungsbahnelementes 102 eingreifen. Um den Reibungswiderstand und den Verschleiß zu verringern können zwischen den Führungsbahnen 110, 111 Gleit- oder Rollelemente, beispielsweise eine Gleitschicht, ein Gleitelement aus Kunststoff oder Metall oder Kugeln, angeordnet sein.

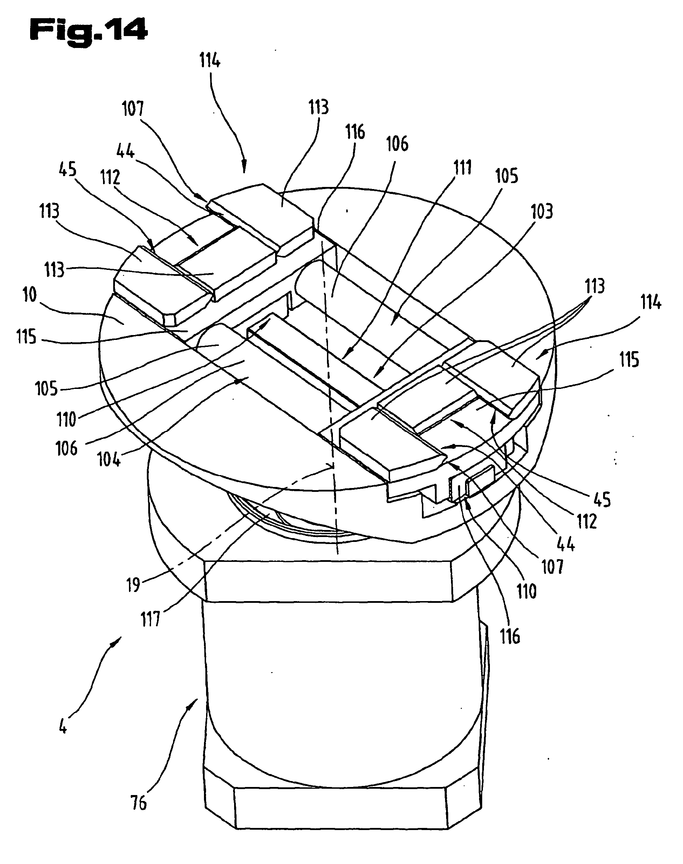

Fig. 14 zeigt eine weitere und gegebenenfalls für sich eigenständige Ausführungsform einer Drehscheibe 10 mit beweglich gelagerten Führungsbahnen 44, 45, 112 bzw. Führungsbahnelementen 113.

Die Führungsbahnelemente 113 bzw. die Führungsbahnen 44, 45, 112, die auf den Führungsbahnelemente 113 angeordnet sind, sind U-förmig angeordnet, sodass diese zum Aufnehmen eines Führungsorganes 7 - Fig. 9a,b - des Teileträgers 2 - Fig. 9a,b - ausgebildet sind. Die U-Form wird durch die auf die Bewegungsrichtung der U-förmigen Führungsbahnanordung 114 normal stehende Führungsbahn 112 und durch die parallel zueinander und im Wesentlichen rechtwinkelig auf die Führungsbahn 112 angeordneten Führungsbahnen 43, 45 gebildet. Die Führungsbahnen 44, 45 sind in etwa in einem Abstand des Durchmessers 39 eines Führungsorganes 7 angeordnet.

Die Führungsbahnanordnung 114 bzw. die Führungsbahnelemente 113 sind an einer beweglich gelagerten Grundplatte 115 angeordnet und beispielsweise mittels einer Schraubverbindung befestigt. Die Führungsbahnen 44, 45, 112 können auch einteilig mit der Grundplatte 115 ausgeführt sein.

Die Grundplatte 115 ist mit einer Führungsvorrichtung 103 verbunden oder an dieser angeordnet bzw. befestigt, durch welche die Grundplatte 115 und somit die Führungsbahnen 44, 45, 112 linear beweglich an der Drehscheibe 10 gelagert sind. Die Führungsbahnen 44, 45, 112 sind mittels der Führungsvorrichtung 103 in einer normal auf die Drehachse 19 liegenden Ebene bzw. in einer Ebene parallel zur Transportebene 20 beweglich, insbesondere linear beweglich, gelagert.

Die Führungsvorrichtung 103 umfasst einen mit der Grundplatte 115 verbundenen Führungswagen 116 und eine mit der Drehscheibe 10 verbundene Führungsschiene 117, auf welcher der Führungswagen geführt ist. Die Führungsvorrichtung 103 ist in an sich bekannter weise ausgebildet, beispielsweise ist die Führungsvorrichtung durch eine kugel- oder rollengelagerte Linearführung gebildet.

Die Grundplatte 115 bzw. die Führungsbahnen 44, 45, 112 sind mit einer Vorrichtung 104 zum Beaufschlagen der Grundplatte bzw. der Führungsbahnen 44, 45, 112 mit einer Kraft verbunden. Die beaufschlagte Kraft kann eine Federkraft, eine Antriebskraft und/oder eine Dämpfungskraft umfassen. Vorzugsweise umfasst die Vorrichtung 104 Federelemente 106, insbesondere Druckfedern, welche die Grundplatte 115 bzw. die Führungsbahnanordnung 114 auf der Drehscheibe 10 radial nach außen bzw. an das Führungsorgan 7 drückt.

Die Führungsbahnanordnung 114 ist vorzugsweise in einer zur drehscheibenfesten Führungslinie 48 - Fig. 13 - parallelen Richtung beweglich. Die Bewegung der gegenüber der Drehscheibe 10 beweglichen Führungsbahnanordnung 114 wird durch die Vorrichtung 104 und/ oder einen Stellantrieb und/oder ein Führungsorgan 7 beeinflusst werden.

Eine weitere Ausbildung sieht vor, dass die gegenüber der Drehscheibe 10 bewegliche Führungsbahnanordnung 114 um eine Schwenkachse auf der Drehscheibe 10 schwenkbar angeordnet ist. Die Federvorrichtung 105 kann hierfür durch eine Drehfeder gebildet sein.

Auf der Drehscheibe 10 können ein oder mehrere, insbesondere wie in Fig. 14 gezeigt, zwei Führungsbahnanordnungen 114, radial bzw. sternförmig oder gegenüberliegend angeordnet sein. Die Federvorrichtung 105 bzw. die Federelemente 106 wirken zwischen den Grundplatten 115 oder jeweils zwischen einer mit einer U- oder V- förmig bestückten Führungsbahnanordnung 114 Grundplatte 115 und der Drehscheibe 10.

Die Drehscheibe 10 ist mit einer Antriebsvorrichtung 76 verbunden. Zwischen der Antriebsvorrichtung 76 und der Drehscheibe ist eine Kupplungsvorrichtung 117 angeordnet, mit welcher die Zentrierung der Drehachse 19 der Drehscheibe und der Drehachse der Antriebsvorrichtung 76 einstellbar ist. Die Kupplungsvorrichtung 117 weist hierfür eine oder zwei in einem Winkel zueinander angeordnete Verstellvorrichtungen und zumindest zwei mittels den Verstellvorrichtung zueinander bewegliche Kupplungsabschnitte auf, wodurch die Drehscheibe 10 gegenüber der Antriebsvorrichtung 76 in zumindest zwei Richtungen, beispielsweise in zwei normal zueinander stehende und/oder normal auf die Drehachse stehende Richtungen, verstellbar ist.

Die Ausführungsbeispiele zeigen mögliche Ausführungsvarianten und Details der Transportanlage, wobei an dieser Stelle bemerkt sei, dass die Erfindung nicht auf die speziell dargestellten Ausführungsvarianten und Details derselben eingeschränkt ist, sondern vielmehr auch diverse Kombinationen der einzelnen Ausführungsvarianten und Details untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Transportanlage diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1a, 1b; 2a, 2b, 2c, 2d, 2e; 3, 4; 5a, 5b, 5c, 5d; 6a, 6b; 7, 8; 9a, 9b; 10; 11; 12; 13; 14 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Transportanlage
- 2: Teileträger
- 3: Transportmodul
- 4: Vorschubvorrichtung
- 5: Führungsbahn

- 6: Bewegungsrichtung
- 7: Führungsorgan
- 8: Führungsrollen
- 9: Zugmitteltrieb
- 10: Drehscheibe

- 11: Führungsbahn
- 12: Führungsbahn
- 13: Bewegungsbahn
- 14: Übergabevorrichtung
- 15: Förderabschnitt

- 16: Förderabschnitt
- 17: Übertragungsmittel
- 18: Führungsbahn
- 19: Drehachse
- 20: Transportebene

- 21: Sensor
- 22: Übergabevorrichtung
- 23: Orientierung
- 24: Führungsorgan
- 25: Führungsorgan

- 26: Führungsorgan
- 27: Führungsorgan
- 28: Punkt
- 29: Mittelpunkt
- 30: Führungslinie

- 31: Führungslinie
- 32: Führungslinie
- 33: Führungslinie
- 34: Drehachse
- 35: Winkelsymmetrale

- 36: Abschnitt
- 37: Abschnitt
- 38: Abstand
- 39: Durchmesser
- 40: Durchmesser

- 41: Zwischenraum
- 42: Abstand
- 43: Führungsbahn
- 44: Führungsbahn
- 45: Führungsbahn

- 46: Führungsbahnabschnitt
- 47: Führungsbahnabschnitt
- 48: Führungslinie
- 49: Führungslinie
- 50: Ende

- 51: Bereich
- 52: Bereich
- 53: Bereich
- 54: Bereich
- 55: Führungslinienbogen

- 56: Führungslinienbogen
- 57: Führungslinienbogen
- 58: Führungslinienbogen
- 59: Radius
- 60: Bogenelement

- 61: Bogenelement
- 62: Kreuzung
- 63: Führungsbahnbogen
- 64: Führungsbahnbogen
- 65: Radius

- 66: Radius
- 67: Ausnehmung
- 68: Mittel
- 69: Bohrung
- 70: Sensor

- 71: Sensor
- 72: Überdeckungselement
- 73: Ausnehmung
- 74: Führungsbahnelement
- 75: Montageelement

- 76: Antriebsvorrichtung
- 77: Verbindungsvorrichtung
- 78: Nut
- 79: Elektromotor
- 80: Servomotor

- 81: Vertiefung
- 82: Achsen
- 83: Führungsrollen
- 84: Unterseite
- 85: Durchsetzung

- 86: Eingriffselement
- 87: Stützteil
- 88: Stützfläche
- 89:
- 90: Übergabevorrichtung

- 91: Förderabschnitt
- 92: Drehrichtung
- 93: Führungsfläche
- 94: Halteelement
- 95: Verbindungsvorrichtung

- 96: Stellung
- 97: Stellung
- 98: Anschlagsfläche
- 99: Führungsbahn
- 100: Führungsbahnelement

- 101: Feder
- 102: Führungsbahnelement
- 103: Führungsvorrichtung
- 104: Vorrichtung
- 105: Federvorrichtung

- 106: Federelement
- 107: Endbereich
- 108: Rundung
- 109: Rundung
- 110: Führungsbahn

- 111: Führungsbahn
- 112: Führungsbahn
- 113: Führungsbahnelement
- 114: Führungsbahnanordnung
- 115: Grundplatte

- 116: Führungswagen
- 117: Kupplungsvorrichtung

## Patentansprüche

1. Drehscheibe (10) mit einem Übertragungsmittel (17) zur Führung eines zwischen einem ersten Förderabschnitt (15) und zweiten Förderabschnitt (16) mittels Führungsorganen (7) entlang von Führungsbahnen (5) verfahrbaren Teileträgers (2), wobei das Übertragungsmittel (17) um eine senkrecht auf eine Transportebene (20) ausgerichtete Drehachse (19) schwenkbar ist und mindestens eine Führungsbahn (43; 44; 45) aufweist, entlang welcher der Teileträger (2) durch zumindest eines der Führungsorgane (7) geführt ist **dadurch gekennzeichnet, dass** die Drehscheibe (10) an eine, mit einer Steuereinrichtung verbundene Antriebsvorrichtung (76) zur Übertragung einer Antriebskraft vom Übertragungsmittel (17) auf den Teileträger (2) gekoppelt ist.

2. Drehscheibe nach Anspruch 1, **dadurch gekennzeichnet, dass** die Führungsbahn (43; 44; 45) des Übertragungsmittels, (17) geradlinig verläuft.

3. Drehscheibe nach Anspruch 1 oder 2, **dadurch gekennzeichnet, dass** das Übertragungsmittel (17) eine zur ersten Führungsbahn (43) in einem Winkel angeordnete zweite Führungsbahn (44) aufweist.

4. Drehscheibe nach Anspruch 3, **dadurch gekennzeichnet, dass** das Übertragungsmittel eine dritte Führungsbahn- (45) aufweist, die mit einem Abstand von mindestens einem Durchmesser (39) eines der Führungsorgane (7) parallel zur ersten Führungsbahn (43) oder zweiten Führungsbahn (44) angeordnet ist.

5. Drehscheibe nach Anspruch 3 oder 4, **dadurch gekennzeichnet, dass** ein Abstand von einem Ende der ersten Führungsbahn (43) des Übertragungsmittels (17) zu einem Ende der zweiten und/oder dritten Führungsbahn (44, 45) oder zu einem zweiten Ende der ersten Führungsbahn (43), insbesondere um mindestens den Durchmesser (39) eines der Führungsorgane (7), kleiner als ein Abstand (42) von zwei Führungsorganen (7) des Teileträgers (2) ist.

6. Drehscheibe nach einem der Ansprüche 1 bis 5, **dadurch gekennzeichnet, dass** die Führungsbahn (43; 44; 45) gekrümmt verläuft.

7. Drehscheibe nach einem der Ansprüche 1 bis 6, **dadurch gekennzeichnet, dass** ein Verlauf der Führungsbahn (43; 44; 45) eine Krümmung aufweist, welche mit zunehmendem Abstand der Führungsbahn (43; 44, 45) von der Drehachse (19) monoton steigend oder monoton fallend ist.

8. Drehscheibe nach einem der Ansprüche 1 bis 7, **dadurch gekennzeichnet, dass** eine der Führungsbahnen (99) des Übertragungsmittels (17) relativ zu einer weiteren Führungsbahn (43; 44; 45) des Übertragungsmittels (17) verstellbar gelagert ist.

9. Drehscheibe nach einem der Ansprüche 1 bis 8, **dadurch gekennzeichnet, dass** an der Drehscheibe (10) zumindest eine im Querschnitt etwa V- oder U-formige Führungsbahnanordnung, insbesondere in etwa V- oder U-förmig angeordnete Führungsbahnen, (43; 44; 45), beweglich angeordnet ist.

10. Drehscheibe nach Anspruch 9, **dadurch gekennzeichnet, dass** die in etwa V- oder U-(förmige Führungsbahnanordnung, insbesondere die in etwa V- oder U-förmig angeordneten Führungsbahnen (43; 44; 45), zumindest in einer Richtung federelastisch und/oder dämpfend gelagert ist.

11. Obergabevorrichtung (14) mit einer Vorschubvorrichtung (4) umfassend zumindest eine Drehscheibe (10) zur Führung eines zwischen einem ersten Förderabschnitt (15) und zweiten Förderabschnitt (16) entlang von Führungsbahnen (5) verfahrbaren Teileträgers (2), wobei die Drehscheibe (10) um eine senkrecht auf eine Transportebene (20) ausgerichtete Drehachse (19) schwenkbar ist, **dadurch gekennzeichnet dass** die Drehscheibe (10) nach einem der Ansprüche 1 bis 10 ausgebildet ist.

12. Übergabevorrichtung nach Anspruch 11, **dadurch gekennzeichnet, dass** die Führungsbahnen (5; 43; 44; 45) zum Führen der Führungsorgane (7) des Teileträgers (2) entlang von führungslinien (30, 31, 32, 33) und/oder zum Führen eines zentralen Punktes (28) des Teileträgers (2) entlang einer Bewegungsbahn (13) angeordnet sind.

13. Übergabevorrichtung nach Anspruch 11 oder 12, **dadurch gekennzeichnet, dass** parallel zur Transportebene (20) retativ zur Drehscheibe (10) feststehende Führungsbahnen (5) zum Führen des Teileträgers (2) angeordnet sind.

14. Übergabevorrichtung nach einem der Ansprüche 11 bis 13, **dadurch gekennzeichnet, dass** auf der Drehscheibe (10) zumindest eine Führungsbahn (43 ) angeordnet ist, welche zum Führen eines Führungsorganes (7) des Teileträgers (2) entlang einer gedachten Führungslinie (30, 31, 32, 33) während einem Stillstand der Drehscheibe (10) ausgebildet ist.

15. Übergabevorrichtung nach einem der Ansprüche 11 bis 14, **dadurch gekennzeichnet, dass** auf der Drehscheibe (10) zumindest eine Führungsbahn (44; 45) angeordnet ist, welche während eines Zusammenwirkens mit einem Führungsorgan (7) des Teileträgers (2) mit einer momentanen Bewegungsrichtung (6) des Führungsorgans (7) einen Winkel bildet.

16. Übergabevorrichtung nach einem der Ansprüche 11 bis 15, **dadurch gekennzeichnet, dass** mit der Drehscheibe (10) eine Antriebsvorrichtung (76) verbunden ist.

17. Übergabevorrichtung nach Anspruch 16, **dadurch gekennzeichnet, dass** die Antriebsvorrichtung (76) durch einen elektrisch betriebenen Motor, insbesondere einen Servomotor (80), gebildet ist.

18. Übergabevorrichtung nach Anspruch 16 oder 17, **dadurch gekennzeichnet, dass** die Antriebsvorrichtung (76) zum Winkelpositionieren der Drehscheibe (10) ausgebildet ist.

19. Übergabevorrichtung nach einem der Ansprüche 11 bis 18, **dadurch gekennzeichnet, dass** die Vorschubvorrichtung (4) einen Zugmitteltrieb (9), insbesondere einen Zahnriementrieb, umfasst.

20. Übergabevorrichtung nach Anspruch 19, **dadurch gekennzeichnet, dass** die Drehscheibe (10) mechanisch mit dem Zugmitteltrieb (9) verbunden ist.

21. Übergabevorrichtung nach Anspruch 19, **dadurch gekennzeichnet, dass** mit dem Zugmitteltrieb (9) eine von der Antriebsvorrichtung (76) der Drehscheibe (10) getrennt angeordnete Antriebsvorrichtung für den Zugmitteltrieb (9) verbunden ist.

22. Übergabevorrichtung nach einem der Ansprüche 11 bis 21, **dadurch gekennzeichnet**, das der Teileträger (2) mittels der Drehscheibe (10) von einer Aufnahmestellung in eine Übergabestellung bewegbar ist.

23. Übergabevorrichtung nach Anspruch 22, dadurch gekenntzeichnet, dass durch die Anordnung der Drehscheibe (10) und/oder der Führungsbahnen (5) die Position des Teileträgers (2) in der Transportebene (20) zwischen der Aufnahmestellung und der Obergabestellung durch die Stellung der Drehscheibe (10) positioniert verstellbar ist.

24. Übergabevorrichtung nach einem der Ansprüche 11 bis 23, **dadurch gekennzeichnet, dass** die Drehachse (19) der Drehscheibe (10) auf einer Winkelsymmetrale (35) von zwei geraden Abschnitten (36; 37) von Führungslinien (31; 32) bzw. der Bewegungsbahn (13) liegt und in etwa normal auf diese steht.

25. Übergabevorrichtung nach einem der Ansprüche 11 bis 24, **dadurch gekennzeichnet, dass** die Drehachse (19) der Drehscheibe (10), insbesondere einer Drehscheibe (10) mit einer gekrümmt verlaufenden Führungsbahn (18), zwischen zwei parallel liegenden, feststehenden Führungsbahnen (5) angeordnet ist.

26. Übergabevorrichtung nach einem der Ansprüche 11 bis 25, **dadurch gekennzeichnet, dass** die Drehachse (19) der Drehscheibe (10), insbesondere einer Drehscheibe (10) mit einer geradlinig verlaufenden Führungsbahn (18), außerhalb zwei parallel liegender Führungsbahnen (5) angeordnet ist.

27. Übergabevorrichtung nach einem der Ansprüche 11 bis 26, **dadurch gekennzeichnet, dass** zwischen den parallel liegenden Führungsbahnen (5) eine zumindest annähernd ebene Oberfläche ausgebildet ist.

28. Übergabevorrichtung nach Anspruch 27, **dadurch gekennzeichnet, dass** die Führungsbahnen (5) oberhalb der Oberfläche eine Höhe von maximal 5 mm aufweisen.

29. Übergabevorrichtung nach einem der Ansprüche 11 bis 28, **dadurch gekennzeichnet, dass** in einem Bereich, in dem eines der Führungsorgane (7) von einer feststehenden Fürrungsbahn (5) an eine Führungsbahn (43; 44; 45) der Drehscheibe (10) übergeführt wird oder in dem eines der Führungsorgane (7) von einer Führungsbahn (43; 44; 45) der Drehscheibe (10) auf die feststehende Führungsbahn (5) übergeführt wird, zwei parallele Führungsbahnen, (11, 12), insbesondere für eines der Führungsorgane (7) angeordnet sind.

30. Übergabevorrichtung nach einem der Ansprüche 11 bis 29, **dadurch gekennzeichnet dass** in einem Bereich (51; 52; 53; 54) eines Führungslinienbogens (55; 56; 57; 58) zwei parallele Führungsbahnen (11, 12), insbesondere ein innerer Führungsbahnbogen (63) und/oder ein äußerer Führungsbahnbogen (64), für eines der Führungsorgane (7) angeordnet sind.

31. Übergabevorrichtung nach einem der Ansprüche 11 bis 30, **dadurch gekennzeichnet, dass** eine Führungsbahn (11; 12) eins Führungsbahnbogens (63; 64) durch einen Bogen gebildet ist, dessen Radius (65; 66) am Bogenbeginn und/oder Bogenende größer ist als in einem zwischen Bogenbeginn und Bogenende liegenden Abschnitt.

32. Übergabevorrichtung nach einem der Ansprüche 11 bis 31, dadurch gekenntzeichnet, dass ein Radius (59) der Führungslinie (30; 31; 32; 33) größer ist als der halbe Durchmesser (39) des Führungsorganes (7).

33. Übergabevorrichtung nach einem der Ansprüche 11 bis 32, **dadurch gekennzeichnet, dass** die Vorschubvorrichtung (4) eine weitere Drehscheibe (10) nach einem der Ansprüche 1 bis 10 umfasst.

34. Übergabevorrichtung nach einem der Ansprüche 11 bis 33, **dadurch gekennzeichnet, dass** die Vorschubvorrichtung (4) mindestens zwei weitere Drehscheiben (10) nach einem der Ansprüche 1 bis 10 umfasst.

35. Übergabevorrichtung nach einem der Ansprüche 11 bis 34, **dadurch gekennzeichnet, dass** ein von zumindest einer der Führungsbahnen (43, 44; 45) der Drehscheibe (10) überstreichbarer Bereich einen Bewegungsbereich bildet und zumindest eine Verzweigung der Führungslinie zum Orientierungswechseln und/oder zum Bewegungsrichtungsändern innerhalb des Bewegungsbereiches der Führungsbahnen (43; 44; 45) der Drehscheibe (10) liegen.

36. Übergabevorrichtung nach einem der Ansprüche 11 bis 35, **dadurch gekennzeichnet, dass** durch eine Anordnung der Drehscheibe (10) und/oder der Führungsbahnen (5) eine Verzweigung der Bewegungsbahn (13) zum Orientierungswechseln in Bewegungsrichtung des Teileträgers (2) gesehen vor einer Verzweigung zum Bewegungsrichtungsändem liegt.

37. Transportanlage (1) mit einem ersten Förderabschnitt (15) und zweiten Förderabschnitt (16) und einer zwischen diesen angeordneten Obergabevorrichtung (14; 22), **dadurch gekennzeichnet, dass** die Übergabevorrichtung nach einem der Ansprüche 11 bis 36 ausgebildet ist.

38. Transportanlage nach Anspruch 31, **dadurch gekennzeichnet, dass** an der Übergabevorrichtung (14; 22) ein weiterer Förderabschnitt angeordnet ist.

39. Transportanlage nach Anspruch 37 oder 38, **dadurch gekennzeichnet, dass** an der Übergabevorrichtung (14; 22) eine weitere Übergabevorrichtung (14; 22) angeordnet ist.

40. Verfahren zum Handhaben von Teileträgern (2) mit einer Übergabevorrichtung (14; 22) umfassend zumindest eine Drehscheibe (10) zur Führung eines zwischen einem ersten Förderabschnitt (15) und zweiten Förderabschnitt (16) mittels Führungsorganen (7) entlang von Führungsbahnen (5) verfahrbaren Teileträger (2), wobei die Drehscheibe (10) zumindest eine Führungsbahn (43, 44, 45) aufweist und um eine senkrecht auf eine Transportebene (20) ausgerichtete Drehachse (19) schwenkbar ist, mit den Verfahrensschritten: Bewegen einer Führungsbahn (43, 44, 45) in eine erste Aufnahmestellung, Aufnehmen eines ersten Führungsorganes (24) des Teileträgers (2), Weiterbefördern des Teileträgers (2) mittels einer Vorschubvorrichtung (4), Drehen einer Führungsbahn (43, 44, 45) in eine zweite Aufnahmestellung zum Aufnehmen eines zweiten Führungsorganes (25, 26) des Teileträgers (2), Drehen einer Führungsbahn (43, 44) bis zu einer Übergabestellung, Weiterbefördern des Teileträgers (2) mittels einer Vorschubvorrichtung (4) bis die Übergabevorrichtung (14; 22) verlassen wird, **dadurch gekennzeichnet, dass** der Teileträger (2) zwischen der Aufnahmestellung und Übergabestellung durch eine Führungsbahn (43, 44, 45) der Drehscheibe (10) mit einer Antriebskraft beaufschlagt wird.

41. Verfahren zum Handhaben nach Anspruch 40, **dadurch gekennzeichnet, dass** zumindest eines der Führungsorgane (24; 25; 26; 27) des Teileträgers (2) zumindest in einem Bereich, in dem eines der Führungsorgane (7) von einer feststehenden Führungsbahn (5) an eine Führungsbahn (43; 44; 45) der Drehscheibe (10) übergeführt wird oder in dem eines der Führungsorgane (7) von einer Führungsbahn (43; 44; 45) der Drehscheibe (10) auf die feststehende Führungsbahn (5) übergeführt wird, nach zwei Seiten in einer Richtungen normal auf die Führungsbahn (5) und parallel zur Transportebene (20) geführt wird.

42. Verfahren zum Handhaben nach Anspruch 40 oder 41, **dadurch gekennzeichnet, dass** der Teileträger (2) in der Aufnahmestellung bzw. in der Übergabestellung zwischen den zur Übergabevorrichtung (14; 22) bewegungsfest angeordneten Führungsbahnen (5) und den der Drehscheibe (10) zugeordneten, beweglich angeordneten Führungsbahnen (43; 44; 45) verfährt.

43. Verfahren zum Handhaben nach einem der Ansprüche 40 bis 42, **dadurch gekennzeichnet, dass** während der Bewegung des Teileträgers (2) zwischen der Aufnahmestellung und der Übergabestellung der Teileträger (2) durch zumindest eine der der Drehscheibe (10) zugeordneten Führungsbahnen (43; 44; 45) bewegt wird.

44. Verfahren zum Handhaben nach einem der Ansprüche 40 bis 43, **dadurch gekennzeichnet, dass** die Drehscheibe (10) mit einer konstanten Schwenkgeschwindigkeit um die Drehachse (19) der Drehscheibe (10) geschwenkt wird.

45. Verfahren zum Handhaben nach einem der Ansprüche 40 bis 43, **dadurch gekennzeichnet; dass** die Drehscheibe (10) mit einem bevorzugt geregelten Geschwindigkeitsverlauf, bei welchem der Teileträger (2) mit einer gleichmäßige, insbesondere konstanten, Geschwindigkeit bewegt wird.

46. Verfahren zum Handhaben nach einem der Ansprüche 40 bis 45, **dadurch gekennzeichnet, dass** die Bewegungsrichtung (6) des Teileträgers (2) durch die Übergabevorrichtung (14; 22), insbesondere um 90°, geändert wird.

47. Verfahren zum Handhaben nach einem der Ansprüche 40 bis 46, **dadurch gekennzeichnet, dass** die Orientierung bzw. Lage (23) des Teileträgers (2) durch die Übergabevorrichtung (14; 22), insbesondere um 90° oder 180°, geändert wird.

48. Verfahren zum Handhaben nach einem der Ansprüche 40 bis 47, **dadurch gekennzeichnet, dass** vor und/oder nach einem Ändern der Bewegungsrichtung (6) die Orientierung bzw. Lage (23) des Teileträgers (2) durch die Übergabevorrichtung (14; 22), insbesondre um.90° oder 180°, geändert wird.

49. Verfahren zum Steuern einer Übergabevorrichtung (14; 22) nach einem der Ansprüche 11 bis 36, für einen Teileträger (2), mit dem Verfahrensschritt: Senden einer Steuerinformation zum Drehen einer Drehscheibe (10) in eine Aufnahmestellung, in der ein Fürrungsorgan (7) von einer feststehenden Führungsbahn (5) auf zumindest eine Führungsbahn (43; 44; 45) der Drehscheibe (10) übergeführt wird.

50. Verfahren nach Anspruch 49, **dadurch gekennzeichnet, dass** eine Steuerinformation zum Drehen der Drehscheibe (10) in eine Übergabestellung gesendet wird.

51. Verfahren nach Anspruch 49 oder 50, **dadurch gekennzeichnet, dass** Steuerinformationen zum Steuern von mehreren auf einer Übergabevorrichtung (14; 22) angeordneten Drehscheiben (10) gemäß einer Synchronisierungstabelle synchronisiert werden.

52. Verfahren nach einem der Ansprüche 49 bis 51, **dadurch gekennzeichnet, dass** vor und/oder während und/oder nach dem Befördern des Teileträgers (2) mittels der Drehscheibe (10) ein Signal eines Sensors eingelesen wird.

53. Verfahren nach einem der Ansprüche 49 bis 52, **dadurch gekennzeichnet, dass** die Steuerinformation in Abhängigkeit einer gemessenen Winkelstellung zumindest einer Drehscheibe (10) und/oder einer Stellung und/oder Position des Teileträgers (2) gebildet wird.

54. Datenträger, **dadurch gekennzeichnet, dass** auf diesem ein Programm zur Ausführung eines Verfahrens nach einem der Ansprüche 40 bis 48 und/oder eines Verfahrens nach einem der Ansprüche 49 bis 53 gespeichert ist.

## Claims

1. Turntable (10) with a transfer means (17) for guiding a parts carrier (2) which can be displaced by means of guide elements (7) along guide tracks (5) between a first conveying section (15) and a second conveying section (16), and the transfer means (17) can be pivoted about a pivot axis (19) oriented perpendicular to a transport plane (20) and has at least one guide track (43; 44; 45) along which the parts carrier (2) is guided by at least one of the guide elements (7), **characterised in that** the turntable (10) is coupled with a drive device (76) connected to a control system for transmitting a driving force from the transfer means (17) to the parts carrier (2).

2. Turntable as claimed in claim 1, **characterised in that** the guide track (43; 44; 45) of the transfer means (17) extends in a straight line.

3. Turntable as claimed in claim 1 or 2, **characterised in that** the transfer means (17) has a second guide track (44) disposed at an angle to the first guide track (43).

4. Turntable as claimed in claim 3, **characterised in that** the transfer means has a third guide track (45) disposed at a distance from at least one diameter (39) of one of the guide elements (7) parallel with the first guide track (43) or second guide track (44).

5. Turntable as claimed in claim 3 or 4, **characterised in that** a distance of one end of the first guide track (43) of the transfer means (17) from one end of the second and/or third guide track (44, 45) or from a second end of the first guide track (43) is shorter than a distance (42) between two guide elements (7) of the parts carrier (2), in particular by at least the diameter (39) of one of the guide elements (7).

6. Turntable as claimed in one of claims 1 to 5, **characterised in that** the guide track (43; 44; 45) extends in a curve.

7. Turntable as claimed in one of claims 1 to 6, **characterised in that** a contour of the guide track (43; 44; 45) has a curvature which increases monotonously or decreases monotonously, the greater the distance of the guide track (43; 44; 45) is from the pivot axis (19).

8. Turntable as claimed in one of claims 1 to 7, **characterised in that** one of the guide tracks (99) of the transfer means (17) is mounted so as to be displaceable relative to another guide track (43; 44; 45) of the transfer means (17).

9. Turntable as claimed in one of claims 1 to 8, **characterised in that** at least one guide track arrangement with an approximately V-shaped or U-shaped cross-section, in particular guide tracks (43; 44; 45) disposed more or less in a V-shape or U-shape, are mounted on the turntable (10) so that they are able to move.

10. Turntable as claimed in claim 9, **characterised in that** the guide track arrangement disposed more or less in a V-shape or U-shape, in particular the guide tracks (43; 44; 45) disposed in an approximately V-shaped or U-shaped arrangement, is mounted so as to be resiliently elastic and/or provide a damping action, at least in one direction.

11. Transfer apparatus (14) with a feeding device (4) comprising at least one turntable (10) for guiding a parts carrier (2) which can be displaced along guide tracks (5) between a first conveying section (15) and a second conveying section (16), and the turntable (10) can be pivoted about a pivot axis (19) oriented perpendicular to a transport plane (20), **characterised in that** the turntable (10) is as claimed in one of claims 1 to 10.

12. Transfer apparatus as claimed in claim 11, **characterised in that** the guide tracks (5; 43; 44; 45) are mounted so as to guide the guide elements (7) of the parts carrier (2) along guide lines (30, 31, 32, 33) and/or to guide a central point (28) of the parts carrier (2) along a displacement path (13).

13. Transfer apparatus as claimed in claim 11 or 12, **characterised in that** guide tracks (5) for guiding the parts carrier (2) that are stationary relative to the turntable (10) are disposed parallel with the transport plane (20).

14. Transfer apparatus as claimed in one of claims 11 to 13, **characterised in that** at least one guide track (43) is disposed on the turntable (10), which is designed to guide a guide element (7) of the parts carrier (2) along an imaginary guide line (30, 31, 32, 33) whilst the turntable (10) is stationary.

15. Transfer apparatus as claimed in one of claims 11 to 14, **characterised in that** at least one guide track (44; 45) is disposed on the turntable (10) which subtends an angle with an instantaneous direction of movement (6) of the guide element (7) when co-operating with a guide element (7) of the parts carrier (2).

16. Transfer apparatus as claimed in one of claims 11 to 15, **characterised in that** a drive device (76) is connected to the turntable (10).

17. Transfer apparatus as claimed in claim 16, **characterised in that** the drive device (76) is provided in the form of an electrically operated motor, in particular a servo-motor (80).

18. Transfer apparatus as claimed in claim 16 or 17, **characterised in that** the drive device (76) is designed to position the turntable (10) at an angle.

19. Transfer apparatus as claimed in one of claims 11 to 18, **characterised in that** the feeding device (4) comprises a traction drive (9), in particular a toothed belt drive.

20. Transfer apparatus as claimed in claim 19, **characterised in that** the turntable (10) is mechanically connected to the traction drive (9).

21. Transfer apparatus as claimed in claim 19, **characterised in that** a drive device for the traction drive (9) provided separately from the drive device (76) of the turntable (10) is connected to the traction drive (9).

22. Transfer apparatus as claimed in one of claims 11 to 21, **characterised in that** the parts carrier (2) can be moved from a pick-up position into a transfer position by means of the turntable (10).

23. Transfer apparatus as claimed in claim 22, **characterised in that** the parts carrier (2) can be moved into specific positions in the transport plane (20) between the pick-up position and transfer position by the arrangement comprising the turntable (10) and/or guide tracks (5) as a function of the position of the turntable (10).

24. Transfer apparatus as claimed in one of claims 11 to 23, **characterised in that** the pivot axis (19) of the turntable (10) lies on an angle of symmetry (35) of two straight sections (36; 37) of guide lines (31; 32) or the displacement path (13) and extends approximately perpendicular to it.

25. Transfer apparatus as claimed in one of claims 11 to 24, **characterised in that** the pivot axis (19) of the turntable (10), in particular a turntable (10) with a curved guide track (18), is disposed between two parallel stationary guide tracks (5).

26. Transfer apparatus as claimed in one of claims 11 to 25, **characterised in that** the pivot axis (19) of the turntable (10), in particular a turntable (10) with a guide track (18) extending in a straight line, is disposed outside two parallel guide tracks (5).

27. Transfer apparatus as claimed in one of claims 11 to 26, **characterised in that** an at least approximately flat surface is disposed between the parallel guide tracks (5).

28. Transfer apparatus as claimed in claim 27, **characterised in that** the guide tracks (5) are of a height of at most 5 mm above the surface.

29. Transfer apparatus as claimed in one of claims 11 to 28, **characterised in that** two parallel guide tracks (11, 12), in particular for one of the guide elements (7), are disposed in a region where one of the guide elements (7) is transferred from a stationary guide track (5) to a guide track (43; 44; 45) of the turntable (10) or where one of the guide elements (7) is transferred from a guide track (43; 44; 45) of the turntable (10) to the stationary guide track (5).

30. Transfer apparatus as claimed in one of claims 11 to 29, **characterised in that** two parallel guide tracks (11, 12) for one of the guide elements (7), in particular an inner guide track curve (63) and/or an outer guide track curve (64), are disposed in a region (51; 52; 53; 54) of a guide line curve (55; 56; 57; 58).

31. Transfer apparatus as claimed in one of claims 11 to 30, **characterised in that** a guide track (11; 12) of a guide track curve (63; 64) is provided in the form of a curve, the radius (65; 66) of which is bigger at the curve beginning and/or curve end than in a section lying between the curve beginning and curve end.

32. Transfer apparatus as claimed in one of claims 11 to 31, **characterised in that** a radius (59) of the guide line (30; 31; 32; 33) is bigger than half the diameter (39) of the guide element (7).

33. Transfer apparatus as claimed in one of claims 11 to 32, **characterised in that** the feeding device (4) has another turntable (10) as claimed in one of claims 1 to 10.

34. Transfer apparatus as claimed in one of claims 11 to 33, **characterised in that** the feeding device (4) has at least two other turntables (10) as claimed in one of claims 1 to 10.

35. Transfer apparatus as claimed in one of claims 11 to 34, **characterised in that** a region across which at least one of the guide tracks (43; 44; 45) of the turntable (10) is able to pass forms a movement region and at least one branch of the guide line for changing orientation and/or for changing the direction of movement lies within the movement region of the guide tracks (43; 44; 45) of the turntable (10).

36. Transfer apparatus as claimed in one of claims 11 to 35, **characterised in that**, based on the disposition of the turntable (10) and/or guide tracks (5), a branch of the displacement path (13) for changing the orientation lies before a branch for changing the direction of movement as viewed in the direction of movement of the parts carrier (2).

37. Transport system (1) with a first conveying section (15) and a second conveying section (16) and a transfer apparatus (14; 22) disposed between them, **characterised in that** the transfer apparatus is as claimed in one of claims 11 to 36.

38. Transport system as claimed in claim 37, **characterised in that** another conveying section is disposed on the transfer apparatus (14; 22).

39. Transport system as claimed in claim 37 or 38, **characterised in that** another transfer apparatus (14; 22) is disposed on the transfer apparatus (14; 22).

40. Method of handling parts carriers (2) with a transfer apparatus (14; 22) incorporating a feeding device (4) comprising at least one turntable (10) for guiding a parts carrier (2) which can be displaced by means of guide elements (7) along guide tracks (5) between a first conveying section (15) and a second conveying section (16), and the turntable (10) has at least one guide track (43, 44, 45) and can be pivoted about a pivot axis (19) oriented perpendicular to a transport plane (20), comprising the4 following steps: moving a guide track (43, 44, 45) into a first pick-up position, picking up a first guide element (24) of the parts carrier (2), conveying the parts carrier (2) by means of a feeding device (4), rotating a guide track (43, 44, 45) into a second pick-up position for picking up a second guide element (25, 26) of the parts carrier (2), rotating a guide track (43, 44) as far as a transfer position, conveying the parts carrier (2) by means of the feeding device (4) until it has left the transfer apparatus (14; 22), **characterised in that** a driving force is applied to the parts carrier (2) by means of a guide track (43, 44, 45) of the turntable (10) between the pick-up position and the transfer position.

41. Handling method as claimed in claim 40, **characterised in that** at least one of the guide elements (24; 25; 26; 27) of the parts carrier (2) is guided on two sides in directions perpendicular to the guide track (5) and parallel with the transport plane (20), at least in a region where one of the guide elements (7) is transferred from a stationary guide track (5) to a guide track (43; 44; 45) of the turntable (10) or where one of the guide elements (7) is transferred from a guide track (43; 44; 45) of the turntable (10) to the stationary guide track (5).

42. Handling method as claimed in claim 40 or 41, **characterised in that**, in the pick-up position and in the transfer position, the parts carrier (2) moves between the guide tracks (5) disposed in a stationary arrangement with respect to the transfer apparatus (14; 22) and the displaceable guide tracks (43; 44; 45) co-operating with the turntable (10).

43. Handling method as claimed in one of claims 40 to 42, **characterised in that** the parts carrier (2) is moved by means of at least one of the guide tracks (43; 44; 45) co-operating with the turntable (10) when the parts carrier (2) is moved between the pick-up position and the transfer position.

44. Handling method as claimed in one of claims 40 to 43, **characterised in that** the turntable (10) is pivoted about the pivot axis (19) of the turntable (10) at a constant pivot speed.

45. Handling method as claimed in one of claims 40 to 43, **characterised in that** the turntable (10) is moved on the basis of a preferably automatically controlled speed curve, whereby the parts carrier (2) is moved at a uniform, in particular constant, speed.

46. Handling method as claimed in one of claims 40 to 45, **characterised in that** the direction of movement (6) of the parts carrier (2) is changed by the transfer apparatus (14; 22), in particular by 90°.

47. Handling method as claimed in one of claims 40 to 46, **characterised in that** the orientation or position (23) of the parts carrier (2) is changed by the transfer apparatus (14; 22), in particular by 90° or 180°.

48. Handling method as claimed in one of claims 40 to 47, **characterised in that** before and/or after a change in the direction of movement (6), the orientation or position (23) of the parts carrier (2) is changed by the transfer apparatus (14; 22), in particular by 90° or 180°

49. Method of controlling a transfer apparatus (14; 22) as claimed in one of claims 11 to 36 for a parts carrier (2), comprising the method steps: transmitting control data for rotating a turntable (10) into a pick-up position in which a guide element (7) is transferred from a stationary guide track (5) to at least one guide track (43; 44; 45) of the turntable (10).

50. Method as claimed in claim 49, **characterised in that** control data is transmitted in order to rotate the turntable (10) into a transfer position.

51. Method as claimed in claim 49 or 50, **characterised in that** control data for controlling several turntables (10) disposed on a transfer apparatus (14; 22) is synchronised on the basis of a synchronisation table.

52. Method as claimed in one of claims 49 to 51, **characterised in that** before and/or during and/or after conveying the parts carrier (2) by means of the turntable (10), a signal is read from a sensor.

53. Method as claimed in one of claims 49 to 52, **characterised in that** the control data is compiled as a function of a measured angular position of at least one turntable (10) and/or a position and/or disposition of the parts carrier (2).

54. Data carrier **characterised in that** it is used to store a programme for implementing a method as claimed in one of claims 40 to 48 and/or a method as claimed in one of claims 49 to 53.

## Revendications

1. Disque rotatif (10) avec un moyen de transmission (17) pour le guidage d'un support de pièces (2), apte à se déplacer le long de voies de guidage (5) entre un premier tronçon de transport (15) et un deuxième tronçon de transport (16), au moyen d'organes de guidage (7), où le moyen de transmission (17) peut pivoter autour d'un axe de rotation (19) orienté perpendiculairement à un plan de transport (20), et présente au moins une voie de guidage (43; 44; 45) le long de laquelle le support de pièces (2) est guidé par au moins un des organes de guidage (7), **caractérisé en ce que** l'axe de rotation (10) est couplé à un dispositif d'entraînement (76) relié à une unité de commande pour la transmission d'une force d'entraînement du moyen de transmission (17) au support de pièces (2).

2. Disque rotatif selon la revendication 1, **caractérisé en ce que** la voie de guidage (43; 44; 45) du moyen de transmission (17) présente un tracé rectiligne.

3. Disque rotatif selon la revendication 1 ou 2, **caractérisé en ce que** le moyen de transmission (17) comporte une deuxième voie de guidage (44), agencée en angle par rapport à la première voie de guidage (43).

4. Disque rotatif selon la revendication 3, **caractérisé en ce que** le moyen de transmission (17) comporte une troisième voie de guidage (45), qui est disposée parallèlement à la première voie de guidage (43) ou à la deuxième voie de guidage (44) en laissant une distance correspondant au moins à un diamètre (39) de l'un des organes de guidage (7).

5. Disque rotatif selon la revendication 3 ou 4, **caractérisé en ce qu'**une distance depuis une extrémité de la première voie de guidage (43) du moyen de transmission (17) jusqu'à une extrémité de la deuxième et/ou troisième voie de guidage (44, 45) ou jusqu'à une deuxième extrémité de la première voie de guidage (43), en particulier correspondant au moins au diamètre (39) de l'un des organes de guidage (7), est inférieure à une distance (42) entre deux organes de guidage (7) du support de pièces (2).

6. Disque rotatif selon l'une quelconque des revendications 1 à 5, **caractérisé en ce que** la voie de guidage (43; 44; 45) présente un tracé courbe.

7. Disque rotatif selon l'une quelconque des revendications 1 à 6, **caractérisé en ce qu'**un tracé de la voie de guidage (43; 44; 45) comporte une courbure qui, avec l'accroissement progressif de la distance entre la voie de guidage (43; 44; 45) et l'axe de rotation (19), présente une pente ascendante monotone ou une pente descendante monotone.

8. Disque rotatif selon l'une quelconque des revendications 1 à 7, **caractérisé en ce que** l'une des voies de guidage (99) du moyen de transmission (17) est agencée de manière réglable par rapport à une autre voie de guidage (43; 44; 45) du moyen de transmission (17).

9. Disque rotatif selon l'une quelconque des revendications 1 à 8, **caractérisé en ce que** sur le disque rotatif (10) est agencé de manière mobile au moins un système de voies de guidage avec une section sensiblement en forme de V ou de U, en particulier des voies de guidage (43; 44; 45) agencées sensiblement en forme de V ou de U.

10. Disque rotatif selon la revendication 9, **caractérisé en ce que** le système de voies de guidage en forme de V ou de U, en particulier les voies de guidage (43; 44; 45) agencées sensiblement en forme de V ou de U, est monté au moins dans une direction de manière flexible et/ou de manière à amortir.

11. Dispositif de transfert (14) avec un dispositif d'avance (4) comportant au moins un disque rotatif (10) pour le guidage d'un support de pièces (2), apte à se déplacer le long de voies de guidage (5) entre un premier tronçon de transport (15) et un deuxième tronçon de transport (16), le disque rotatif (10) étant monté pivotant autour d'un axe de rotation (19) orienté perpendiculairement à un plan de transport (20), **caractérisé en ce que** le disque rotatif (10) est réalisé selon l'une quelconque des revendications 1 à 10.

12. Dispositif de transfert selon la revendication 11, **caractérisé en ce que** les voies de guidage (5; 43; 44; 45) pour le guidage des organes de guidage (7) du support de pièces (2) sont agencées le long de lignes de guidage (30, 31, 32, 33) et/ou pour le guidage d'un point central (28) du support de pièces (2) le long d'une trajectoire de mouvement (13).

13. Dispositif de transfert selon la revendication 11 ou 12, **caractérisé en ce que**, pour le guidage du support de pièces (2), des voies de guidage (5) fixes par rapport au disque rotatif (10) sont agencées parallèlement au plan de transport (20).

14. Dispositif de transfert selon l'une quelconque des revendications 11 à 13, **caractérisé en ce que** sur le disque rotatif (10) est agencée au moins une voie de guidage (43), qui est réalisée pour le guidage d'un organe de guidage (7) du support de pièces (2) le long d'une ligne de guidage imaginaire (30, 31, 32, 33) pendant un arrêt du disque rotatif (10).

15. Dispositif de transfert selon l'une quelconque des revendications 11 à 14, **caractérisé en ce que** sur le disque rotatif (10) est agencée au moins une voie de guidage (44; 45) qui, pendant une coopération avec un organe de guidage (7) du support de pièces (2), forme un angle avec une direction de mouvement (6) momentanée de l'organe de guidage (7).

16. Dispositif de transfert selon l'une quelconque des revendications 11 à 15, **caractérisé en ce qu'**un dispositif d'entraînement (76) est relié au disque rotatif (10).

17. Dispositif de transfert selon la revendication 16, **caractérisé en ce que** le dispositif d'entraînement (76) est formé par un moteur actionné électriquement, en particulier un servomoteur (80).

18. Dispositif de transfert selon la revendication 16 ou 17, **caractérisé en ce que** le dispositif d'entraînement (76) est réalisé pour le positionnement angulaire du disque rotatif (10).

19. Dispositif de transfert selon l'une quelconque des revendications 11 à 18, **caractérisé en ce que** le dispositif d'avance (4) comporte une transmission par moyen de traction (9), en particulier une transmission à courroie dentée.

20. Dispositif de transfert selon la revendication 19, **caractérisé en ce que** le disque rotatif (10) est relié mécaniquement à la transmission par moyen de traction (9).

21. Dispositif de transfert selon la revendication 19, **caractérisé en ce qu'**un dispositif d'entraînement pour la transmission par moyen de traction (9), agencé séparément du dispositif d'entraînement (76) du disque rotatif (10), est relié à la transmission par moyen de traction (9).

22. Dispositif de transfert selon l'une quelconque des revendications 11 à 21, **caractérisé en ce que** le support de pièces (2) est apte à être déplacé par le disque rotatif (10) depuis une position de réception dans une position de transfert.

23. Dispositif de transfert selon la revendication 22, **caractérisé en ce que** la position du support de pièces (2) dans le plan de transport (20), entre la position de réception et la position de transfert, est réglable, de manière localisée par la position du disque rotatif (10), par l'intermédiaire de l'agencement du disque rotatif (10) et/ou des voies de guidage (5).

24. Dispositif de transfert selon l'une quelconque des revendications 11 à 23, **caractérisé en ce que** l'axe de rotation (19) du disque rotatif (10) est situé sur une bissectrice (35) de deux tronçons droits (36; 37) de lignes de guidage (31; 32) ou de la trajectoire de mouvement (13) et est sensiblement normal à celle-ci.

25. Dispositif de transfert selon l'une quelconque des revendications 11 à 24, **caractérisé en ce que** l'axe de rotation (19) du disque rotatif (10), en particulier un disque rotatif (10) avec une voie de guidage (18) courbe, est situé entre deux voies de guidage (5) fixes, parallèles l'une à l'autre.

26. Dispositif de transfert selon l'une quelconque des revendications 11 à 25, **caractérisé en ce que** l'axe de rotation (19) du disque rotatif (10), en particulier d'un disque rotatif (10) avec une voie de guidage (18) droite, est situé en dehors de deux voies de guidage (5) parallèles entre elles.

27. Dispositif de transfert selon l'une quelconque des revendications 11 à 26, **caractérisé en ce qu'**une surface, au moins approximativement plane, est réalisée entre les voies de guidage (5) parallèles.

28. Dispositif de transfert selon la revendication 27, **caractérisé en ce que** les voies de guidage (5) ont une hauteur de 5 mm maximum au-dessus de la surface.

29. Dispositif de transfert selon l'une quelconque des revendications 11 à 28, **caractérisé en ce que** deux voies de guidage (11, 12) parallèles, en particulier pour l'un des organes de guidage (7), sont agencées dans une zone, dans laquelle l'un des organes de guidage (7) est transféré depuis une voie de guidage (5) fixe vers une voie de guidage (43; 44; 45) du disque rotatif (10) ou dans laquelle l'un des organes de guidage (7) est transféré depuis une voie de guidage (43; 44; 45) du disque rotatif (10) vers la voie de guidage (5) fixe.

30. Dispositif de transfert selon l'une quelconque des revendications 11 à 29, **caractérisé en ce que** dans une zone (51; 52; 53; 54) d'une courbe de ligne de guidage (55; 56; 57; 58) sont agencées deux voies de guidage (11, 12) parallèles, en particulier une courbe de guidage intérieure (63) et/ou une courbe de guidage extérieure (64), pour l'un des organes de guidage (7).

31. Dispositif de transfert selon l'une quelconque des revendications 11 à 30, **caractérisé en ce qu'**une voie de guidage (11; 12) d'une courbe de voie de guidage (63; 64) est formée par une courbure dont le rayon (65; 66) au début de la courbe et/ou à la fin de la courbe est plus grand qu'un tronçon situé entre le début de la courbe et la fin de la courbe.

32. Dispositif de transfert selon l'une quelconque des revendications 11 à 31, **caractérisé en ce qu'**un rayon (59) de la ligne de guidage (30; 31; 32; 33) est plus grand que la moitié du diamètre (39) de l'organe de guidage (7).

33. Dispositif de transfert selon l'une quelconque des revendications 11 à 32, **caractérisé en ce que** le dispositif d'avance (4) comporte un autre disque rotatif (10) selon l'une quelconque des revendications 1 à 10.

34. Dispositif de transfert selon l'une quelconque des revendications 11 à 33, **caractérisé en ce que** le dispositif d'avance (4) comporte au moins deux autres disques rotatifs (10) selon l'une quelconque des revendications 1 à 10.

35. Dispositif de transfert selon l'une quelconque des revendications 11 à 34, **caractérisé en ce qu'**une zone pouvant être parcourue par au moins une des voies de guidage (43; 44; 45) du disque rotatif (10) forme une zone de mouvement, et au moins un embranchement de la ligne de guidage pour un changement d'orientation et/ou pour un changement de direction de déplacement se situe à l'intérieur de la zone de mouvement des voies de guidage (43; 44; 45) du disque rotatif (10).

36. Dispositif de transfert selon l'une quelconque des revendications 11 à 35, **caractérisé en ce que**, par un agencement du disque rotatif (10) et/ou des voies de guidage (5), un embranchement de la trajectoire de mouvement (13) pour un changement d'orientation est situé, par référence à la direction de mouvement du support de pièces (2), devant un embranchement pour le changement de la direction de mouvement.

37. Installation de transport (1) comportant un premier tronçon de transport (15) et un deuxième tronçon de transport (16) et un dispositif de transfert (14; 22), agencé entre ceux-ci, **caractérisé en ce que** le dispositif de transfert est réalisé selon l'une quelconque des revendications 11 à 36.

38. Installation de transport selon la revendication 37, **caractérisée en ce qu'**un autre tronçon de transport est agencé sur le dispositif de transfert (14; 22).

39. Installation de transport selon la revendication 37 ou 38, **caractérisée en ce qu'**un autre dispositif de transfert (14; 22) est agencé sur le dispositif de transfert (14; 22).

40. Procédé de manutention de supports de pièces (2) avec un dispositif de transfert (14; 22) comportant au moins un disque rotatif (10) pour le guidage d'un support de pièces (2), apte à se déplacer le long de voies de guidage (5) entre un premier tronçon de transport (15) et un deuxième tronçon de transport (16), le disque rotatif (10) présentant au moins une voie de guidage (43, 44, 45) et étant monté pivotant autour d'un axe de rotation (19) orienté perpendiculairement à un plan de transport (20), avec les étapes de procédé: déplacement d'une voie de guidage (43, 44, 45) dans une première position de réception, réception d'un premier organe de guidage (24) du support de pièces (2), transport du support de pièces (2) au moyen d'un dispositif d'avance (4), rotation d'une voie de guidage (43, 44, 45) dans une deuxième position de réception pour la réception d'un deuxième organe de guidage (25, 26) du support de pièces (2), rotation d'une voie de guidage (43, 44) jusque dans une position de transfert, transport du support de pièces (2) au moyen d'un dispositif d'avance (4) jusqu'à quitter le dispositif de transfert (14; 22), **caractérisé en ce que** le support de pièces (2) est chargé par une force d'entraînement entre la position de réception et la position de transfert par une voie de guidage (43, 44, 45) du disque rotatif (10).

41. Procédé de manutention selon la revendication 40, **caractérisé en ce qu'**au moins dans une zone, dans laquelle un des organes de guidage (7) est transféré depuis une voie de guidage (5) fixe dans une voie de guidage (43; 44; 45) du disque rotatif (10) ou dans laquelle un des organes de guidage (7) est transféré depuis une voie de guidage (43; 44; 45) du disque rotatif (10) sur la voie de guidage (5) fixe, au moins un des organes de guidage (24; 25; 26; 27) du support de pièces (2) est guidé vers deux côtés dans une direction normale à la voie de guidage (5) et parallèle au plan de transport (20).

42. Procédé de manutention selon la revendication 40 ou 41, **caractérisé en ce que** le support de pièces (2), dans la position de réception et/ou dans la position de transfert, se déplace entre les voies de guidage (5) fixes par rapport au dispositif de transfert (14; 22) et les voies de guidage (43; 44; 45) mobiles, associées au disque rotatif (10).

43. Procédé de manutention selon l'une quelconque des revendications 40 à 42, **caractérisé en ce que** pendant le mouvement du support de pièces (2) entre la position de réception et la position de transfert, le support de pièces (2) est déplacé par au moins une des voies de guidage (43; 44; 45) associées au disque rotatif (10).

44. Procédé de manutention selon l'une quelconque des revendications 40 à 43, **caractérisé en ce que** le disque rotatif (10) pivote avec une vitesse de pivotement constante autour de l'axe de rotation (19) du disque rotatif (10).

45. Procédé de manutention selon l'une quelconque des revendications 40 à 43, **caractérisé en ce que** le disque rotatif (10) se déplace selon une courbe de vitesse régulée de préférence, dans laquelle le support de pièces (2) se déplace avec une vitesse uniforme, en particulier constante.

46. Procédé de manutention selon l'une quelconque des revendications 40 à 45, **caractérisé en ce que** la direction de mouvement (6) du support de pièces (2) est modifiée, en particulier de 90°, par le dispositif de transfert (14; 22).

47. Procédé de manutention selon l'une quelconque des revendications 40 à 46, **caractérisé en ce que** l'orientation ou la position (23) du support de pièces (2) est modifiée, en particulier de 90° ou de 180°, par le dispositif de transfert (14; 22).

48. Procédé de manutention selon l'une quelconque des revendications 40 à 47, **caractérisé en ce que**, avant et/ou après un changement de la direction de mouvement (6), l'orientation ou la position (23) du support de pièces (2) est modifiée, en particulier de 90° ou de 180°, par le dispositif de transfert (14; 22).

49. Procédé de commande d'un dispositif de transfert (14; 22) selon l'une quelconque des revendications 11 à 36, pour un support de pièces (2), avec l'étape de procédé: émission d'une information de commande pour la rotation d'un disque rotatif (10) dans une position de réception, dans laquelle un organe de guidage (7) est transféré depuis une voie de guidage (5) fixe sur au moins une voie de guidage (43; 44; 45) du disque rotatif (10).

50. Procédé selon la revendication 49, **caractérisé en ce qu'**une information de commande est émise pour la rotation du disque rotatif (10) dans une position de transfert.

51. Procédé selon la revendication 49 ou 50, **caractérisé en ce que** des informations destinées à commander plusieurs disques rotatifs (10), agencés sur un dispositif de transfert (14; 22), sont synchronisées selon une table de synchronisation.

52. Procédé selon l'une quelconque des revendications 49 à 51, **caractérisé en ce qu'**un signal d'un capteur est entré avant et/ou après le transport du support de pièces (2) au moyen du disque rotatif (10).

53. Procédé selon l'une quelconque des revendications 49 à 52, **caractérisé en ce que** l'information de commande est formée en fonction d'une position angulaire mesurée d'au moins un disque rotatif (10) et/ou d'une position et/ou positionnement du support de pièces (2).

54. Support de données, **caractérisé en ce que** sur celui-ci est mémorisé un programme destiné à l'exécution d'un procédé selon l'une quelconque des revendications 40 à 48 et/ou d'un procédé selon l'une quelconque des revendications 49 à 53.
